# EUROPÄISCHE PATENTSCHRIFT

(11) **EP 2 715 847 B1**
(45) Veröffentlichungstag und Bekanntmachung des Hinweises auf die Patenterteilung: **16.01.2019**
(21) Anmeldenummer: 12769310.9
(22) Anmeldetag: 23.05.2012
(51) Int. Cl.: H01M 8/0202, H01M 8/0247, H01M 8/0267, H01M 8/1007, H01M 8/241, H01M 8/242, H01M 8/2457, H01M 8/2465, H01M 8/0221, H01M 8/0206

(54) **BRENNSTOFFZELLE OHNE BIPOLARPLATTE MIT IN TEILZELLEN UNTERTEILTEN ZELLEN UND INTEGRIERTEM STROMPFAD**
FUEL CELL WITHOUT A BIPOLAR PLATE, HAVING CELLS DIVIDED INTO SUB-CELLS AND HAVING AN INTEGRATED FLOW PATH
PILE À COMBUSTIBLE SANS PLAQUE BIPOLAIRE AVEC DES CELLULES DIVISÉES EN CELLULES PARTIELLES ET CHEMIN DE COURANT INTÉGRÉ

(30) Priorität: 26.05.2011 DE 102011103306; 05.09.2011 DE 102011112295; 16.05.2012 DE 102012009727
(43) Veröffentlichungstag der Anmeldung: 09.04.2014
(73) Patentinhaber: Tedatex Industrie Gmbh Planung - Beratung - Entwicklung, 51674 Wiehl (DE)
(72) Erfinder: BRÜNE, Bernhard, 51658 Wiehl (DE)
(74) Vertreter: Schulte & Schulte
(86) Internationale Anmeldenummer: PCT/DE2012/000538
(87) Internationale Veröffentlichungsnummer: WO 2012/167768

(56) Entgegenhaltungen:
- EP-A1- 1 429 406
- DE-A1-102009 015 619
- US-A- 5 284 718
- US-A1- 2006 240 308
- US-A1- 2007 082 252
- US-B1- 6 194 095

## Beschreibung

Die Erfindung betrifft eine Brennstoffzelle bestehend aus einem Zellenstapel mit mehreren Zellen und Endplatten an jedem Stapelende, mit einer Membran-Elektrodeneinheit - auch als MEA bezeichnet - mit Elektrodenanode- und -kathode, Anoden- und Kathodenkatalysatoren und dazwischen angeordneter Elektrolytmembran mit Gasdiffusionslagen, einem Kühl- und Medienmodul sowie zugeordneten Medienleitungen für Sauerstoff, Wasserstoff und Kühlmedium, wobei das Kühl- und Medienmodul - auch als KMM bezeichnet - unter Verzicht auf Bipolarplattennur der Bereitstellung von Kühl- und Gaskanälen und der Stapelbildung dienend ausgeführt ist und wobei die Elektrodenabdeckungen der Ableitung nicht aber der Durchleitung des Stroms dienend ausgebildet sind.

Eine solche Brennstoffzelle bzw. ein solcher Zellenstapel ist aus der DE 10 2009 015 619.4-45 bekannt. Dieser Zellenstapel besteht aus einer Vielzahl von Zellen, die alle die gleichen Abmessungen aufweisen, d. h. sowohl bezüglich Länge und Breite wie auch Höhe. Sie bauen optimal, weil die Medienleitungen einem Kühl- und Medienmodul zugeordnet und mit diesem verbunden sind. Dieses Kühl- und Medienmodul dient nur der Bereitstellung von sekundären Funktionsräumen bzw. Funktionsebenen sowie der Stapelbildung. Darüber hinaus ist jeweils auf beiden Seiten eines Kühl- und Medienmoduls entweder die Wasserstoff- oder die Sauerstoffgasdiffusionslage der benachbarten Zelle angeordnet. Dadurch kann auf jede Art von bipolaren Platten verzichtet werden, mit der Folge, dass beispielsweise mit dünnwandigen Blechen bzw. Folien gearbeitet werden kann, in denen bezüglich der Sauerstoff- und Wasserstoffzuleitung und der Ableitung Gasdurchlässe und Gasableitungen vorgesehen sind, die eine getrennte Führung sowohl der Prozessgase wie auch des Kühlmediums ermöglichen. Darüber hinaus sind die Elektrodenabdeckungen auf den Membranelektrodeneinheiten so angeordnet und ausgebildet, dass sie am Stapelrand die Anordnung von Stromleitern und z.B. Steckern ermöglichen, wobei dann sowohl eine parallele wie eine Reihenschaltung möglich ist. Durch das Herausführen des Stroms über Stromleiter ist ein aufwendigerer Aufbau und eine unter Umständen auftretende Beeinträchtigung des Betriebes gegeben. Derartige bekannte Brennstoffzellen verfügen über relativ große ungeteilte Reaktionsflächen, bei denen es zu kaum beherrschbaren elektrochemischen Phänomenen kommen kann, die nur mit großem Aufwand zu beherrschen sind, z. B. partiell schwächeren oder deutlich stärkeren Reaktionen, verteilt auf die Reaktionsfläche. Außerdem sind eine geringe Stapelspannung und ein hoher Strom kennzeichnend. Aus der US 2007/0082252 A1 ist eine Brennstoffzelle mit Bipolarplatten bekannt. Gleiches gilt für die US 2006/0240308 A1. Die dort gezeigten Bipolarplatten sind mit Kanälen usw. ausgerüstet, wie dies zur damaligen Zeit üblich war. Aus der Beschreibung der US 2,194,095 B1 ist eine durchgehende Membran je Zelle zu entnehmen. Die sie abdeckenden Elektroden sind miteinander parallel zu den "traces" und entlang der Ecken oder durch die Membran hindurch über Querverbindungen verbunden. Es fehlt der Hinweis, dass Strombahnen oder Strompfade in die Zellenebene integriert sind. Es ist auch nicht vorgesehen, die Außenkante der Luftkanäle leitend auszubilden, da dann bei einer Berührung mit der Membran ein Kurzschluss auftreten würde. Die Module können daher nur nicht leitend ausgebildet sein. Zwar zeigt die Lösung nach US 2,194,095 B1 keine Bipolarplatten, dafür aber aufwendige Luftverteiler, die neben der Luft auch für die Stromleitung zuständig sind, nicht aber für die Wasserstoffversorgung. Auch die US 5,284,718 A und die EP 1 429 406 A1 zeigen keine über den geschilderten Stand der Technik hinausgehende Lösungen.

Der Erfindung liegt daher die Aufgabe zugrunde, einen kleinbauenden Zellenstapel bzw. eine Brennstoffzelle mit hoher Stapelspannung, mit guten thermodynamischen Eigenschaften und ohne nachteilige elektrochemische Phänomene zu schaffen.

Die Aufgabe wird gemäß der Erfindung dadurch gelöst, dass die Zellen in einer Zellenebene aus zwei oder mehreren Teilzellen bestehen, die jeweils eine Teilelektrodeneinheit bzw. Teil-MEA mit je einer Teilmembran und Teilreaktionsflächen und zugeordneten Teilgasdiffusionslagen und zugeordnetem Teilkühl- und Medienmodul und zugeordnetem Teilgassegment H₂ und Teilgassegment O₂ aufweisen und dass die Zellen und Teilzellen in Reihe geschaltet und als Strompfade bzw. Teilstrompfade ausgebildete Stromleiter ohne Bipolarplatten vorgesehen und in den Zellenstapel integriert sind, und die Teilzellen in einer oder mehreren Stapelzeilen angeordnet sind.

Zunächst ist vorteilhaft, dass ein solcher Strompfad in den Zellenstapel bzw. in jede Zelle integrierbar ist, ohne dass es der bisher üblichen Bipolarplatten bedarf. Es können auf diese Art und Weise größere Querschnitte für die Stromleitungen realisiert werden, mit dem Ziel, die elektrischen Widerstände deutlich zu reduzieren. Für das Integrieren der Strompfade gibt es mehrere Lösungen, wovon zwei nachfolgend näher erläutert sind. Das Integrieren der Strompfade in den Zellenstapel hat sowohl bauliche Vorteile; wie nachfolgend gezeigt auch systematische Vorteile. Durch entsprechenden Aufbau kann der Strom gezielt von Zelle zu Zelle durch diese hindurch geführt werden, um dann an den Stapelpolen bzw. den entsprechend gestalteten Endplatten abgenommen zu werden. Aufgrund der gezielt gering bemessenen Reaktionsflächen bzw. Teilreaktionsflächen kann es nun nicht mehr zu den schädlichen elektrochemischen Vorgängen und damit zur Zerstörung von Zellen beispielsweise durch Überhitzung kommen. Darüber hinaus ist es so gezielt möglich, diese einzelnen Stromquellen bzw. Teilzellen in Reihe zu schalten, um eine höhere Zellenspannung zu erzielen, bei gleicher Zellenleistung und einem entsprechend geringeren Zellenstrom. Durch die Begrenzung auf kleinere Reaktionsflächen wird es außerdem einfacher, einen deutlich höheren spezifischen Strom [A/cm²] auf einer Reaktionsfläche einzustellen. Vorteilhaft ist dabei, das trotz geringer Zahl gestapelter und in Reihe geschalteter Zellen eine hohe Stapelspannung erreicht wird und bei gleicher Stapelleistung ein entsprechend geringerer Stapelstrom fließt, was dazu führt, das alle folgenden stromführenden Querschnitte, Schaltelemente und Motoren kleiner und damit preiswerter ausgeführt werden können und die Verlustleistung des gesamten Systems reduziert wird. Die Gasräume und Teilsegmente können alternierend oder nicht alternierend angeordnet werden, je nachdem wie die Teilzellen und die gesamte Zelle bzw. das Gesamtmodul aufgebaut werden soll.

Die vorgesehene Schaltung wird am zweckmäßigsten so realisiert, dass die eine Zelle bildenden Teilzellen untereinander und mit der nächsten Zelle über die im Zellenstapel angeordneten Teilstrompfade und den am Stapelrand verlaufenden Strompfad seriell bzw. in Reihe geschaltet sind, wobei benachbarte Zellen und Teilzellen in der Zellenebene und in der KMM-Ebene durch Potentialtrennungen dort elektrisch getrennt sind, wo kein Strom zwischen Zellen oder Teilzellen fließen soll, wobei die Potentialtrennungen aus dünnen, elektrisch nicht leitenden Kunststofffolien oder aus elektrisch nicht leitenden Oberflächen, mit welchen die gefügten Folien, dort wo kein Strom fließen soll, ausgestatten sind, und wobei die Teilzellen in einer Stapelzeile vorzugsweise in Reihe verschaltet sind und die Stapelzeilen einer Zelle untereinander in Reihe oder auch parallel verschaltet sind. Auch die einzelnen Teilzellen der nächsten Zelle sind wieder über Strompfade entsprechend verbunden, sodass insgesamt die Zellenspannung bzw. Stapelspannung wesentlich erhöht werden kann, wobei der Zellenstrom niedrig ist. Durch geringere ohmsche Widerstände, beispielsweise größere Leitungsquerschnitte, wird eine deutlich reduzierte elektrische Verlustleistung erreicht, weil hier wie erwähnt gleichzeitig mit reduziertem Zellenstrom gearbeitet wird.

Um die Bereiche, die als Strompfad vorgesehen sind, möglichst optimal ausnutzen zu können, ist vorgesehen, dass die als Strompfad und auch die als Teilstrompfade dienenden KMM-Zonen, vorzugsweise integriert in KMM-Elemente und die KMM-Elemente selbst, insbesondere die Elektrodenabdeckungen und mit Elektrodenabdeckungen leitend verbundenen Ebenen und/oder (E3) und Stromanschlüsse am Stapel verbundenen Ebenen (E2) und/oder (E3) eine gute Leitfähigkeit aufweisend ausgebildet und dazu vorzugsweise mit einer Nano-Materialbeschichtung oder über Galvanik aufgetragenen, stromleitenden, metallischen und elektrochemisch widerstandsfähigen Oberflächen versehen und von Klebstoff freigehalten sind, oder insgesamt aus einem mit sehr gut leitendem metallischen und elektrochemisch widerstandfähigem Material oder einem mit Nano-Material dotierten oder vermischten Material bestehen. Die einzelnen Folien, die eine Zelle bilden, werden zweckmäßigerweise ansonsten über Klebstoff miteinander verbunden wobei die besagten, für die Stromleitung vorgesehenen Zonen, d. h. die Strompfade von Dicht- und/oder Klebstoff freigehalten werden.

Aus fertigungstechnischen Gründen und um eine möglichst hohe Zellspannung zu erreichen, ist vorgesehen, dass die Membranelektrodeneinheit vorzugsweise eine Reaktionsfläche von 400 cm² aufweist und zu einer geraden Anzahl von Zellen zusammengeschaltet ist, während jede Zelle vorzugsweise eine ungerade Anzahl von Teilzellen mit entsprechend gleichgroßen Teilreaktionsflächen aufweisend ausgebildet ist und eine Zelle nicht nur eine, sondern mehrere Stapelzeilen aufweist, mit einer Reaktionsfläche von 1m² als Summe vieler Teilreaktionsflächen die entsprechenden Teilzellen zugeordnet sind und dass jede Membranelektrodeneinheit und dabei vor allem die MEA-Berandung und/oder dass die Zellen berandende Stütz- und Dichtelement eine definierte Höhe, d. h. eine MEA-Kompression aufweist und mit Dichtungen einmal die MEA an der MEA-Berandung in der Zellenebene und die Zellenebene im Stapel fixierend ausgebildet ist. Bei einer vorzugsweise geraden Anzahl von Zellen und einer ungeraden Anzahl von Teilzellen in einer Zelle ist eine wesentliche Vereinfachung der Strompfade insbesondere am Stapelrand möglich. Dies erleichtert weiter die Integrierung der Strompfade in die eigentliche Zelle, was zu einer wesentlichen Vereinfachung der Montage und des Betriebes wesentlich beiträgt.

Für die Versorgung der Membranelektrodeneinheit mit Sauerstoff und Wasserstoff sowie auch mit dem entsprechenden Kühlmedium in den zugeordneten Kühl- und Medienmodulen sind entsprechende Mikrokanäle vorgesehen. Diese können optimal ausgebildet und positioniert werden, wenn wie erfindungsgemäß vorgesehen, die den Strompfad aufweisenden Kühl- und Medienmodule, die beidseitig der Membranelektrodeneinheit - auch als Ebene (E0) bezeichnet - mit den leitenden Gassegmenten angeordnet sind ebenso wie die Kühlsegmente aus einzelnen Folien, vorzugsweise aus Aluminium-, Metall- und/oder Kunststofffolien bestehen und gefügt miteinander verbunden, verschweißt oder verklebt sind und denen je nach Aufbau eines Kühl- und Medienmoduls bestimmte funktionale Ebenen (E1, E2, E3, E4) zugeordnet sind, wobei die Ebenen E1 eines H₂-Segments und/oder O₂-Segments auf ihren der Membran zugewandten Seiten vorzugsweise mit integrierten Gasdiffusionslagen in GDL-Zonen ausgestattet sind, die aus mikro- und/oder makroporösem Material bestehen, mit sehr guter elektrischer Leitfähigkeit und elektrochemischer Beständigkeit und Eigenschaften, die den Gastransport in die GDL-Zonen und aus den GDL-Zonen sicherstellen. Vorteil dieser Ausbildung ist vor allem, dass mit sehr dünnwandigen, d. h. deutlich unter 1 mm liegenden Folien gearbeitet werden kann, in denen sowohl Quer- wie Längskanäle wie auch Bohrungen, Kanäle und/oder Öffnungen vorgesehen sind, um so gezielt die entsprechenden Medien dorthin zu führen, wo sie benötigt werden, d. h. Sauerstoff und Wasserstoff zu den H₂- bzw. O₂- Segmenten der Membranelektrodeneinheit und das Kühlmedium in die entsprechenden Bereiche der Zelle bzw. Teilzelle, sodass eine optimale Ableitung der Prozesswärme, Gasausnutzung und auch Stromgewinnung sichergestellt ist.

Weiter ist gemäß der Erfindung vorgesehen, dass ein Kühl- und Medienmodul vorzugsweise aus einer Kernfolie aus Aluminium - vorzugsweise mit je einer Potentialtrennung auf der Vorder- und Rückseite - als durchgehende Tragstruktur ausgebildet in der Ebene E4 vorgesehen ist, welche die Fläche des Stapelquerschnitts aufweist und auf beiden Seiten der Kernfolie mit Potentialtrennungen KMM-Elemente fixiert sind, vorzugsweise durch Kleben, wobei zwischen KMM-Elementen Zwischenräume gelassen sind, die der elektrischen Trennung der KMM-Elemente untereinander dienen und gleichzeitig als Luftkanal zur Einströmung von Gehäuseluft die als Kühlmedium KM und/oder als Kathodengas bzw. O₂ dient, in den Stapel.

Zur optimalen Verwirklichung einer entsprechenden aus Teilzellen bestehenden Zelle ist vorgesehen, dass die auf einer Seite vom leitenden Gassegment H₂ und auf der anderen Seite vom leitenden Gassegment O₂ begrenzte MEA bzw. die Teil-MEA über nicht leitende Stütz- und Dichtelemente gehalten sind und dass das Kühl- und Medienmodul mit einer als die nicht leitenden Zonen im Kühl- und Medienmodul umgehender Strompfad dienenden und an das Gassegment O₂ bzw. H₂ anschließendem Kühlsegment ausgerüstet ist. Auf diese Weise kann ein Strompfad geschaffen werden, der die einzelnen Teilzellen einer Zelle optimal miteinander verbindet bzw. die Zellen untereinander mit der Folge einer deutlich höheren Zellenspannung.

Für den Aufbau einer Zelle ist die MEA wichtig, wozu vorgesehen ist, dass eine abgestützte MEA-Struktur mit integrierten MEA und mit einer abgestützten MEA-Struktur, ein MEA-Fenster mit eingelegten MEA aufweist, wobei Teil-MEA-Gruppen mit Stütz- und Dichtkörpern und in die Stütz- und Dichtkörper integrierten MEA ausgerüstet sind, während die Teil-MEA-Gruppe mit Stütz- und Dichtkörper zwischen MEA-Leisten integriert ist und die Teil-MEA-Gruppe mit Stütz- und Dichtkörper in einen MEA-Rahmen mit MEA-Fenster eingelegt ist, wobei die Stütz- und Dichtkörper umlaufende Dichtungsrillen zur Aufnahme des Kompressionsvolumens der MEA-Berandung aufweist, und dass die abgestützten MEA-Strukturen in E0 bzw. MEA-Leisten und MEA-Rahmen für eine oder mehrere Teilzellen in einer Stapelzeile ausgelegt sind, während die abgestützten MEA-Strukturen in E0 bzw. MEA-Leisten und -Rahmen in E0 für viele Teilzellen in einer oder mehreren Stapelzeilen ausgelegt sind. Beim Betrieb eines Zellenstapels wird mit teilweise hohem Druck gearbeitet. Um dabei unzulässige Verformungen insbesondere im Randbereich der Zelle zu vermeiden und dennoch eine sichere Halterung insbesondere der Membranelektrodeneinheit und gleichmäßigen Anpressdruck- bzw. MEA-Kompressionen zu gewährleisten, ist es vorteilhaft, wenn jede Membranelektrodeneinheit und dabei vor allem die MEA-Berandung und/oder dass die Zellen berandende Stütz- und Dichtelement eine definierte Höhe, d. h. eine MEA-Kompression aufweist und mit Dichtelementen einmal die MEA an der MEA-Berandung in der Zellenebene und die Zellenebene im Stapel fixierend ausgebildet ist. Diese Stütz- und Dichtungssysteme nehmen den aufgebrachten Druck gezielt auf und verformen sich soweit, dass eine anschließende dichte Verbindung bzw. Verklebung der einzelnen Folien bzw. Bauteile gewährleistet ist, ohne dass dabei die Membranelektrodeneinheit bzw. die Elektrolytmembran beschädigt bzw. beeinträchtigt werden könnte. Zur einfacheren Montage sollten die die einer Elektrolytmembran zugeordneten Gasdiffusionslagen in der Oberfläche der Gassegmente eingebettet sein und die Katalysatorpartikel (Elektroden) tragen oder diese sollten der Elektrolytmembran selbst zugeordnet sein.

Eine gleichmäßige Zuführung und Abführung der Mediengase wird insbesondere dadurch gewährleistet, dass die Kühl- und Medienmodule mit ihren vorzugsweise Aluminiumfolien mit Mikrobohrungen und Mikrokanälen für H₂ und O₂ für eine getrennte und gleichmäßige Gasführung einströmender Gase in die Gasdiffusionslage und ausströmender Gase aus der Gasdiffusionslage ausgerüstet sind, wobei die Mikrobohrungen und die Mikrokanäle unter gleichmäßiger Gasströmung/-verteilung und der Reduzierung von Druckverlusten getrennt über Querkanäle oder Mikrokanalverlängerungen am Stapelrand für O₂ verbunden sind, wobei vorzugsweise die Querkanäle für die Einströmung und Ausströmung für H2 und für O2 in verschiedenen Ebenen - E0 oder E4 - angeordnet sind. Vorteil dieser Ausbildung ist wie bereits erwähnt vor allem, dass mit sehr dünnwandigen, d. h. deutlich unter 1mm liegenden Folien gearbeitet werden kann. Vorteilhaft ist weiter, dass eine getrennte Gasführung einströmender Gase in die Gasdiffusionslage und ausströmender Gase aus der Gasdiffusionslage erreicht ist. Insbesondere das Einströmen von O₂ und Ausströmen von O₂+ Produktwasser ist so möglich. Von beiden Seiten her erfolgt das Einströmen in Mikrokanäle aus entsprechenden Querkanälen oder speziell bei Sauerstoff direkt vom Stapelrand. All dies führt zu einer gleichmäßigen Gasströmung und Gasverteilung und so zu einer Reduzierung von Druckverlusten. Auch werden offene Kanäle wie beim Stand der Technik völlig vermieden, weil dafür Mikrobohrungen geschaffen sind.

Nach einer weiteren zweckmäßigen Ausbildung ist vorgesehen, dass die Kühl- und Medienmodule mit ihren vorzugsweise Aluminiumfolien für die Kühlmediumführung mit horizontalen und vertikalen Mikrokanälen und Querkanälen in horizontalen oder vertikalen Querkanalzonen versehen und über Verbindungskanäle oder Mediumöffnungen verbunden sind, wobei die Kühlmediumführung von einer Zelle zur nächsten Zelle im Gegenstrom erfolgt, indem die Strömungsrichtung in den Mikrokanälen um 180°Grad wechselt, wobei auch parallel zum Mikrokanal mit Venturidüse, vorzugsweise mit Luft als Kühlmedium KM, ein zweiter Mikrokanal ohne Venturidüse angeordnet ist, der ein zweites Kühlmedium führt nämlich Luft oder eine Flüssigkeit. Zum Einströmen in KM-Mikrokanäle und Gasmikrokanäle können diese gleichgerichtet angeordnet werden oder um 90°Grad zueinander gedreht. Sie können unabhängig voneinander horizontal oder vertikal angeordnet werden. Dementsprechend werden auch die jeweiligen Querkanäle angeordnet, bei horizontalen Mikrokanälen vertikal bei vertikalen Mikrokanälen horizontal. Längskanäle sind grundsätzlich in Stapelrichtung angeordnet in entsprechenden sogenannten Längskanalzonen. Die in den Folien eingebrachten Mikrokanäle sind so ausgebildet und so geführt, dass diese Mikrokanäle für Gas (H₂ und O₂ bzw. Luft) von beiden Seiten an- bzw. abströmbar ausgebildet und angeordnet sind, wobei der Einströmmikrokanal für O₂ über eine Gasöffnung in der Ebene E1 und einer Mikrokanalverlängerung in der Ebene E0 bis zum Stapelrand verbunden ist und der Ausströmmikrokanal für O₂ über eine Gasöffnung in der Ebene E1 und dem Querkanal in der Ebene E0 und der Ausströmkanal für H₂ über eine Gasöffnung in der Ebene E3 und dem Querkanal in der Ebene E4 verbunden ist. Auf diese Weise wird die benötigte Luft gezielt und auf kurzem Wege so geführt, dass sie für den Prozess immer in der notwendigen Qualität zur Verfügung steht. Das benötigte Kühlmedium, also in der Regel Luft oder auch Wasser oder Öl, wird ebenfalls innerhalb der einzelnen Folien bzw. durch die Folien hindurch so zugeführt, dass die gewünschten Bereiche damit sicher gekühlt werden und gekühlt bleiben. Hierzu ist vorgesehen, dass die Kühlmediumführung für horizontale Kühlmediummikrokanäle über Querkanäle in die vertikalen Querkanalzonen vertikal und für vertikale Kühlmediummikrokanäle über Mikrokanäle in horizontalen Querkanalzonen horizontal geführt ist. Auf diese Weise kann das Kühlmedium überall hin gelangen bzw. überall hingeführt werden, wobei dazu Kanäle mit ausreichend großen Querschnitten zur Verfügung stehen und dazu die jeweils benachbarten Ebenen bzw. Folien gezielt bearbeitet sind, um die notwendigen Kanäle und Bohrungen vorzugeben. Nach einer weiteren Ausbildung ist es auch möglich, dass die Kühlmediumführung in der Schnittebene der vertikalen und horizontalen Mikrokanäle für das Kühlmedium und die Querkanäle in vertikalen und horizontalen Querkanalzonen unterschiedlich orientiert ist. Dies hat den Vorteil, dass die Stromführung nach rechts und links angeordnet werden kann, ohne dass zwischen Reaktionsfläche und Strompfad eine störende Kanalstruktur existiert. Insbesondere sind hier keine Klebestellen vorhanden, sodass der Strompfad auch gezielt zu verwirklichen ist. Um möglichst wenig einzelne Bauelemente zu haben, wird gemäß einer zweckmäßigen Ausführung vorgeschlagen, einzelne Ebenen zu einem Bauteil zusammenzufassen.

Der für den Prozess benötigte Sauerstoff wird in Form von Luft in den Zellenstapel eingeführt und wie schon erwähnt auf die Membranelektrodeneinheit geleitet. Eine besonders günstige Form für die Versorgung der einzelnen Zellen und Teilzellen mit Sauerstoff ist die, bei der Längskanalzonen für Längskanäle in Stapelachse und Querkanalzonen für Querkanäle quer zur Stapelachse für das Einströmen von H₂, O₂ und Kühlmedium in Mikrokanäle oder für das Ausströmen von O₂, H₂ und Kühlmedium aus Mikrokanälen vorgesehen sind, wobei die Mikrokanäle für das Einströmen von O₂ direkt zur Vermeidung von Quer- und Längskanälen bis zum Stapelrand geführt sind. Hier ist aufgezeigt, dass die Versorgung der jeweiligen Zelle bzw. der Teilzellen mit Sauerstoff über Mikrokanäle erfolgt, die bis an den Stapelrand bzw. bis an das Stapelgehäuse geführt sind, sodass von hier aus die benötigte Luft gezielt eingeleitet und in das Aggregat bzw. in den Stapel hineingeführt werden kann. Dabei ist sogar eine Vorwärmung der Luft möglich. Dafür stehen Mikrokanäle und Querkanäle zur Verfügung, wobei auch die Möglichkeit besteht, nicht nur die Mikrokanäle für das Einströmen von O₂ sondern auch die für das Ausströmen so zu führen, dass beide bis an den Stapelrand reichen, sodass dann die Reaktionsprodukte, insbesondere Produktwasser und nicht verbrauchte Luft sowie der Stickstoffanteil an der verbrauchten Luft dort separiert auch gleich wieder in die Atmosphäre abgeleitet werden können.

Möglich ist es auch, dass die Kühlemediumführung in der Schnittebene der vertikalen und horizontalen Mikrokanäle für das Kühlmedium und die Querkanäle in vertikalen und horizontalen Querkanalzonen unterschiedlich orientiert sind. Dies hat den Vorteil, dass die Stromführung nach rechts und links angeordnet werden kann, ohne dass zwischen Reaktionsfläche und Strompfad eine störende Kanalstruktur existiert. Insbesondere sind hier keine Klebestellen vorhanden, sodass der Strompfad auch gezielt zu verwirklichen ist. Um möglichst wenig einzelne Bauelemente zu haben, wird gemäß einer Weiterbildung vorgeschlagen, einzelne Ebenen zu einem Bauteil zusammenzufassen.

Eine stabile Konstruktion des Zellenstapels wird insbesondere dadurch ermöglicht, dass erfindungsgemäß der Zellenstapel mit seinen Endplatten und einem Spannsystem als eine die Zellen, Teilzellen, Kühl- und Medienmodule und Teilkühl- und Medienmodule zusammenfassende kompakte Einheit bildend ausgeführt ist und dass der Zellenstapel von einem vorzugsweise aus dünnem Alublech bestehenden Stapelgehäuse umgeben und vorzugsweise darin elastisch angeordnet bzw. aufgehängt ist und dass in den Endplatten oder separaten Volumenbündelungen die einzelnen Gase sinnvoll zusammengeführt sind und dass am Stapelgehäuse eine elektrische Schnittstelle zur Durchführung des Stapelstrom von den Stromanschlüssen und der Anschlüsse für die Mess-, Steuer- und Regeltechnik angeordnet ist. Ein solcher Zellenstapel bildet eine kompakte Einheit, die leicht eingebaut und mit anderen Einheiten zusammengeschlossen werden kann, wenn dies sich als erforderlich erweist.

Wie weiter vorne schon erwähnt ist es vorteilhaft, wenn zwischen einzelnen Ebenen insbesondere den Ebenen E1 und E2 sowie E3 und E4 oder E1 und E2 und E3 sowie E4 und in der Ebene E0 über eine elektrisch nicht leitende Folie und/oder eine Klebung und/oder eine Dichtung und/oder eine die Potentiale trennende Gestaltung der Oberfläche eine Potentialtrennung vorgenommen ist, wobei die Ebenen E1 und E2 oder E3 und E4 oder E2 und E3 aus einer Folie bestehen oder mit gleichen oder mit alternierenden Stegen miteinander zu einem Bauteil kombiniert sind. Aufgrund dieser Vorschläge ist es möglich, die Anzahl der Bauteile oder Bauelemente durch Reduzierung der Folien und der Klebeebenen zu verringern. Eine weitere Reduzierung der einzelnen Bauteile ist dadurch möglich, dass jede Teilzelle über Querkanäle in separaten Querkanalzonen und Längskanäle mit separaten Längskanalzonen für O₂, H₂ und Kühlmedium versehen ist, wobei die Längskanalzonen und die den Teilzellen zugeordneten Strompfade rechts und links vom Querschnitt einer Teilzelle angeordnet sind. Auf diese Weise kann die Reaktionsfläche beispielsweise in drei Teilflächen aufgeteilt werden, wobei die Teilreaktionsflächen drei Teilzellen in einer Ebene vorgeben. Möglich ist es auch, dass jede Teilzelle über Quer- und Verbindungskanäle in eine oder zwei Zonen für Quer- oder Verbindungskanäle mit O₂ und H₂ und Kühlmedium versorgt ist.

Zweckmäßig ist es weiter, wenn die einer MEA zugewandte Seite der H₂- bzw. O₂-Segmente eines KMM Mikrobohrungen für die Ein- und Ausströmung der Gase aufweisen und dahinter in entsprechenden Ebenen Mikrokanäle und Gasdurchlässe oder dass offene Mikrokanäle und dahinter in entsprechenden Ebenen Gasdurchlässe vorgesehen sind. Schließlich ist es vorteilhaft, wenn der Zellenstapel mit Endplatten in ein Stapelgehäuse integriert ist, das über eine oder mehrere Lufteinströmungen und eine oder mehrere Luftausströmungen verfügt. Dabei kann vor die Lufteinströmung ein Wärmetauscher, kombiniert mit einem Luftverdichter angeordnet werden, der die Gehäuseluft für die Gehäusekühlung, das Kühlmedium für den Stapel und O₂ fördert, das in die 0₂-Räume der Teilzellen geführt wird.

Als besonders zweckmäßig sieht es die Erfindung an, wenn ein oder mehrere Venturidüsen den Mikrokanälen, ein oder mehrere Venturidüsen dem Stapelgehäuse oder auch dessen Umgebung zur aktiven Unterstützung der Ausströmung aus den O₂-Quer- und Längskanälen vorgesehen sind, wobei zur Unterstützung des Ausströmens von Kondensat und O₂ aus den Mikrokanälen zusätzlich Venturidüsen in den Mikrokanälen angeordnet oder die Mikrokanäle entsprechend geformt sind und die Ausströmung von O₂ aus dem Mikrokanal auch direkt über die O₂-Gasöffnung in den Saugbereich der im Mikrokanal für das Kühlmedium KM angeordneten Venturidüse erfolgt, wobei für die Ausströmung von O₂ keine besonderen Quer- oder Längskanäle erforderlich sind und die Mikrokanäle und/oder die O₂-Quer- und Längskanäle und/oder die Venturidüsen das Ausströmen des Gases O₂ oder eines Gasgemisches oder des Produktwassers aus den O₂-Gasräumen bzw. den vorgeordneten Mikrokanälen und/oder den O₂-Zer- und Längskanälen aktiv unterstützend ausgebildet sind. Über diese sogenannten Venturidüsen ist ein aktives Ausströmen von Sauerstoff und anderen Gasen möglich. Es entsteht ein Unterdruck im Saugbereich, sodass der Sauerstoff oder die anderen Abgase gezielt beim Abströmen unterstützt werden. Die Venturidüsen werden dort angeordnet oder ausgeformt, wo sie gerade benötigt werden, insbesondere auch um das entstehende Kondensat sicher mit aus den Mikrokanälen, Kanälen und Öffnungen herauszuführen. Erreicht wird so mit einer oder mehreren derartiger Venturidüsen, die unabhängig voneinander eingesetzt werden können, dass das O₂ aktiv aus der Kathodenseite abgezogen wird. Auf diese Weise wird O₂ und auch Stickstoff und Produktwasser aktiv aus den zugeordneten Bereichen permanent und vorzugsweise gleichmäßig abgesaugt und in die Umgebung abgegeben.

Die erfindungsgemäße Brennstoffzelle bzw. entsprechende Zellenstapel dienen der Gewinnung von Strom. Sie kann aber auch bei Zuführung von Strom und Wasser zur Erzeugung von H₂ und O₂ eingesetzt werden. Insbesondere bei der Gewinnung von Strom durch Windkraft fällt nämlich immer wieder mal mehr Strom an, als gerade an die Verbraucher geliefert werden kann, d. h. der Absatz aber auch die Stromgewinnung schwanken manchmal stark gegenläufig. Die Speicherung des zu viel anfallenden Stroms ist meist schwierig oder auch nur dessen Ausnutzung. Hierzu sieht die Erfindung ein Verfahren vor, bei dem der zu viel anfallende Strom oder überhaupt Strom dazu benutzt wird, aus Wasser, Sauerstoff und vor allem Wasserstoff zu gewinnen. Die Erfindung lehrt hierzu, den Einsatz von Zellenstapeln in Form eines Elektrolyseurs mit einer Brennstoffzelle bestehend aus einem Zellenstapel mit mehreren Zellen und Endplatten an jedem Stapelende, mit einer Membran-Elektrodeneinheit - auch als MEA bezeichnet - mit Elektrodenanode- und -kathode, Anoden- und Kathodenkatalysatoren und dazwischen angeordneter Elektrolytmembran mit Gasdiffusionslagen, einem Kühl- und Medienmodus sowie zugeordneten Medienleitungen für Sauerstoff, Wasserstoff und Kühlmedium, wobei das Kühl- und Medienmodul - auch als KMM bezeichnet - unter Verzicht auf Bipolarplatten nur der Bereitstellung von Kühl- und Gaskanälen und der Stapelbildung dienend ausgeführt ist und wobei die Elektrodenabdeckung, der Stromleiter zugeordnet sind, der Ableitung, nicht aber der Durchleitung des Stroms dienend ausgebildet ist, wobei die Stromleiter ohne Bipolarplatten als Strompfade oder Teilstrompfade ausgebildet und in den Zellenstapel integriert und einerseits mit einem Stromversorger wie Windkrafträdern und andererseits mit den Stromabnehmern im Zellenstapel verbunden sind, wobei die Medienzu- und -ableitungen einem Kühl- und Medienmodul zugeordnet sind und auf beiden Seiten des Kühl und Medienmoduls entweder die Wasserstoffelektrode oder die Sauerstoffelektrode der Membran-Elektrodeneinheit der benachbarten Zelle angeordnet ist und wobei die Zellen in einer Zellenebene aus zwei oder mehreren Teilzellen, die mit einer oder mehreren Stapelzeilen angeordnet sind, bestehen, die jeweils einer Teilelektrodeneinheit bzw. Teil-MEA mit je einer Teilmembran und Teilreaktionsflächen und zugeordneten Teilgasdiffusionslagen und zugeordnetem Teilkühl- und Medienmodul und zugeordnetem Teilgassegment H₂ und Teilgassegment O₂ aufweisen und dass die Zellen und Teilzellen in Reihe geschaltet sind. Mit einer solchen Anlage ist die Verwirklichung des o. g. Verfahrens möglich. Der anfallende Wasserstoff wird gespeichert und kann bei erhöhtem oder bei Stillstand der Windkrafträder anfallendem Strombedarf zusammen mit Luft oder dem gespeicherten Sauerstoff zur Stromgewinnung eingesetzt werden. Natürlich kann die Anlage gezielt auch nur zur Gewinnung der Gase H₂ und O₂ eingesetzt werden.

Die Erfindung zeichnet sich insbesondere dadurch aus, dass eine Lösung geschaffen ist, mit der es möglich ist, die bekannten, gut herstellbaren und sehr klein bauenden Brennstoffzellen weiter zu entwickeln und zu differenzieren, indem die jeweilige Zelle in Teilzellen unterteilt ist, die alle so ausgebildet sind, dass dort gezielt die Stromgewinnung ausgeführt werden kann. Dies wird vor allem dadurch möglich, dass die Strompfade so in die Zellenstapel integriert sind, dass sie beim Aufbau bzw. beim Betrieb keine Beeinträchtigung erbringen und dennoch die Möglichkeit bieten, den Strom gezielt durch den Stapel hindurchzuführen. Die Strompfade ermöglichen das Führen des Stromes von den leitenden Gasdiffusionslagen der Membranelektrodeneinheit aus, durch das an sich nicht leitend ausgebildete Kühl- und Medienmodul hindurch, wozu diese Kühl- und Medienmodule mit einer kontaktierten Zone ausgerüstet sind, die dann die Strompfade in diesem Bereich mit bildet. Nach Führung durch diese kontaktierte Zone des Kühl- und Medienmoduls wird der Strom dann in die nächste Teilzelle geleitet und durchfließt sie, um danach in den Bereich der nächsten Zelle zu kommen. Der Optimierung dienen insbesondere Ausbildungen der KMM, bestehend aus mehreren Folien bzw. Bauteilen sowie auch der gesamten Zelle. Die Ebenen E0 und E4 bestehen beide aus je einer Kernfolie, vorzugsweise aus Aluminium, denen jeweils eine, oder beidseitig Potentialtrennungen zugeordnet sind, die elektrisch wirksam trennen, thermisch und elektrochemisch beständig sind, auch als Kanalabdeckung dienend, der jeweiligen Kernfolie zusätzliche mechanische Stabilität verleihen und gleichzeitig entweder als Dichtfläche wirken oder mit einer dichtenden Oberfläche ausgestattet sind, wobei die Kernfolie von E0 gleichzeitig noch als Abstandshalter dient, zur Optimierung der MEA-Kompression. Die Ebene E0 wirkt insofern als Stütz- und Dichtelement und nimmt die MEA oder Teil-MEA mit eigener Dichtstruktur auf, jede in einem separaten MEA-Fenster. Die Flächen der Ebenen E0, E4 entsprechen etwa dem Stapelquerschnitt. Vorteilhaft ist, dass in einer dieser Ebenen E0, E4 nur ein Gas geführt wird, was die schädliche Gasdiffusion zwischen diesen Bereichen verhindert und die Dichtung der verschiedenen Bauteile vereinfacht, beispielsweise wird in E0 das Gas H₂ geführt und in E4 die Luft also O₂, getrennt von E0. Dabei kann diese Separierung der Dichtfunktion erweitert werden, indem die als Stütz- und Dichtsystem fungierende Ebene E0 mit Kernfolie und Potentialtrennungen, welche die MEA bzw. Teil-MEA aufnimmt, über eigene, von der Teil-MEA unabhängige Dichtungen oder dichtende Oberflächen verfügt. Als Vorteil ist ferner anzusehen, dass die Teil-MEA jetzt einzeln als Baueinheit verbaut, ggf. auch getauscht und auf jeden Fall einfacher recycelt werden kann. Darüber hinaus kann diese offene Struktur einfacher auf unterschiedliche Wärmedehnungen der gefügten Bauteile oder Baugruppen reagieren. Vorteilhaft ist weiter, dass ein oder zwei Teil-KMM zu einem KMM-Element zusammengefasst werden, für eine oder zwei Teilzellen. Ein Teil-KMM ist als Verbund aus den Ebenen E1, E2, und E3 aufgebaut. Die Ebenen E1 und E2 aus einer Folie und die Ebene E3 ebenso aus einer Folie, oder die Ebene E1 aus einer Folie und die Ebenen E2 und E3 aus einer Folie, bestehen vorzugsweise aus Aluminium, Aluminiumlegierungen oder aluminiumbasierten Verbund- bzw. Duplexmaterialien, die z.B. mit Nanopartikeln ausgestattet sind, und/oder mit thermisch und elektrochemisch beständigen Oberflächen und alle notwendigen Kanäle, Öffnungen und Strukturen für die Gas- und Stromführung aufweisen. Die Folie E3 ist vorteilhaft mit der Folie E1 + E2 flächig verbunden, oder die Folie E1 mit der Folie E2 + E3, wobei jeweils auf eine innige metallische Kontaktebene Wert gelegt wird, welche die gesamte kontaktierende Fläche zwischen den Fügeteilen umfasst, elektrisch und thermisch sehr gut leitend ist und in der Fügeebene einen geschweißten, gesinterten, gelöteten, gebondeten oder durch Umformung oder Diffusionseffekte erzeugten Charakter aufweisen kann. Vorteilhaft ist schließlich, dass der für die Stromleitung erforderliche leitende Querschnitt zwischen benachbarten, in Reihe oder parallel geschalteten Teilzellen deutlich größer ist als in einer ungeteilten Zelle. Das bedeutet, dass die Verlustleistung (Wärme) durch zwei wesentliche Effekte reduziert wird. Die Teilung der Zellen in seriell geschaltete Teilzellen bewirkt einen geringeren Zellenstrom bei höherer Zellenspannung und außerdem wird der ohmsche Widerstand durch den deutlich vergrößerten Querschnitt in den Strompfaden und leitenden Strukturen der Teil-KMM reduziert. Beides bewirkt einen besseren Zellenwirkungsgrad. Die KMM-Elemente werden beidseitig auf den Potentialtrennungen der Ebene E4 fixiert und dabei gasdicht gefügt, wobei die Trennfuge auch als Klebefuge ausgebildet sein kann und elektrisch nicht leitend ist. Vorteilhaft ist auch, dass durch die Kombination des ersten Verbundes aus E1, E2 und E3 oder E1 und E2, E3 mit dem zweiten Verbund aus Kernfolie + Potentialtrennungen in der Ebene E4, ein in der Montage ausreichend handhabbarer KMM mit mehreren Teil-KMM bzw. KMM-Elementen als Einheit geschaffen wird. Die Ebene E4 ist dabei als durchgängiges Tragsystem ausgestaltet, das die einzelnen beidseitig davon angebrachten KMM-Elemente trägt, mit einer Querschnittsfläche, die etwa der des Stapelquerschnitts entspricht. Stütz- und Dichtelemente sind zwischen zwei KMM-Elementen überflüssig, während die Ebene E0 mit Kernfolie und Potentialtrennungen als Stütz- und Dichtelement für E0 wirkt und durch seine Dicke die MEA-Kompression vorgibt. Da auch aus Gründen der Potentialtrennung zwischen zwei Teilzellen bzw. zwischen zwei KMM-Elementen ein Abstand sein muss, wird dieser Abstand nun zu einem Luftkanal zwischen zwei KMM-Elementen ausgestaltet. Sofern eine gerade Anzahl Zellen mit einer ungeraden Anzahl Teilzellen kombiniert wird, ist vorteilhaft eine die Fertigung begünstigende Gestaltung der Bauteile und eine einfache Stromführung zwischen zwei Zellen möglich, weil die zu verbindenden KMM-Elemente im selben KMM an der selben Seite des Stapelquerschnitts angeordnet sind. Die Strompfade zwischen den KMM-Elementen, die im Stapelrand integriert sind und die Stromführung von einer Zelle zur nächsten Zelle bewirken, können als separates Bauteil zwischen zwei KMM-Elementen ausgeführt werden oder aus den entsprechend geformten Enden der KMM-Elemente selbst. Auch hier wird auf innige metallische Kontaktebenen Wert gelegt, welche die gesamte Fläche zwischen den Fügeteilen umfasst, elektrisch und thermisch sehr gut leitend ist und einen geschweißten, gesinterten, gelöteten, gebondeten oder durch Umformung oder Diffusionseffekte erzeugten Charakter aufweisen kann.

Weitere Einzelheiten und Vorteile des Erfindungsgegenstandes ergeben sich aus der nachfolgenden Beschreibung der zugehörigen Zeichnung, in der ein bevorzugtes Ausführungsbeispiel mit den dazu notwendigen Einzelheiten und Einzelteilen dargestellt ist. Es zeigen:
- Figur 1: einen Zellenstapel im Querschnitt,
- Figur 2: die Ebenenstruktur eines Kühl- und Medienmoduls mit den einzelnen Ebenen bzw. Folien bzw. Bauteilen,
- Figur 3: einen Schnitt aus Figur 1 mit der Unterteilung der Querschnittsfläche einer Zelle,
- Figur 4: den Querschnitt nach Figur 3 mit der Anordnung von Mikrokanälen,
- Figur 5: den Schnitt nach Figur 3 mit einer anderen Führung der Mikrokanäle,
- Figur 6: eine besondere Ausführung der der Sauerstoff- bzw. Luftzufuhr dienenden Mikrokanäle,
- Figur 7: ein Kühl- und Medienmodul im Schnitt mit beidseitig angeordneter Membranelektrodeneinheit und Einströmung der Gase H₂ und O₂,
- Figur 8: die Darstellung nach Figur 7 mit der Ausströmung der Gase H₂ und O₂,
- Figur 9: einen weitere Möglichkeit der Ausströmung der Gase H₂ und O₂ im weiter vorn gezeigten Schnitt,
- Figur 10: die Darstellung der Kühlkanalorientierung nach einer ersten Variante,
- Figur 11: die Kühlkanalorientierung nach einer zweiten Variante,
- Figur 12: eine Kühlkanalorientierung in einem Schnitt gemäß Figuren 3 und 4,
- Figur 13: verschiedene Möglichkeiten der Zusammenfassung der einzelnen Ebenen bzw. Folien bzw. Bauteile,
- Figur 14: eine genauere Wiedergabe der Strompfade durch aneinander gefügte Zellen jeweils mit einer Elektrolytmembran bzw. einer Reaktionsfläche,
- Figur 15: die beispielhaft in drei Teilzellen unterteilte Zelle, bzw. in drei Teilreaktionsflächen unterteilte Reaktionsfläche,
- Figur 16: die Struktur der Zelle mit drei Teilzellen in einer Ebene mit gleichen Gassegmenten H₂-H₂ oder O₂-O₂ für eine Teilzelle,
- Figur 17: eine Möglichkeit der Teilung der Zelle,
- Figur 17a: alternierend oder nicht alternierend angeordnete Gassegmente,
- Figur 18: Ansicht einer Zelle mit zehn Teil-Zellen,
- Figur 19: Ansicht eines Kühl- und Medienmoduls mit Gas- und Kühlsegmenten und
- Figur 20: zwei benachbarte Kühl- und Medienmodule,
- Figur 21: Schnitt durch einen Stapel mit Stapelgehäuse,
- Figur 21a: Prinzipdarstellung einer Venturidüse,
- Figur 21b: Prinzipdarstellung der O₂-Führung durch den Stapel
- Figur 22: Darstellung eines KMM-Elements als Ausschnitt von Fig.21,
- Figur 23: Schnitt durch einen Stapel mit 2 Zellen mit je 3 Teilzellen,
- Figur 23a: eine weitere Möglichkeit zur Gestaltung der Strompfade,
- Figur 24: Teilansicht eines Stapels als 3D-Darstellung nach Fig. 23,
- Figur 25: Einströmebene H₂ und O₂ als Schnitt aus Fig. 23,
- Figur 25a: Ausströmebene KM, H₂ und O₂ als Schnitt aus Fig. 23,
- Figur 25b: Anordnung der Venturidüse V1
- Figur 25c: Anordnung der Venturidüse V3
- Figur 25d1: Gas- und Kühlkanäle in einem KMM-Element (Schnitt)

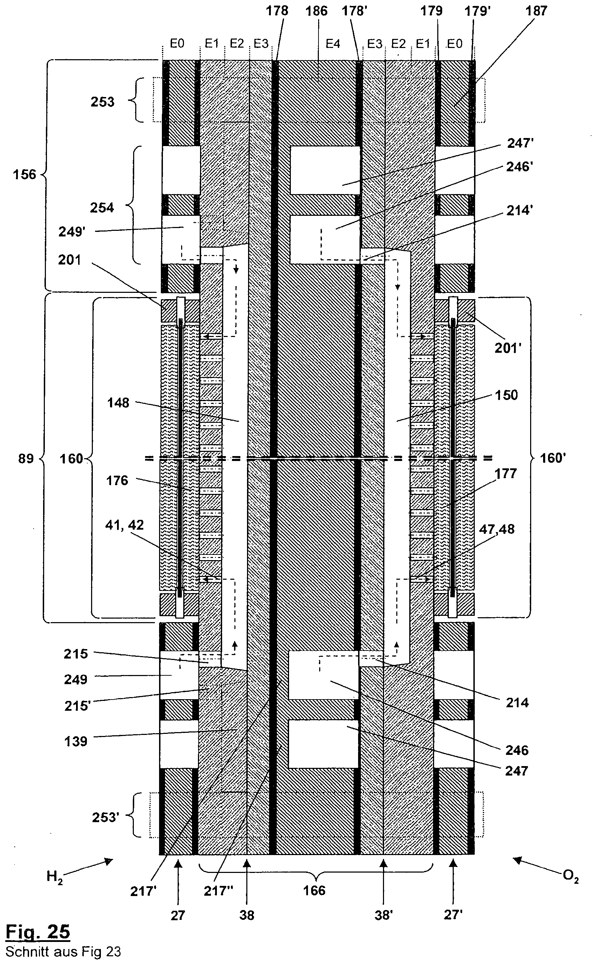

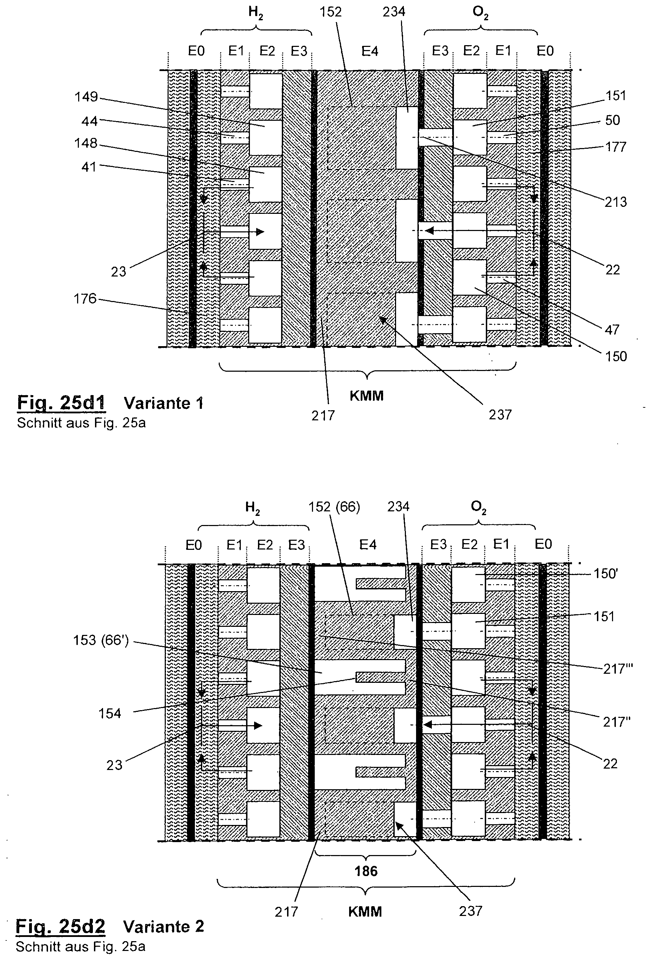

- Figur 25d2: eine weitere Möglichkeit zur Gestaltung der Gas- und Kühlkanäle in einem KM-Element (Schnitt)

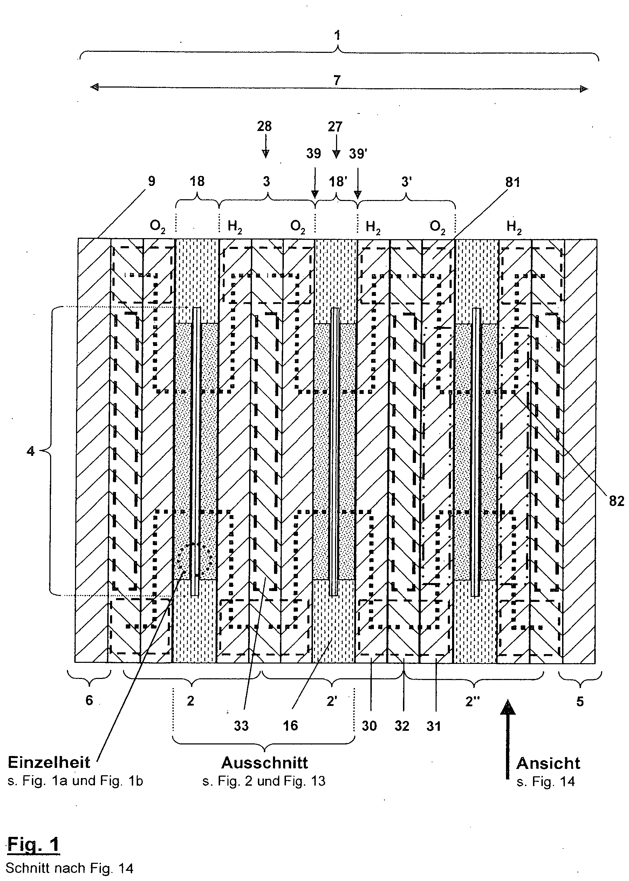

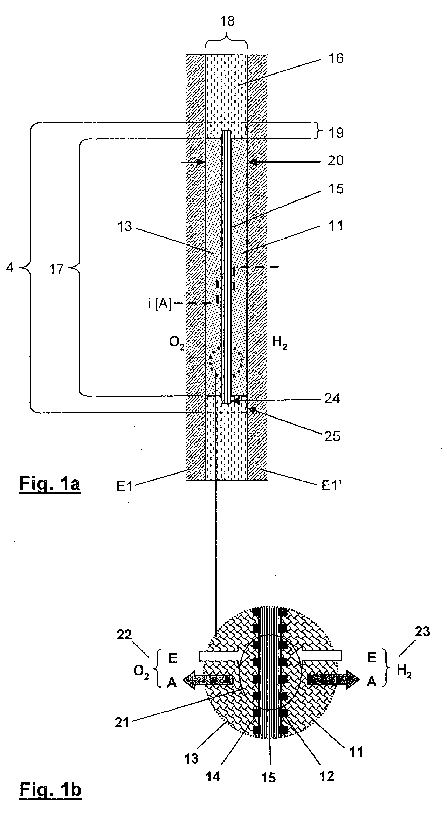

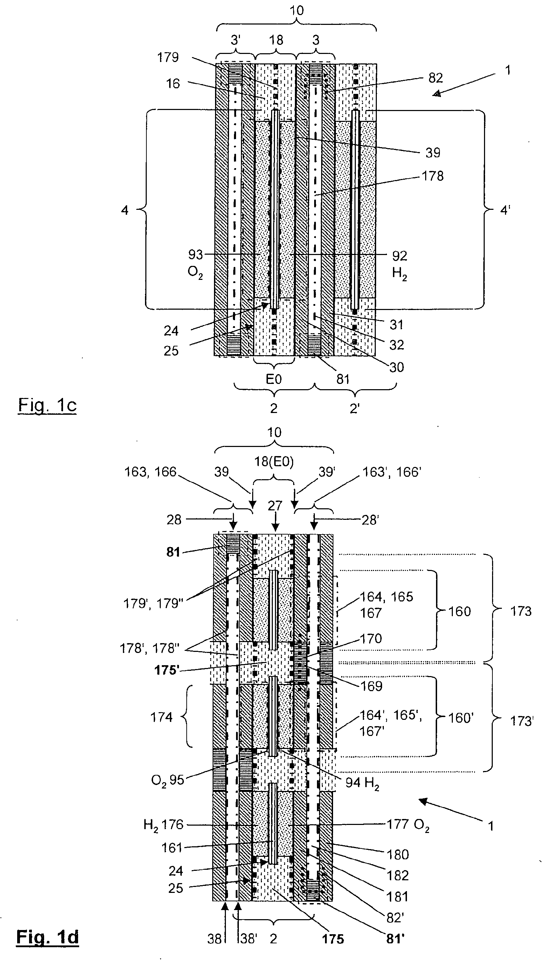

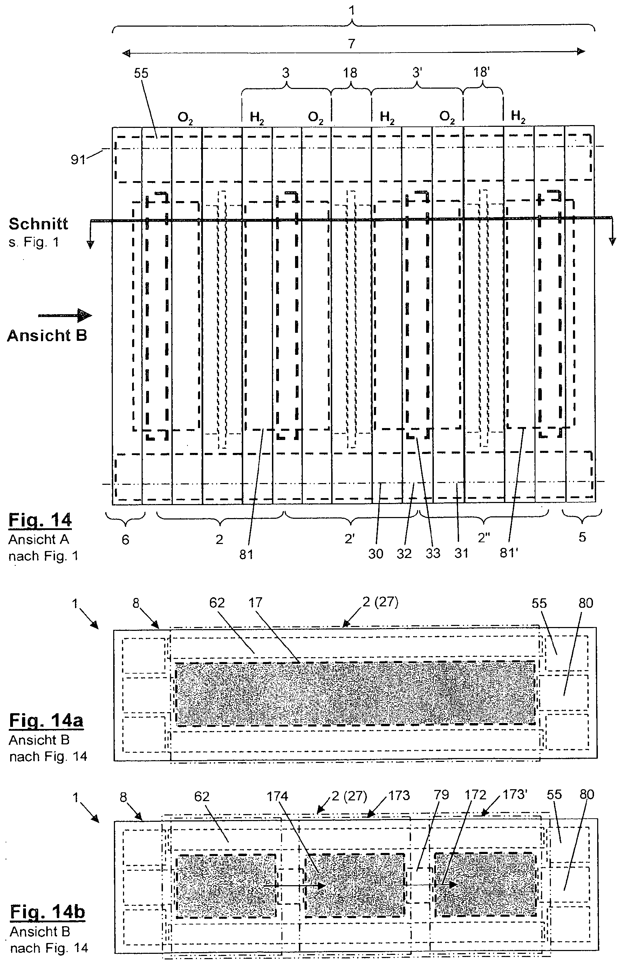

Figur 1 zeigt einen Zellenstapel 1 im Schnitt (siehe auch Fig. 14) mit mehreren Zellen 2, 2', 2". Das Kühl- und Medienmodul 3, 3' (KMM) besteht aus einem Folienstapel, der weiter hinten noch erläutert wird. Gezeigt wird die Struktur des KMM 3, 3' in der KMM-Ebene 28 mit dem H₂-Segment 30 und dem O₂-Segment 31 und dem Kühlsegment 32 für das Kühlmedium KM mit der Zone für Mikro-Kühlkanäle 33. Mit 18 ist das Zellsegment in der Zellenebene 27 E0 bezeichnet für die Membran-Elektrodeneinheit 4 (MEA) und das Stütz- und Dichtelement 16, während der Zellenstapel 1 durch Endplatten 5 und 6 begrenzt ist. Mit 7 ist die Stapelachse gekennzeichnet und mit 9 der Stapelrand.

Gezeigt ist die Struktur des Zellenstapels 1 der Zellen 2, 2', 2" mit Kühl- und Medienmodul 3, die mindestens einen in den Stapel integrierten Strompfad 81, 169 ohne Bipolarplatten aufweisen. Diese integrierten Strompfade 81, 169 ersetzen die Stromfahnen oder Stromleiter gemäß Stand der Technik, die außerhalb des Stapelquerschnitts angeordnet sind und angeordnet werden mussten. Ferner wird der Stromweg 82 für den elektrischen Strom durch den Zellenstapel 1 gezeigt.

Ferner werden die Dicht-. Trenn-, und Kontaktebenen 39, 39' angedeutet, die eine lösbare aber gasdichte Trennung der Ebene E0 (siehe Fig. 1a) einer Zelle 2 und der jeweils beidseitig angeordneten KMM 3, 3' darstellen und nur dort Strom weiterleiten, wo dies erforderlich ist.

Figur 1a zeigt das oben schon erwähnte Zellsegment (E0) 18 im Detail, mit der Membran-Elektrodeneinheit (MEA) 4, in einer beispielhaften Ausführung bestehend aus Elektrolytmembran 15, Gasdiffusionslage (H₂-GDL) mit 11 bezeichnet, Gasdiffusionslage (O₂-GDL) mit 13 bezeichnet und dem Stütz- und Dichtelement 16. Mit 17 ist die Reaktionsfläche der Elektrolytmembran 15 bezeichnet, mit 20 die MEA-Kompression angedeutet und mit 19 die MEA-Berandung. Fig. 1a zeigt die MEA-Berandung 19 mit der ersten Dichtung 24 und der zweiten Dichtung 25 in das als Potentialtrennung dienende Stütz- und Dichtelement 16 integriert. Mit E1, E1' sind die als Stromleiter für den Strom i[A] dienenden Ebenen bezeichnet.

Figur 1b zeigt ein Detail aus Fig. 1a mit der Elektrolytmembran 15, den Katalysatoren 12 und 14, den Gasdiffusionslagen 11 (H₂-GDL) und 13 (O₂-GDL), der Reaktionszone 21 und den in die Reaktionszone 21 ein- und austretenden Gase O₂, die mit 22 und H₂, die mit 23 bezeichnet sind. Austretende Gase O₂ bestehen aus der überschüssigen Luft, Restgasen z.B. Stickstoff und dem in der Reaktionszone 21 auf der O₂-Seite entstandenen Produktwasser.

Figur 1c und Figur 1d zeigen verschiedene Stapelausschnitte 10 des Zellenstapels 1 und beispielhaft die Struktur und Lage der Potentialtrennungen, die, mit 179, 179', 179" bezeichnet sind im Zellsegment 18 für die Ebene E0 und mit 178, 178', 178" in den H₂- bzw. O₂-Segmenten 30 und 31 sowie der ersten Dichtung 24 an der MEA-Berandung 19 und der zweiten Dichtung 25 am Stütz- und Dichtelement 16 bzw. an den Teil-Stütz- und Dichtelementen 175, 175', oder anders ausgedrückt in der Kontaktebene 39, die als Dicht- und Trennebene ausgeführt ist, jeweils zwischen einem Zellelement 18 und einem Kühl- und Medienmodul 3, 163, 166.

Die Stütz- und Dichtelemente 16 oder Teil-Stütz- und Dichtelemente 175, 175' in der Ebene E0 des Zellsegments 18 können selbst als Potentialtrennung ausgeführt sein, ebenso das Kühlsegment 32, 182 eines KMM 3, 163, 166, das dann beispielsweise als elektrisch nicht leitende Folien oder entsprechende auf die Segmente 30, 31, 180, 181 aufgetragene Oberfläche mit Kanalstrukturen ausgeführt sein kann.

Ferner werden in Figuren 1c und 1d die in den Stapel integrierten Strompfade 81, 81', 169 gezeigt und ihre Lage im Zellenstapel 1.

Fig. 1c zeigt an der Stapelseite des Zellenstapels 1 den Strompfad 81 als elektrisch leitende Struktur, der den Strom gezielt von einer Seite des KMM 3 zur anderen Seite, also von einer Zelle 2 mit MEA 4 zur benachbarten Zelle 2' mit MEA 4' führt, als stromleitende Verbindung zwischen den leitenden H₂- und O₂-Segmenten 30 und 31, die mit dem Kühlsegment 32 das KMM 3 bilden. Der Stromweg ist mit 82 bezeichnet. Beispielhaft sind integrierte Potentialtrennungen gezeigt; eine ist mit 179 bezeichnet, die in der Ebene E0 des Zellsegments 18 liegt und eine ist mit 178 bezeichnet, die im Kühlsegment 32 des KMM 3 liegt.

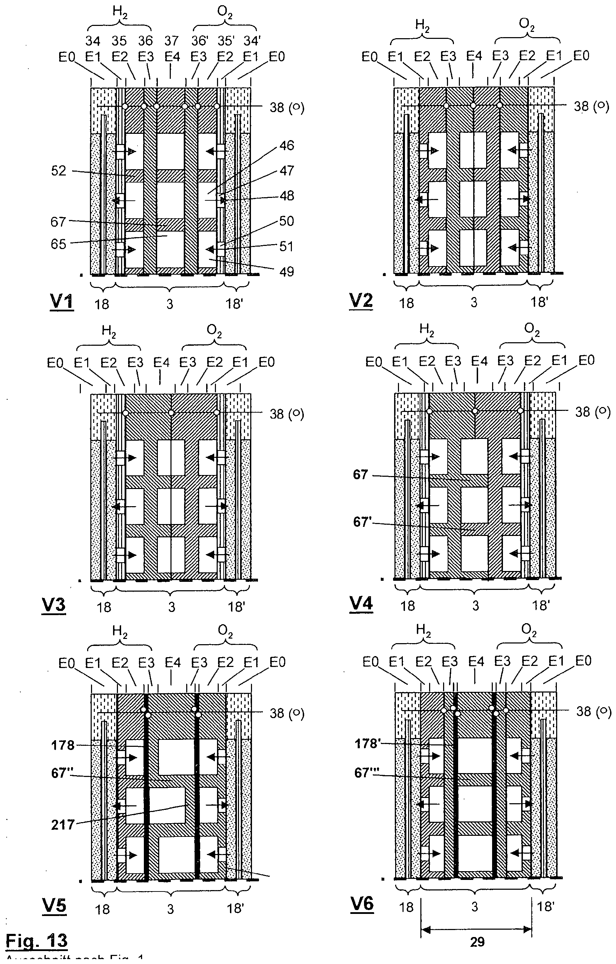

Das Kühlsegment 32 eines KMM 3, 163, 166 kann auch aus 2 Teilen bestehen, ähnlich Fig. 13-V3, während die Potentialtrennung 178 als elektrisch nicht leitende Folie oder Oberfläche ausgeführt zwischen diesen Teilen angeordnet wird. Potentialtrennungen 178, 179 werden vorzugsweise als elektrisch nicht leitende Folien oder Schichten bzw. Oberflächen der gefügten Bauteile ausgeführt, und je nach Bauart der benachbarten Teile oder Baugruppen auch mit einer gleichzeitig dichtenden Oberfläche ausgestattet.

Fig. 1d zeigt in einem Zellenstapel 1 den integrierten Teilstrompfad169, der den Strom gezielt über den Stromweg 170 von einer Teilzelle 173 mit Teil-MEA 160 und einem Teil-KMM 164, 165, 167 zur benachbarten Teilzelle 173' mit Teil-MEA 160' und einem Teil-KMM 164', 165', 167' führt, während auch hier der Strom weiter mit dem integrierten Strompfad 81' am Stapelrand 9 über den Stromweg 82' von Zelle 2 nach Zelle 2' geleitet wird, analog Fig. 1c.

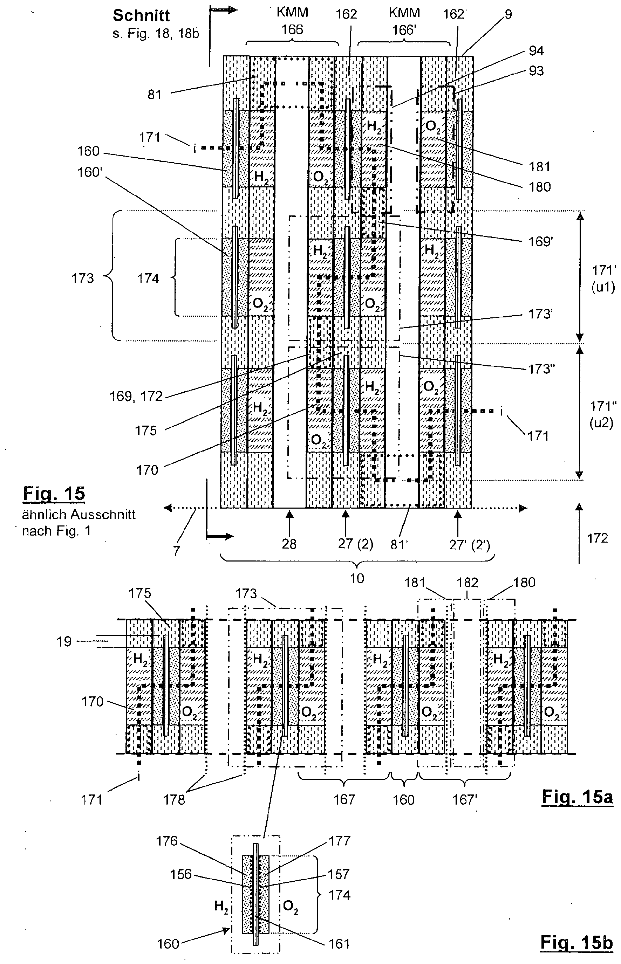

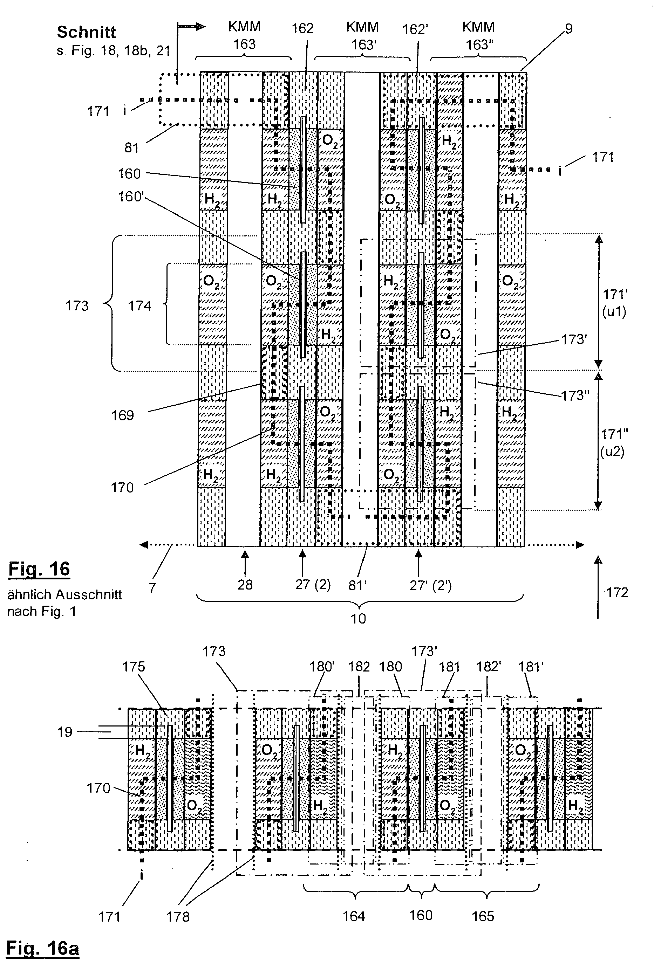

Der Strompfad 81' am Stapelrand für ein KMM 166 mit Teilzellenstruktur O₂-H₂/H₂-O₂ wird hier beispielhaft wie in Fig. 15 gezeigt, während der entsprechende Strompfad für ein KMM 163 mit Teilzellenstruktur O₂-O₂/H₂-H₂ in Fig. 16 dargestellt ist.

Es sind ferner beispielhaft jeweils zwei Potentialtrennungen mit 179', 179" bezeichnet in der Dicht-. Trenn-, und Kontaktebenen 39, 39' zwischen Ebene E0 des Zellsegments 18 und dem anschließenden H₂-Segment 180 und dem O₂-Segment 181 des KMM - 163 oder 166 und ferner Potentialtrennungen mit 178, 178' bezeichnet in der Fügeebene 38 zwischen den H₂-Teilsegmenten 180 bzw. den O₂-Telsegmenten 181 und dem Teilkühlsegment 182 für Kühlmedium (KM) des KMM 163 oder 166 angeordnet.

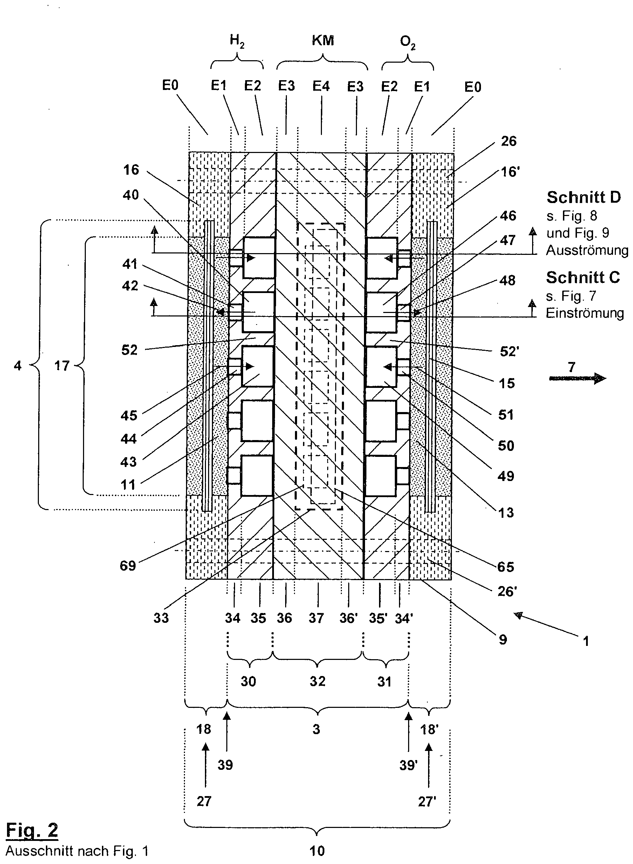

Eine weitere Ausführungsform sieht vor, die in Fig. 2 dargestellte und mit 36 bezeichnete Ebene E3 eines KMM 3, 163, 166 so auszuführen, dass sie den Zweck der Potentialtrennung 179 ebenfalls erfüllen kann, wenn ein entsprechendes nicht elektrisch leitendes Material dafür gewählt wird.

Figur 2 zeigt den in Figur 1 mit Ausschnitt bezeichneten Stapelausschnitt 10 mit dem Stapelrand 9 als Schnitt durch den Zellenstapel 1 nach Figur 1, der die Struktur insbesondere des Kühl- und Medienmoduls 3 in der Stapelachse 7 wiedergibt und die einzelnen funktionalen Ebenen innerhalb einer MEA 4, 160, bestehend aus der Elektrolytmembran 15, den Gasdiffusionslagen 11 und 13 und den Katalysatoren 12 und 14, wie in Figur 1a und Figur 1b im einzelnen gezeigt. Die einzelnen ein Kühl- und Medienmodul 3 (KMM) bildenden Ebenen definieren nicht zwingend solche Folien bzw. Bauteile, sondern charakterisieren solche einzelnen Funktionen, die in einem Kühl- und Medienmodul 3 verwirklicht sind. Mit E1 ist die Elektrodenabdeckung mit Mikrobohrungen jeweils für die H₂ und O₂ Gaseinströmung und Gasausströmung bezeichnet. Für die Gasverteilung mit Mikrokanälen jeweils für H₂ und O₂ für die Gaseinströmung und Gasausströmung ist die Ebene mit E2 vorgesehen. E3 ist die Kanalabdeckung zur Trennung der Kanäle für Gas und Kühlmedium und E4 die Kühlmediumverteilung mit Mikrokanälen für das Kühlmedium. Mit 18, 18' ist das Zellsegment E0 als Baugruppe, bestehend aus der MEA 4 und den Stütz- und Dichtelementen 16, in der Zellenebene 27 bezeichnet. Den Stütz- und Dichtelementen 16 werden dabei 3 Funktionen zugewiesen, nämlich 1. die Abdichtung von Kanälen und Gasräumen, 2. die Abstützung der Ebene E0 um einen definierten Raum für die MEA 4 bereit zu stellen und deren definierte Kompression 20, wie in Fig. 1a gezeigt, sowie 3. die Potentialtrennung der der MEA 4 benachbarten KMM 3 und 3', wie in Figur 1 gezeigt. Die Reaktionsfläche ist wie in Figur 1a gezeigt mit 17 bezeichnet und weist die gleiche Größenordnung in Figur 2 auf. Die Elektrodenabdeckung E1, auf beiden Seiten der MEA 4, wird vom H₂ -Segment 30 und O₂-Segment 31 verwirklicht, den Strom über die Dicht-. Trenn-, und Kontaktebenen 39, 39' jeweils zwischen E1 und der H₂-Gasdiffusionslage 11 und O₂-Gasdiffusionslage 13 ableitend.

Das Kühl- und Medienmodul 3 ist durch die schon genannten Ebenen E1, E2, E3 und E4 gekennzeichnet, wobei auf beiden Seiten der Ebene E4 des Kühl- und Medienmoduls 3 die Ebenen E3, E2 und E1 vorhanden sind. Diese unterschiedlichen Ebenen E1, E2, E3 und E4 sowie auch E0 können variabel zu einem Bauteil zusammengefasst werden, um damit eine definierte Funktionskombination in einem solchen Bauteil zu verwirklichen. Beispielsweise können die Ebenen E1 und E2 zu einer Folie mit den Funktionen Mikrobohrungen und Mikrokanäle in einem Bauteil vorhanden sein, wie dies in Figur 13 noch näher erläutert wird. Vorteil ist, dass je nach Bauart, Ausgangsmaterial, Werkstoff und Fertigungsverfahren eine deutlich größere konstruktive Freiheit für die Gestaltung der Bauteile und damit die Chance besteht, die Bauteilfunktionen zu optimieren und gleichzeitig die Fertigungskosten zu senken.

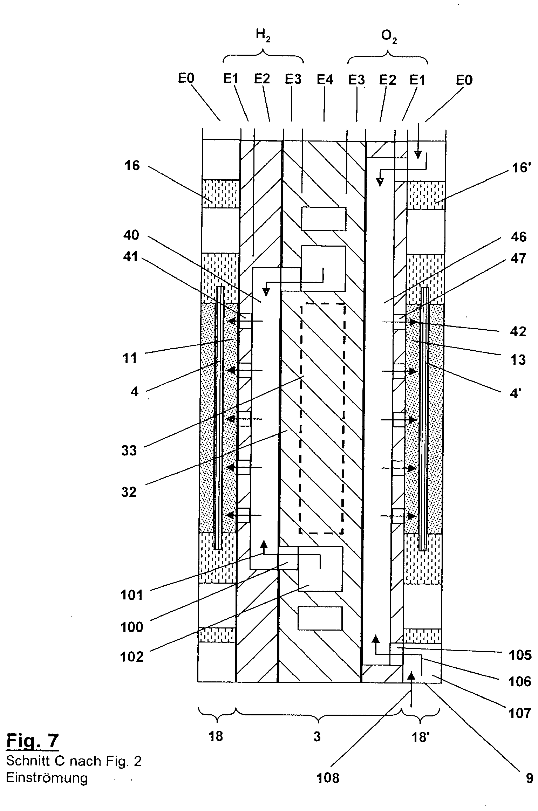

In Figur 2 sind die H₂-Segmente 30 und O₂-Segmente 31 weiter erläutert und differenziert, wobei die Zone 33 für alternative horizontale, mit 69 bezeichnete, oder vertikale, mit 65 bezeichnete Mikro-Kühlkanäle im Kühlsegment 32 und die durch den Stapel 1 führenden Längskanäle 26, 26' nur angedeutet sind. Der Mikrokanal 40 dient der Einströmung von H₂ als Anodengas ebenso wie die weiterführende Mikrobohrung 41. Der Wasserstoff wird dann als Gas 42 in die Gasdiffusionslage 11 geführt. Das nicht "verarbeitete" H₂-Gas, sowie Gasverunreinigungen und z.B. inerte Gasphasen werden als H₂-Ausströmung über den Mikrokanal 43 und die Mikrobohrung 44 abgeführt, wobei das Bezugszeichen 45 für das aus der Gasdiffusionslage 11 abströmende H₂ verwendet wird. Der Mikrokanal 46 dient der Einströmung von O₂ (gemeint ist Sauerstoff oder Luft, z.B. aus der Umgebung) ebenso wie die weiterführende Mikrobohrung 47. Der Sauerstoff O₂ wird dann als Gas 48 in die Gasdiffusionslage 13 geführt. Das nicht "verarbeitete" O₂ Gas, sowie Gasverunreinigungen, inerte Gasphasen, z.B. Stickstoffreste aus der verbrauchten Luft und Produktwasser (flüssig oder dampfförmig) werden als Kathodengas 51 über die Mikrobohrung 50 und den Mikrokanal 49 abgeführt, wobei das Bezugszeichen 51 für das aus der Gasdiffusionslage 13 abströmende O₂ verwendet wird. Zwischen zwei Mikrokanälen 40 und 43 sowie 46 und 49 sind die Stege 52, 52' in der Ebene E2 angeordnet, um auf diese Weise die notwendigen Öffnungen dauerhaft zu garantieren und ein- und ausströmende Gase in den Gassegmenten 30 und 31 definiert zu führen und zu trennen. Vorteilhaft ist bei dieser Anordnung, dass frische einströmende Gase nicht mit abströmenden "gebrauchten" Gasen vermischt werden, mit der Folge, dass der Betrieb einer Zelle 2 mit geringeren Betriebsdrücken und im Bereich der stöchiometrischen Gasversorgung möglich wird, wodurch Verlustleistungen minimiert werden und der Gesamtwirkungsgrad einem Optimum zustrebt. Die einzelnen Ebenen werden von dünnwandigen Folien 34, 35, 36, 37, 34', 35', 36' verwirklicht, wobei sie die Ebenen E1 - E4 wiedergeben. In Fig. 2 wird beispielsweise gezeigt, wie die Ebenen E1 und E2 zu einer Folie zusammengefasst werden können. Die Einströmung und Ausströmung der Gase wird in Figuren 7,8 und 9 weiter detailliert und gezeigt.

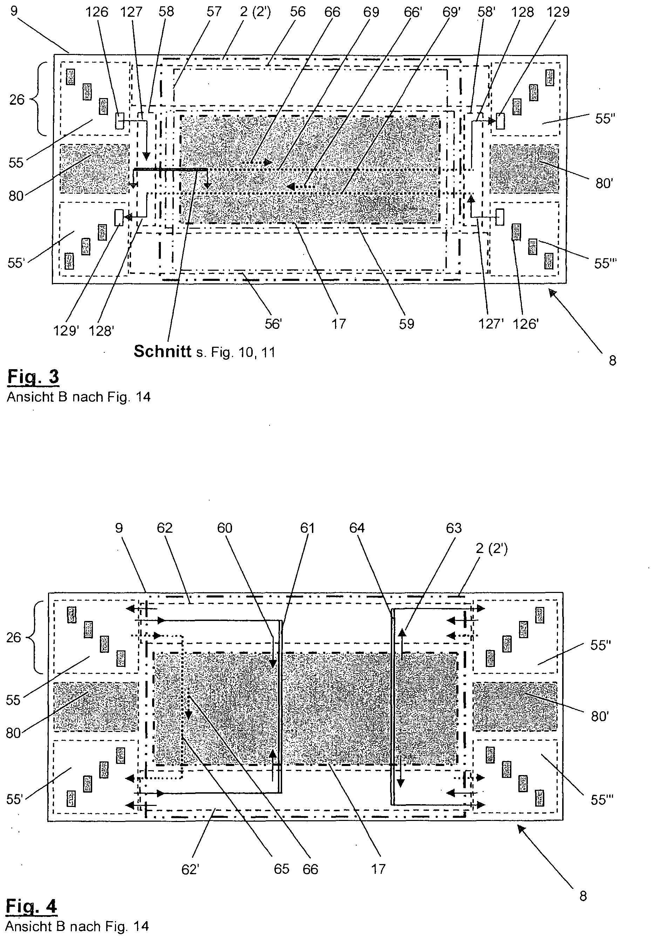

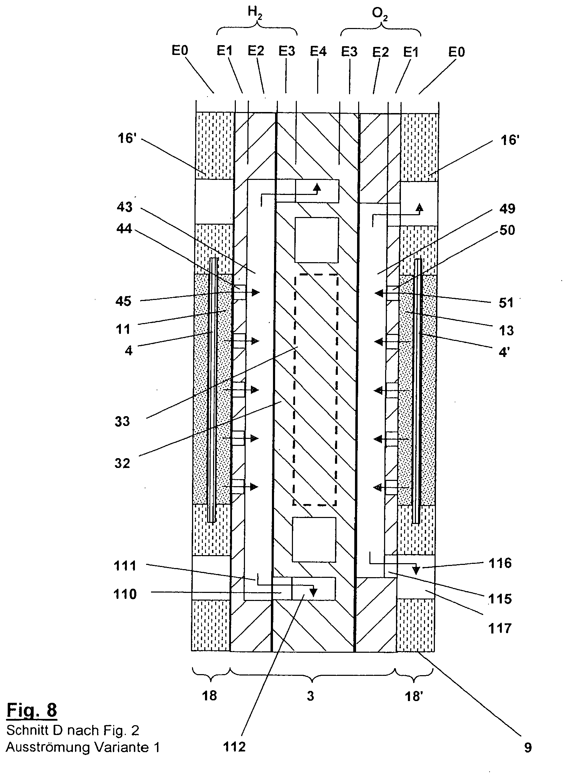

Figur 3 gibt die Ansicht B nach Figur 14 wieder. Diese Ansicht auf den Stapelquerschnitt 8 des Zellenstapels 1 nach Figur 1 soll die Struktur der funktionalen Zonen im Stapelquerschnitt wiedergeben. Sowohl den Ebenen eines Kühl- und Medienmoduls 3 als auch den Zonen der Schnittfläche werden bestimmte Funktionen zugeordnet. Beispielhaft werden die Zonen 55, 55', 55", 55'" für die Längskanäle 26 für O₂ und H₂ und auch für das Kühlmedium jeweils für die Ein- und Ausströmung gezeigt. 17 ist die Reaktionsfläche der Zelle 2 und es ist mit 57 die Mikrokanalzone für ein- und ausströmende Gase (H₂ und O₂) bzw. mit 56, 56' Zonen für Querkanäle für H₂ und O₂ sowohl für die Einströmung als auch für Ausströmung gezeigt. 9 ist der Stapelrand eines Zellenstapels 1 nach Fig. 1 und 8 der Stapelquerschnitt, wobei mit 58 und 58' die vertikalen Querkanalzonen für das Kühlmedium und mit 59 die horizontale Mikrokanalzone für das Kühlmedium bezeichnet sind. Am Beispiel der Kühlmediumführung wird im Folgenden die Funktion der Längskanäle und Längskanalzonen gezeigt. In der hier angedeuteten Zelle 2 strömt aus dem Längskanal 126 in der Längskanalzone 55 das Kühlmedium 127 in die vertikale Querkanalzone 58, von dort in den horizontalen Mikrokanal 69 als Kühlmedium 66 mit einer bestimmten Strömungsrichtung und weiter in die vertikale Querkanalzone 58' um dort als Kühlmedium 128 in den Längskanal 129 in der Längskanalzone 55" auszuströmen.

Mit Kühlmedium 66' wird angedeutet, dass von Zelle 2 zu Zelle 2' nach Fig. 1 die Strömungsrichtung des Kühlmediums, von KMM zu KMM (3, 163, 166) wechseln kann. In der hinter der hier angedeuteten Zelle 2 angeordneten aber nicht gezeichneten Zelle 2' strömt demnach aus dem Längskanal 126' in der Längskanalzone 55'" das Kühlmedium 127' in die vertikale Querkanalzone 58', von dort in den Mikrokanal 69' als Kühlmedium 66' mit einer bestimmten Strömungsrichtung und weiter in die vertikale Querkanalzone 58 um dort als Kühlmedium 128' in den Längskanal 129' in der Längskanalzone 55' auszuströmen. Dies gilt in analoger Weise auch für vertikal geführte Mikrokanäle 65 für das Kühlmedium 66 nach Fig. 4.

Die Strompfadzonen 80 bzw. 80' führen durch das Kühl- und Medienmodul 3 wie gezeigt, wobei es in den Strompfadzonen 80 bzw. 80' keine Unterbrechungen durch Kanäle gibt. In dieser Zone wird nicht geklebt oder gedichtet, eher werden die Oberflächen besonders Strom leitend ausgeführt, z. B. durch eine Nano-Material-Beschichtung oder Schweißverbindung. D. h. die Strompfade 81, 81', z.B. nach Fig. 1 in den Strompfadzonen 80 bzw. 80' sind sehr gut elektrisch leitend und nicht notwendigerweise mit Klebstoff ausgestattet, alle übrigen Flächen dagegen, sofern dies erforderlich ist. Ausgenommen sind noch die Mikrobohrungen und deren Berandung und die Innenflächen der Mikrokanäle 61, 64, 65 sowohl für Gas wie auch für Kühlmedium 66, wie in Fig. 4 gezeigt.

Im Kühl- und Medienmodul 3 wird, wie vorher schon gezeigt, der Strom über die Ebenen E1 in den Zonen 80, 80' für die Strompfade 81 bzw. 81' geführt (Strompfad). Durch die Ebene E1 wird der Strom über die Gasdiffusionslage 11 bzw. 13 zur Elektrolytmembran 15 weitergeleitet und umgekehrt. Der Strompfad 81 geht durch alle Ebenen E1, E2, E3 und E4 jedoch nicht durch die Ebene E0.

Der Strompfad 81 umgeht somit die nicht leitenden Zonen im Kühl- und Medienmodul 3. Im Bereich der Reaktionsfläche 17 sind die Ebenen E1 und E2 des Kühl- und Medienmoduls 3 vorzugsweise elektrisch leitend. Die Ebenen E3 und E4 müssen nicht zwingend elektrisch leitend sein. Zwischen den Ebenenpaaren E1, E2 und den Ebenenpaaren E3, E4 oder den Ebenenpaaren E1, E2, E3 und der Ebene E4 besteht vorzugsweise kein elektrischer Kontakt. Im Bereich des Stapelquerschnitts 8 (ausgenommen die Zonen für die Strompfade 81 bzw. 81') werden die Metallfolien der einzelnen Ebenen und deren Kombinationen geklebt und zwar mit einem nicht leitenden Kleber. Im Bereich der Reaktionsfläche 17 muss kein Stromdurchgang durch das KMM 3 stattfinden, sodass eine Bipolarität im Bereich der Reaktionszone ausscheidet. Vorteilhaft ist, dass der Strompfad 81, 81' im Bereich in welchem die Weiterleitung des Stromes definiert stattfindet, genau vorgegeben ist. Insgesamt weist diese Lösung nach Figur 3 den Vorteil auf, dass sowohl eine serielle Verschaltung der Zellen 2, 2', 2" nach Fig. 1 möglich ist, wobei keine Stromfahnen erforderlich sind, weil ein Kühl- und Medienmodul 3 bildender Folienstapel über mindestens eine direkt kontaktierte Zone 80, 80' mit Strompfaden 81, 81' verfügt, die der Stromleitung durch dieses Kühl- und Medienmodul 3 dient. Die Struktur erlaubt weiter die Segmentierung der hier als eine Fläche dargestellten Reaktionsfläche 17 in verschiedene Teilreaktionsflächen 174, 174', 174" innerhalb einer Zelle 2, was weiter hinten noch erläutert ist, wobei dann je nach Bauart eines KMM jeweils zwischen einer Ebene E2 und E3 oder zwischen einer Ebene E3 und E4 eine Potentialtrennung vorzusehen ist, dort aber auch nicht im Bereich der Strompfade 81 bzw. 81'.

Figur 4 gibt die Ansicht B nach Fig. 14 als Stapelquerschnitt 8 mit dem Stapelrand 9 wieder und zeigt eine horizontale Querkanalzonen 62 und 62', gemeinsam für H₂, O₂ und KM und eine Führung des Kühlmediums 66 in vertikalen Mikrokanälen 65 für die Zelle 2, 2'. Mit 55 bis 55'" sind die verschiedenen Längskanalzonen bezeichnet, die Strompfadzonen tragen wieder das Bezugszeichen 80 bzw. 80'. Einströmende Gase 60, O₂ oder H₂, strömen über Mikrokanäle, die prinzipiell dem Mikrokanal 61 entsprechen, aus der Querkanalzone 62, 62' in den Bereich der Reaktionsfläche 17 ein, um von dort dann als Gas 63, O₂ oder H₂, über Mikrokanäle, die prinzipiell dem Mikrokanal 64 entsprechen und die horizontale Querkanalzone 62, 62' wieder auszuströmen, in analoger Weise für H₂ und O₂. Gezeigt werden ferner die Zonen 55, 55', 55", 55'" für die Längskanäle 26 für O₂ und H₂ und auch für das Kühlmedium 66, jeweils für das Ein- und Ausströmen der Medien. Vorteilhaft ist bei dieser Anordnung, dass sowohl Quer- als auch Mikrokanäle für Gase von beiden Seiten angeströmt werden, was den Druckverlust in den Kanälen und Mikrokanälen deutlich reduziert und die gleichmäßige Verteilung der Prozessmedien (H2, O2, KM) im Stapel begünstigt. Der Vergleich der Figuren 3 und 4 zeigt weiter, das durch die gemeinsame horizontale Querkanalzone 62, 62' für alle Prozessmedien (H2, O2, KM) eine größere Nutzung des Stapelquerschnitts 8 möglich wird, indem mit weiteren konstruktiven Freiheitsgraden z.B. eine größere Reaktionsfläche 17 realisiert werden kann.

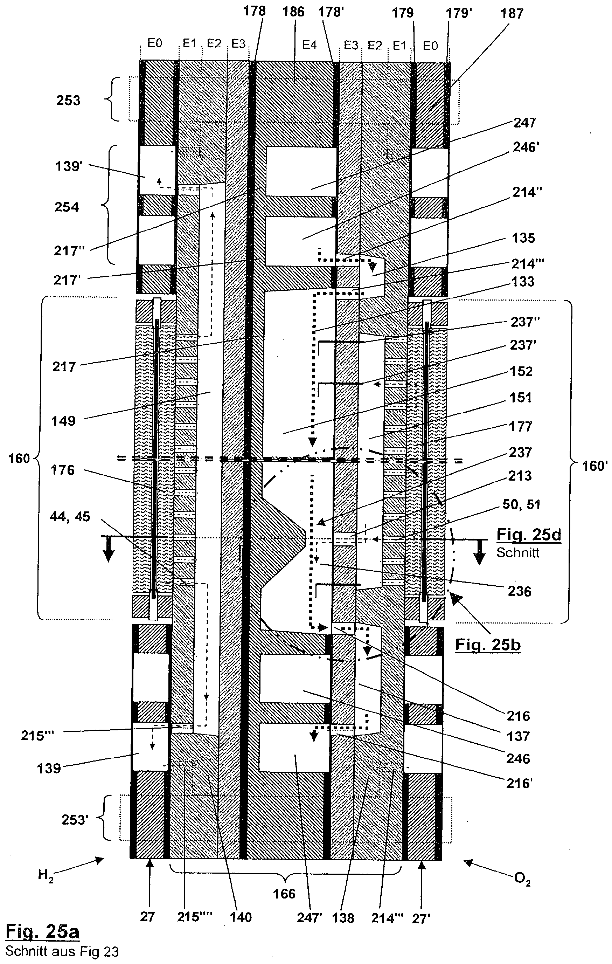

Bei einer derartigen Ausführung werden zwei verschiedene in ihrer Struktur ähnliche Kühl- und Medienmodule in einem Zellenstapel 1 verbaut. Auf einer Seite einer MEA 4 ist ein H₂ Kühl- und Medienmodul und auf der anderen Seite ein O₂ Kühl- und Medienmodul angeordnet. In der Modulmitte des Kühl- und Medienmoduls KMM befindet sich die Kühlmediumführung und eine Potentialtrennung (elektrisch, in der Zellenebene 27), wenn die Zellen 2 im Zellenstapel 1 parallel verschaltet werden oder wenn eine Zelle 2 in seriell verschaltete Teilzellen 173 aufgeteilt ist, wie weiter hinten gezeigt wird. Die Stromweiterleitung von einer Zelle 2 zur nächsten 2' wird bisher vorzugsweise mit Stromfahnen bewirkt, während nach der vorliegenden Lösung die Strompfadzonen 80, 80' mit integrierten Strompfaden 81, 81' vorgesehen werden, was in Figur 1 und Figur 4 angedeutet ist. Die Führung des Kühlmediums 66 kann von Zelle 2 mit KMM 3 zu Zelle 2' mit KMM 3' alternieren, das heißt, die Fließrichtung des Kühlmediums 66 im ersten KMM ist dann entgegengesetzt zur Fließrichtung des nächsten, was zu einer gleichmäßigen Auskopplung der Prozesswärme aus dem Zellenstapel 1 und damit zu einer gleichmäßigen Temperaturverteilung im Zellenstapel 1 führt. Dies trifft grundsätzlich für die Anordnungen in Figuren 3 und 4 zu. Ein weiterer Vorteil besteht darin, das die Lösung nach Fig. 4 die Kühlkanälen 65 und die Mikrokanälen 64 für das Ausströmen von O2 in Stapelachse fluchtend hintereinander angeordnet werden können, mit daraus resultierenden Möglichkeiten für die weitere vorteilhafte Gestaltung des Stapels, wie dies beispielhaft in Fig. 25a und folgenden Figuren beschrieben wird.

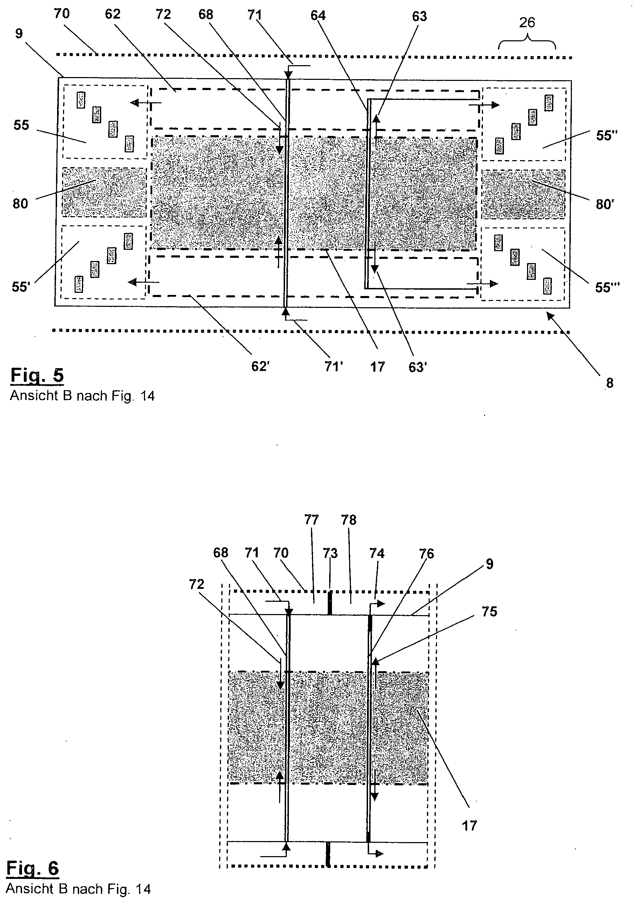

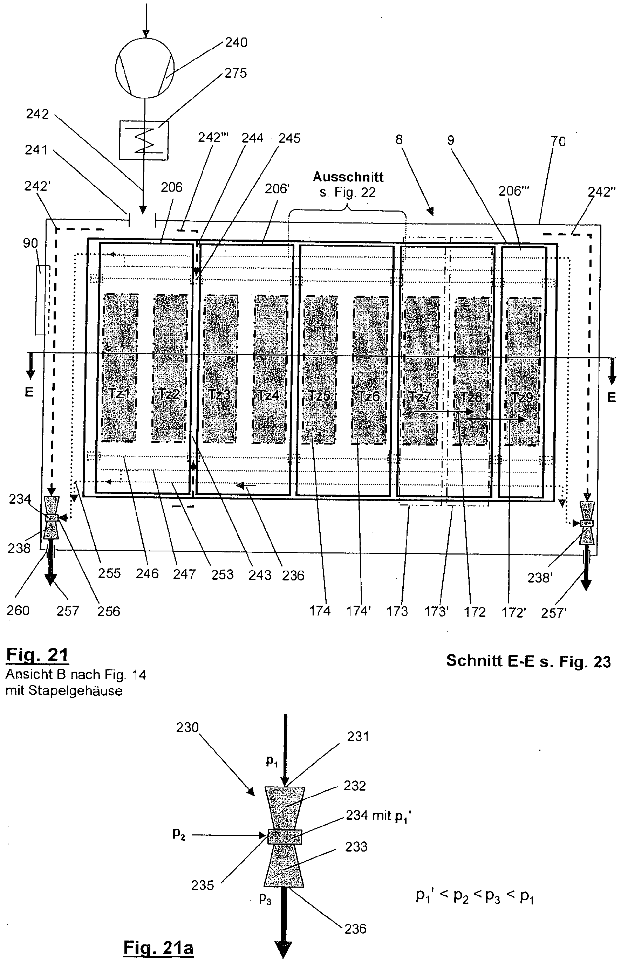

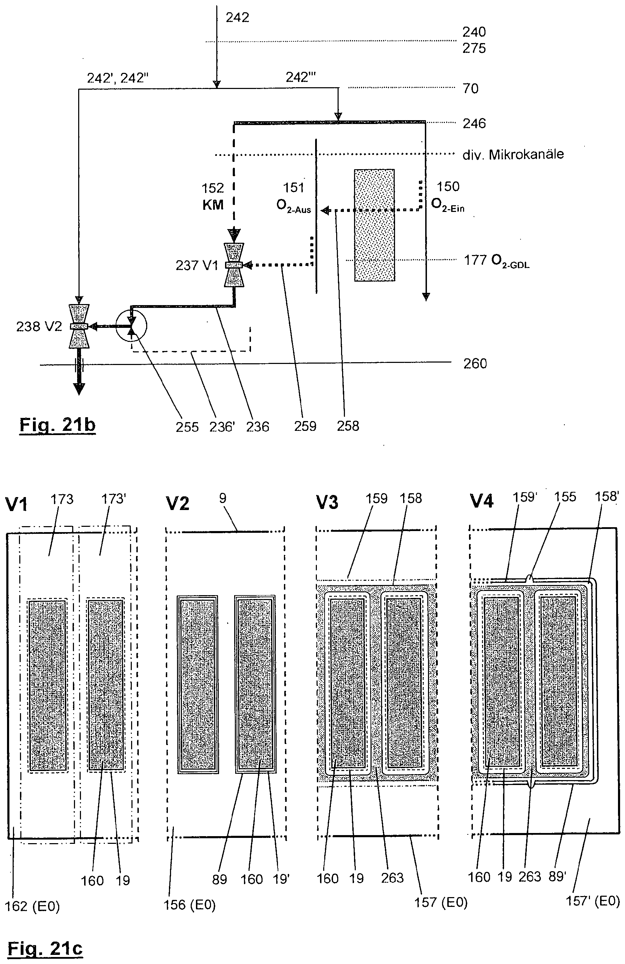

Figur 5 gibt auch die Ansicht B nach Fig. 14 wieder und zeigt eine Variante einer Struktur der Gasführung, wobei der Sauerstoff von außen über den Stapelrand 9 zugeführt werden kann, was bauliche Vorteile aufweist. Gezeigt sind in Figur 5 der O₂-Mikrokanal Einströmung 68, der bis an den Stapelrand 9 geführt ist, wobei das Stapelgehäuse 70 zur Führung von Kühlluft, Vorwärmung von Sauerstoff und für einen optimalen Stapelschutz besonders geeignet ist. 62 und 62' sind horizontale Querkanalzonen für H₂, O₂ und Kühlmedium, das in Figur 5 nicht eingezeichnet wurde. Mit 71 ist die Luft bezeichnet, die in den Zellenstapel 1 einströmt. Sie strömt als Luft 72 in den Mikrokanal 68 in den Bereich der Reaktionsfläche 17 ein, um von dort dann über Mikrokanäle 64, Querkanäle in den Querkanalzonen 62, 62' und Längskanäle 26 in den Längskanalzonen 55 bis 55'" in die Atmosphäre zu gelangen. Hier ist die vorteilhafte Zuordnung von Funktionen auf die einzelnen Flächenzonen insbesondere die Zonen 80, 80' für die Strompfade 81 bzw. 81' nach Fig. 1 wiedergegeben, wobei in Figur 5 nur die Führung von O₂ gezeigt ist. Vorteilhaft ist, dass für die Bereitstellung der Gehäuseluft 242, wie in Fig. 21 gezeigt, die beim Start erwärmt und während des Betriebs gekühlt werden kann, nur ein Verdichter für Luft (hier nicht gezeichnet) vorgesehen werden muss und die am Stapelrand 9 beginnenden O₂-Mikrokanal Einströmung 68 von beiden Seiten mit Luft 71, 71' angeströmt und mit dem O₂-Mikrokanal Ausströmung 64 O₂ als Kathodengas 63, 63' nach beiden Seiten abgeströmt werden kann, weshalb die Druckverluste auf der Kathodenseite deutlich reduziert werden können.

Figur 6 gibt einen Ausschnitt der Ansicht B nach Fig. 14 wieder und zeigt, das die durch die Luftführung 77 einströmende Luft 71 und die durch die Luftführung 78 ausströmende Luft 74 durch eine Luftseparation 73 zwischen Stapelgehäuse 70 und dem Stapelrand 9 des Zellenstapels 1 getrennt geführt werden. Die einströmende Luft 71 wird durch den Mikrokanal 68 als Luft 72 in den Bereich der Reaktionsfläche 17 geführt und die ausströmende Luft 75 aus dem Bereich der Reaktionsfläche 17 durch den Mikrokanal 76 wieder nach außen, wobei die Mikrokanäle 68 und 76 jeweils bis zum Stapelrand 9 des Zellenstapels 1 reichen, um dann in die Atmosphäre zu gelangen. Figur 6 zeigt im Unterschied zu Figur 5 lediglich eine Luftseparation 73, die es möglich macht, die Gase ohne Quer- und Längskanäle für Sauerstoff im Zellenstapel 1 zu führen. Durch die Luftseparation 73 kann zwischen dem Stapelrand 9 des Zellenstapels 1 und dem Stapelgehäuse 70 ein separater Raum für jede Zelle gebildet werden, in den aus allen Mikrokanälen einer Zelle O₂-Gas einströmt. Aus diesem Raum pro Zelle wird Sauerstoff, d. h. Restluft, Stickstoff und Produktwasser abgeleitet und in einem separaten seitlichen Kanal gesammelt und abgeführt. Die Mikrokanäle 68 und 76 werden von beiden Seiten angeströmt bzw. abgeströmt, mit Vorteilen, die schon mit Fig. 5 beschrieben wurden.

Die Figur 7 zeigt den Schnitt C "Einströmung" nach Fig. 2. Bei der aus Figur 7 zu ersehenden Ausbildung des KMM 3 und der Zellenebenen 18, 18' mit den Membranelektrodeneinheiten 4, 4', den Stütz- und Dichtelementen 16, 16' und angedeutet, dem Kühlsegment 32 mit der Zone 33 für Kühlmikrokanäle, wird die Einströmung der Gase H₂ und O₂ gezeigt. Es ist ersichtlich, dass alle Gasmikrokanäle z.B. 40 und 46 von beiden Seiten aus an- bzw. abgeströmt werden können. Das gleiche gilt auch für die Gasquerkanäle, z.B. 102. Deutlich ist, dass O₂ über eine Mikrokanalverlängerung 107, die am Stapelrand 9 beginnt, in der Ebene E0 einströmt und weiter über die Gasöffnung 105 in der Ebene E1 in den Mikrokanal 46 in der Ebene E2, wobei mit 106 die Sauerstoffführung von E0 nach E2 bezeichnet ist. Über die schon erwähnte Mikrokanalverlängerung 107 kann dann der Sauerstoff in die Ebene E0 gelangen, wobei hier für die einströmende Luft das Bezugszeichen 108 verwendet ist. Genau gesagt, strömt der Sauerstoff O₂ 108 vom Stapelrand 9 über die Mikrokanalverlängerung 107, mit der Gasführung 106 durch eine oder mehrere Gasöffnungen 105 in den Mikrokanal 46 in der Ebene E2, um dann über die Mikrobohrungen 47 als O₂ 42 verteilt auf die Gasdiffusionslage 13 geführt zu werden.

Das Wasserstoffgas H₂ strömt aus dem Querkanal 102 in der Ebene E4 über eine oder mehrere Gasöffnungen 100 in der Ebene E3 in den Mikrokanal 40 in der Ebene E2, wobei 101 die Wasserstoffgasführung von E4 nach E2 verdeutlicht. Genau gesagt, strömt der Wasserstoff über den Querkanal 102 und eine oder mehrere Gasöffnungen 100 in die Mikrokanäle 40, um dann über die Mikrobohrungen 41 verteilt auf die Gasdiffusionslage 11 geführt zu werden.

Die Figur 8 zeigt den Schnitt D "Ausströmung" als Variante 1 nach Fig. 2. Bei der aus Figur 8 zu ersehenden Ausbildung des KMM 3 und der Zellenebenen 18, 18' mit den Membranelektrodeneinheiten 4, 4', den Stütz- und Dichtelementen 16, 16', dem Stapelrand 9 und angedeutet, dem Kühlsegment 32 mit der Zone 33 für Kühlmikrokanäle, wird die Ausströmung der Gase H₂ und O₂ gezeigt. Figur 8 zeigt eine einfache Sauerstoffausströmung, wobei das Kathodengas 51 über die Mikrobohrung 50 in der Ebene E1 und den Mikrokanal 49 in der Ebene E2 durch die mit 115 bezeichnete eine oder mehrere Gasöffnungen für O₂ in der Ebene E1 in den Querkanal 117 in der Ebene E0 ausströmt, wobei 116 die Führung des Kathodengases von E2 nach E0 verdeutlicht.

Weiter zeigt Figur 8 eine ebenso einfache Wasserstoffführung, wobei der Wasserstoff 45 über die Mikrobohrung 44 in der Ebene E1 und den Mikrokanal 43 in der Ebene E2 durch die mit 110 bezeichnete eine oder mehrere Gasöffnungen für O₂ in der Ebene E3 in den Querkanal 112 in der Ebene E4 erfolgt, wobei 111 die Wasserstoffführung von E2 nach E4 verdeutlicht. Je nach Bauart und Gasströmung werden zur Weiterleitung von Gas zwischen Mikrokanälen und Querkanälen oder Verbindungskanälen eine oder mehrere Gasöffnungen vorgesehen, sowohl für die Ein- und Ausströmung von Gasen, H₂ und O₂. Dies gilt grundsätzlich auch für die folgenden Darstellungen.

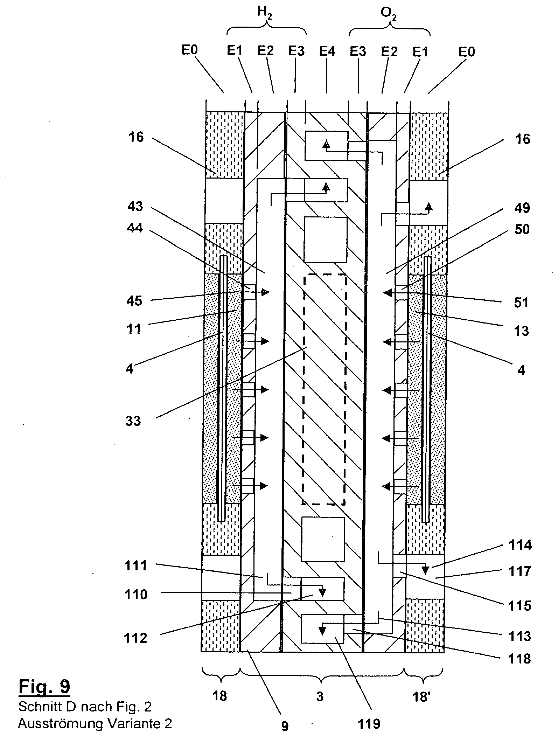

Die Figur 9 zeigt den Schnitt D "Ausströmung" als Variante 2 nach Fig. 2. Bei der aus Figur 8 zu ersehenden Ausbildung des KMM 3 und der Zellenebenen 18, 18' mit den Membranelektrodeneinheiten 4, 4', den Stütz- und Dichtelementen 16, 16', dem Stapelrand 9 und angedeutet, dem Kühlsegment 32 mit der Zone 33 für Kühlmikrokanäle.

Die Figur 9 zeigt eine weitere Ausführung für die Ausströmung der Gase H₂ und O₂, wobei hier eine zweifache O₂-Ausströmung vorgesehen ist, um auf diese Art und Weise für die O₂-Ausströmung einen deutlich größeren Querschnitt zur Verfügung zu stellen. Auch hier strömt das mit 45 bezeichnete H₂ aus der H₂-GDL 11 über die Mikrobohrungen 44 in den H₂-Mikrokanal 43, um über die Gasöffnung 110 für die H₂-Ausströmung in der Ebene E3 in den Querkanal 112 in der Ebenen E4 zu gelangen. Insofern stimmt die H₂-Führung 111 des Wasserstoffs bei dieser Lösung mit der vorbeschriebenen überein.

Die Kathodenluft 51 wird dagegen aus der O₂-GDL 13 über die Mikrobohrung 50 in der Ebene E1, den Mikrokanal 49 in der Ebene E2 und die Gasöffnung 118 in der Ebene E3 in den Querkanal 119 in der die Ebene E4 geführt. Weiter erfolgt die Abführung der Kathodenluft 51 aus dem Mikrokanal 49 über die Gasöffnung 115 in Ebene E1 in den Querkanal 117. Mit 113 wird die O₂-Führung aus der Ebene E2 in die Ebene E4, mit 114 die O₂-Führung aus der Ebene E2 in die Ebene E0 bezeichnet, jeweils in Richtung Atmosphäre, somit also zwei Wege für die O₂-Ausströmung. Vorteilhaft ist, dass auf diese Weise der Gesamtquerschnitt der Kanäle für die O₂-Ausströmung deutlich vergrößert wird, mit einer Abnahme der Strömungsverluste in den Kanälen, durch welche die Ausströmung von O2 erfolgt.

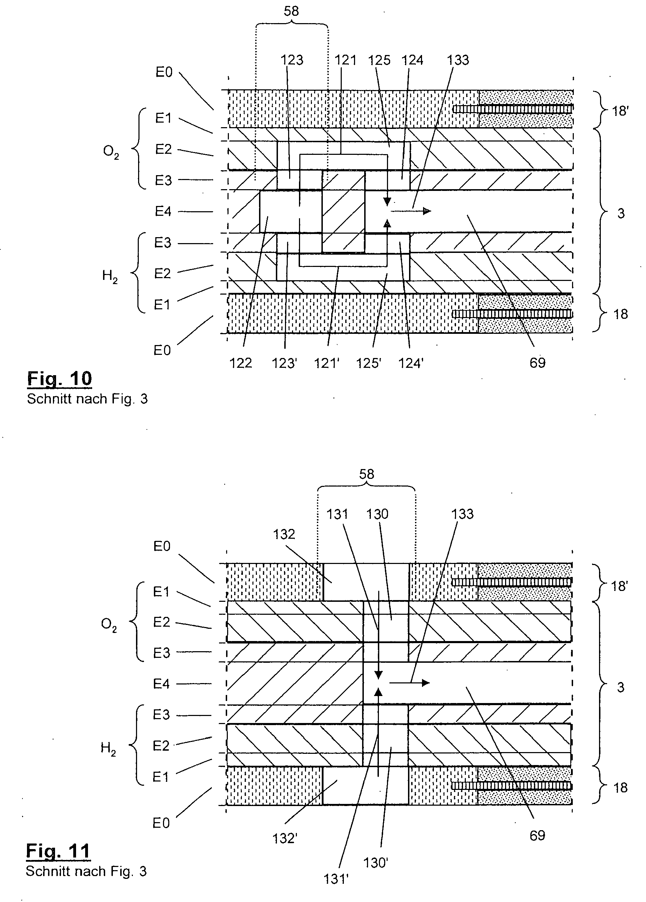

In den Figuren 10 und 11 werden zwei Teilschnitte nach Fig. 3 als Varianten der Kühlmedienführung wiedergegeben und zwar beispielhaft mit horizontaler Orientierung des Kühlmediummikrokanals 69, 69' nach Figur 3, wobei das KMM wieder mit 3 und die Zellsegmente mit 18, 18' bezeichnet werden. Gezeigt ist, dass im Bereich der Führung des Kühlmediums dieses aus Kühlmedium-Längskanälen 126 nach Figur 3 und Querkanälen in Querkanalzonen 58, 58' in die Kühlmediummikrokanäle 69, 69' vorgenommen wird. Das Ausströmen erfolgt analog. Hier sind die Querkanalzonen 58,58' nicht nur in der Ebene E4, sondern alternativ auch in der Ebene E0 angeordnet, was für die weitere Ausführung und konstruktive Gestaltungsfreiheit Vorteile mit sich bringt. Dabei werden die Kühlmediummikrokanäle 69 für das Kühlmedium 133 von 2 Seiten angeströmt. Die hier nicht gezeigte Ausströmung des Kühlmediums 133 erfolgt in analoger Weise, wie die Einströmung, so wie dies für die Ein- und Ausströmung vertikal geführter, hier aber nicht gezeichneter Kühlmediummikrokanäle, ebenfalls in analoger Weise erfolgt.

In Figur 10 erfolgt die Kühlmediumführung 121, 121' über den Querkanal 122 in der Ebene E4 und die Kanalöffnung 123, 123' in E3 in den Verbindungskanal 125, 125' in E2 und weiter, über die Kanalöffnung 124, 124' in E3 in den Mikrokanal 69 in E4, wobei mit 133 das Kühlmedium im Mikrokanal 69 bezeichnet wird.

In Figur 11 erfolgt im Kühl- und Medienmodul die Kühlmediumführung 131, 131' vom Querkanal 132, 132' in der Ebene E0 über die Kanalöffnung 130, 130' in den Ebenen E1, E2 und E3 in den Mikrokanal 69, wobei mit 133 das Kühlmedium im Mikrokanal 69 bezeichnet wird.

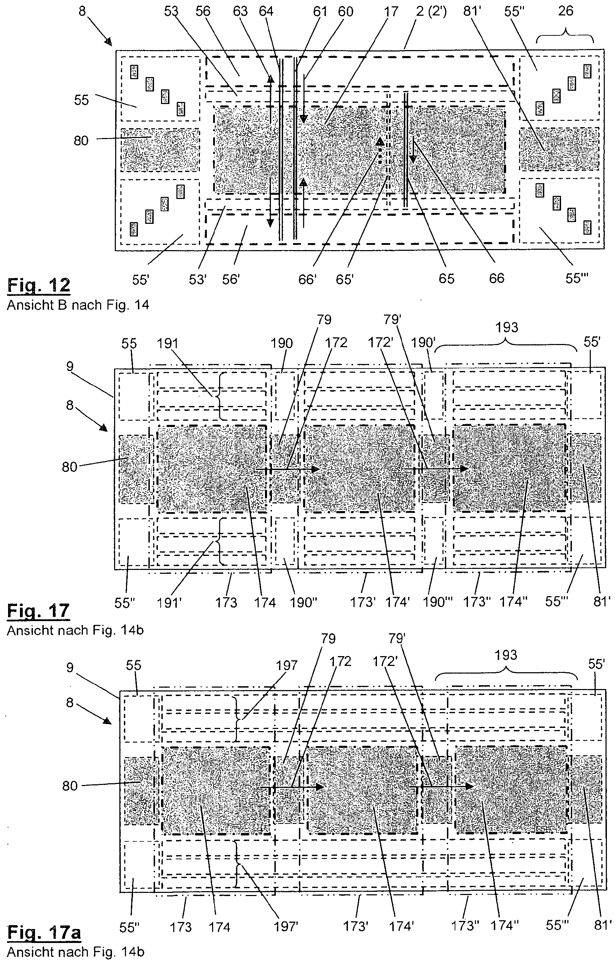

Figur 12 gibt die Ansicht B nach Fig. 14 wieder und zeigt eine weitere Variante der Struktur funktionaler Zonen im Stapelquerschnitt 8, mit einer Reaktionsfläche 17 (mit einer Zelle 2 in der Ebene E0) innerhalb des Stapelquerschnitts 8. Diese Struktur zeigt eine vertikale Orientierung der Kühlmediummikrokanäle 65, 65' und eine horizontale Orientierung der Zone 53, 53' für die Kühlmediumquerkanäle, während das vertikal geführte Kühlmedium mit 66, 66' bezeichnet ist. Wie schon in Fig. 3 gezeigt, wird mit Kühlmedium 66' angedeutet, das von Zelle 2 zu Zelle 2' (nach Fig. 1) die Strömungsrichtung des Kühlmediums wechseln kann, also in Zelle 2 das Kühlmedium 66 und in der dahinter angeordneten Zelle 2' das Kühlmedium 66', wobei der gezeichnete Pfeil die Strömungsrichtung des Kühlmediums vorgibt. Die Mikrokanäle 65 und 65' können also derart eingerichtet werden, dass die Kühlmedien 66, 66' darin im Gegenstrom strömen, indem die Strömungsrichtung des Kühlmediums von Zelle 2 zu Zelle 2' um 180° wechseln kann, damit über den Zellenquerschnitt 8 eine gleichmäßige Auskopplung bzw. Ableitung der Prozesswärme möglich wird.

Dies gilt grundsätzlich auch in analoger Weise für horizontal geführte Kühlmediummikrokanäle.

Die Strompfadzonen 80, 80' für Strompfade 81, 81' sind seitlich angeordnet, ohne dass zwischen der Reaktionsfläche 17 und den Strompfadzonen 80, 80' bzw. den Strompfaden 81, 81' eine störende Kanalstruktur vorhanden ist.

Das Zuströmen der Gase H₂ und O₂, mit 60 bezeichnet, erfolgt über Mikrokanäle, die prinzipiell dem Mikrokanal 61 entsprechen und das Ausströmen der Gase, mit 63 bezeichnet, über Mikrokanäle, die prinzipiell dem Mikrokanal 64 entsprechen und die Zonen 56 und 56' mit den Querkanälen zur Gasver- und - entsorgung sowie den Zonen 55, 55', 55", 55'" mit den Längskanälen. Vorteilhaft ist bei dieser Variante, dass die Medienzuführung und -abführung (H2, O2 und KM) ausschließlich über die Längskanäle 26 in den Längskanalzonen 55, 55', 55", 55'" erfolgt und ein Stapelgehäuse 70, wie in Fig. 5 gezeigt, für die Luftzuführung nicht erforderlich ist.

Die Figur 13 gibt einen Ausschnitt nach Fig. 1 wieder. In der Figur 13 mit den Varianten V1, 2, 3, 4, 5 und 6 ist gezeigt, welche Ebenen und damit welche Folien 34 - 37, wie in Fig. 13 Variante V1 angedeutet, mit ihren zugeordneten Funktionen zu einem Bauteil zusammengefasst werden können, je nach Bauart des Stapels oder des Kühl- und Medienmoduls 3, 163, 166 und/oder den Erfordernissen des Werkstoffs, der Potentialtrennung, Kanalabdeckung und der Fertigungstechnik, in analoger Weise für die O2- und H2-Seite.

Mit 3 ist ein KMM bezeichnet und mit 18 die Zellenebene E0. Die Folien 34-37 werden vorzugsweise aus Aluminium, mit sehr guter elektrischer Leitfähigkeit und elektrochemischer Beständigkeit, sowie geringem elektrischem Übergangswiderstand an den Oberflächen gefertigt. In den Strom führenden Bereichen des KMM 3 werden die Fügeebenen 38 mit guten elektrischen Eigenschaften ausgestattet, wobei auf den Strom gut leitende innige metallische Fügeebenen 38, 38' Wert gelegt wird, elektrisch sehr gut leitend sind und einen geschweißten, gesinterten, gelöteten, gebondeten oder durch Umformung oder Diffusionseffekte erzeugten Charakter aufweisen können. Fügeebenen 38, die nicht der Strom Weiterleitung dienen, und/oder mindestens eine Potentialtrennung 178, 178' aufweisen, können auch geklebt werden, mit der Folge, dass die betreffenden geklebte Fügeebene 38 die Potentialtrennung 178 in ihrer Wirkung ergänzt, insbesondere die Ebene E4 betreffend.

Vorteilhaft sind geklebte/verbundene Fügeebenen 38 im KMM 3, weil sie eine kostengünstige und gleichzeitig präzise Fertigung der KMM 3 erlauben, die das mit 29 bezeichnete Maß **S_{KMM} +/- dₛ** betreffen, indem Dickenunterschiede der verbauten Ausgangsmaterialien (Folien und Potentialtrennungen) durch die Klebung ausgeglichen werden, wobei sich automatisch eine sehr geringe Maßabweichung **ds** ergibt, bezogen auf die Dicke **S_{KMM}** eines KMM 3, 163, 166 im Bereich des gesamten gefügten Stapelquerschnitts 8, weil die Genauigkeit **(+/- ds)** der gefertigten KMM dann weniger von den Maßabweichungen der Ausgangsmaterialien sondern von der Präzision der Fertigungseinrichtungen und des Fertigungsprozesses abhängt. Zur Verdeutlichung wurde in Fig. 13 Variante V6 beispielhaft das Maß 29 **S_{KMM} +/-ds** eingetragen. Wichtig ist dabei die geringstmögliche Dickenabweichung +/- **ds**, während das Maß **S_{KMM}** nicht dieselbe Bedeutung hat. Je geringer die Abweichung **ds** über dem gesamten Stapelquerschnitt 8 realisiert werden kann, umso gleichmäßiger lässt sich die MEA-Kompression 20 nach Fig. 1a einstellen und damit eine gleichmäßige Reaktion auf der gesamten Reaktionsfläche 17 nach Fig. 1a und beispielsweise Fig. 12 oder Fig. 17 erzielen. Insofern wird ein KMM gezeigt, das in großen Serien und vergleichsweise geringen Kosten gefertigt werden kann und für den Betrieb der Zellen 2, 2' bzw. Teilzellen 173, 173' besonders günstige Betriebsbedingungen erlaubt.

Aus Figur 13 Variante V1 sind die verschiedenen Fügeebenen 38 erkennbar, über die insgesamt sieben Folien in sechs Fügeebenen miteinander zu verbinden sind. In Figur 13 V1 werden am Beispiel der O₂-Seite eines KMM 3 die Strukturen für Kanäle und Stege gezeigt, wobei dies auch in analoger Weise für die H₂-Seite und die anderen Varianten V2-V6 gilt. Typisch sind der Mikrokanal 46 und 47 die Mikrobohrung für die Einströmung von Gas 48, mit dem Mikrokanal 49 und der Mikrobohrung 50 für die Ausströmung von Gas 51, getrennt durch den Steg 52 zwischen den benachbarten Mikrokanälen für Gas, während mit 65 beispielhaft vertikal angeordnete Mikrokühlkanäle gezeigt werden, getrennt durch Stege 67.

Bei der Variante V2 ist lediglich noch eine Folienanzahl von vier vorgesehen und entsprechend drei Fügeebenen 38, ähnlich wie auch in den Varianten V3 und auch V4. In V2 sind die Ebenen E1 und E2 zu einer Folie mit Mikrobohrungen 47 und Mikrokanälen 46 für Gase und die Ebenen E3 und 1/2 E4 zu einer Folie mit Mikrokanälen 65 für das Kühlmedium jeweils zu einem Bauelement zusammengefasst und in den 3 Fügeebenen 38 miteinander verbunden.

Während bei der Variante V2 die Ebenen E1 mit E2 und die Ebenen E3 mit E4 + ½ E4 zu jeweils einer Folie zusammengefasst sind, werden nach der Kombination nach Variante V3 hier 2 Folien, die aus den Ebenen E2 + E3 + ½ E4 zu einer Folie zusammengefasst wurden, mit der Ebene E1 als Folie in den 3 Fügeebenen 38 miteinander verbunden.

Nach Variante V4 sind ebenfalls die Ebenen E2, E3 und E4 zu einer Folie zusammengefasst, wobei hier die Ausbildung der Stege 67, 67' alternierend bzw. ineinander verschränkt vorgesehen ist, während bei der Variante V3 die Teilung genau mittig in der Ebene E4 vorgesehen ist.

Variante V5 zeichnet sich dadurch aus, das mindestens eine Potentialtrennung 178 in die Ebenenstruktur eingefügt ist. Es werden die Ebenen E1 und E2 zu einer Folie mit Mikrobohrungen und Mikrokanälen für das Gas zusammengefasst und die Ebene E3 mit der Ebene E4. Zwischen den Ebenen E2 und E3 dieser beiden Bauteile ist eine Potentialtrennung 178 angeordnet, die z.B. aus einer elektrisch nicht leitenden, elektrochemisch und thermisch stabilen Folie, z.B. aus Kunststoff besteht und in diesem Verbund auch als Kanalabdeckung dient, indem sie Funktionen der Ebene E3 übernimmt. Das aus den Ebenen E3 + E4 + E3 aufgebaute Bauteil ist mit mäandernden Kanalstegen 67" und verbindenden Kanalböden 217 in der Ebene E3 ausgestattet, aus fertigungstechnischen Gründen und um eine besonders stabile (montagegerechte) Struktur aus Ebene E4 und Potentialtrennung 178 zu schaffen, die eine gleichmäßige Wärmeauskopplung aus der Zelle begünstigt.

Variante V6 zeichnet sich dadurch aus, das mindestens eine Potentialtrennung 178' in die Ebenenstruktur eingefügt ist. Es werden die Ebenen E1 und E2 zu einer Folie mit Mikrobohrungen und Mikrokanälen für das Gas zusammengefasst und mit der Ebene E3 als Folie zu einem Bauteil verbunden, während zwischen Ebene E3 und E4 eine Potentialtrennung angeordnet wird, die z.B. aus einer elektrisch nicht leitenden, elektrochemisch und thermisch stabilen Folie aus Kunststoff besteht. Die Folie der Ebene E4 ist mit geraden Kanalstegen 67'" ausgestattet, während die Ebene E3 insbesondere als Kanalabdeckung dient.

Potentialtrennungen 178 können in analoger Weise auch in den oben gezeigten Varianten V1, 2, 3, 4 eingefügt werden.

Figur 14 stellt die in Figur 1 bezeichnete Ansicht A eines Zellenstapels 1 dar. Zu erkennen sind wieder die Stapelachse 7 und der Zellenstapel 1 mit mehreren Zellen 2, 2', 2" und Kühl- und Medienmodulen 3, 3' (KMM). Mit 18, 18' ist das Zellsegment (E0) nach Fig. 1a bezeichnet, während der Zellenstapel 1 durch Endplatten 5 und 6 begrenzt ist. Mit 7 ist die Stapelachse gekennzeichnet. Gezeigt ist die Struktur des Zellenstapels 1 der Zellen 2, 2', 2" mit Zellsegmenten 18, 18' und Kühl- und Medienmodulen 3, 3', die mindestens einen in den Zellenstapel 1 integrierten Strompfad 81 bzw. 81' ohne Bipolarplatten aufweisen. Diese integrierten Strompfade 81 bzw. 81' ersetzen die bekannten Stromfahnen, die außerhalb des Stapelquerschnitts angeordnet waren und angeordnet werden mussten. Mit 55 sind die Längskanalzonen angedeutet, mit 30 das Gassegment für H₂, mit 31 das Gassegment für O₂, mit 32 das Kühlsegment für KM und mit 33 die Zone für Kühlmikrokanäle der Zellen 2, 2', 2", ohne Stapelgehäuse 70.

Mit 91 ist das Spannsystem bezeichnet, welches die Verspannung aller im Stapel angeordneten Ebenen E0, 1, 2, 3, 4, Segmenten 18, 30, 31, 32, 180, 181, 182 und Endplatten 5, 6 erlaubt und mit elastischen Strukturen ausgestattet ist, die bei jeder Stapeltemperatur eine möglichst gleichmäßige MEA-Kompression 20 sicherstellt. Besonders vorteilhaft ist die Aufteilung der Reaktionsfläche 17 einer Zelle 2 in viele Teilreaktionsflächen 174, 174', die den KMM-Elementen 183, 184, 185, 205, 206 zugeordnet sind. Zwischen den KMM-Elementen 183, 184, 185, 205, 206 sind aus Gründen der elektrischen Potentialtrennung Abstände vorgesehen, die zum Teil auch als Luftkanal 243 genutzt werden.

Diese Abstände bieten den Raum zur Aufnahme weiterer Spannelemente, die dann, über den Stapelquerschnitt 8 verteilt, die Verspannung des Stapels 1 über viele Spannpositionen ermöglicht, was besonders vorteilhaft ist, denn Endplatten bauen so sehr leicht und es kann auch bei großen Stapelquerschnitten 8 eine gleichmäßige MEA-Kompression 20 bei allen Stapeltemperaturen eingestellt werden. Die Spannsysteme bauen sehr schlank und benötigen nur eine geringe Fläche, da die eigentlichen Spannglieder aus einer drahtähnlichen Struktur gefertigt werden.

Mit Figur 14a wird als Ansicht B nach Figur 14 die prinzipielle Struktur eines Zellenstapels 1 mit Stapelquerschnitt 8, 17 Reaktionsfläche, 62 Zone für Querkanäle, 55 Zone für Längskanäle und die mit 80 bezeichneten integrierten Strompfadzonen im Stapel skizziert, indem hier ein Stapel mit einer ganzen Reaktionsfläche dargestellt ist, also einer Zelle 2 in der Zellenebene 27.

Mit Figur 14b wird als Ansicht B nach Figur 14 die prinzipielle Struktur eines Zellenstapels 1 mit Stapelquerschnitt 8, mit einer Zelle 2, aufgeteilt in Teilzellen 173, 173' in der Zellenebene 27 skizziert und in serieller Verschaltung 172, mit Teil-Reaktionsflächen 174, Zone 62 für Querkanäle, Zone 55 für Längskanäle, integrierte Strompfadzonen 80 am Stapelrand, aber im Stapel und mit den integrierten Strompfadzonen 79 zwischen zwei Teilzellen 173, 173', indem hier ein Stapel 1 mit drei Teil-Reaktionsflächen 174 in einer Zellenebene 27 dargestellt ist.

Die Struktur nach Figur 14a mit einer Reaktionsfläche 17 pro Zelle 2 entspricht vorzugsweise dem Stand der Technik. Nachteilig sind dabei erhebliche elektrische Verluste aufgrund der verhältnismäßig geringen Zellspannung (U = 0,6-0,7Volt) und hohem Strom Iz [A], der pro Zelle 2 fließt. Bei gleicher Leistung einer Zelle 2 stellen sich günstigere Verhältnisse mit reduzierten Verlusten ein, wenn, wie in Figur 14b gezeigt, eine Zelle in mehrere Teilzellen 173 geteilt wird, erkennbar an der in Teilreaktionsflächen 174 aufgeteilten Reaktionsfläche 17, indem die Teilzellen 173 einer Zelle 2 in Reihe geschaltet werden und so eine hohe Zellspannung U[V] bei einem geringeren Strom Iz[A] eingestellt werden kann.

Die Figuren 15 und auch 16 zeigen im Schnitt nach Fig. 1 jeweils einen Stapelausschnitt 10 und eine Reaktionsfläche 17, z.B. nach Fig. 14a, die geteilt ist, wobei diese hierfür eine Teilreaktionsfläche das Bezugszeichen 174 trägt. Es handelt sich um die Teilreaktionsfläche 174 der Teilzelle 173, wobei deutlich wird, dass die in Figur 1 gezeigte Gesamtreaktionsfläche 17 in drei kleinere Teilreaktionsflächen 174 unterteilt ist. Die Stütz- und Dichtelemente 16 werden hier als abgestützte MEA-Struktur in E0 mit 162 bezeichnet. Die zwischen Teil-Zellen 173, 173' die Räume ausfüllenden Strukturen, tragen hier das Bezugszeichen 175. Diesen Teil-Stütz- und Dichtelementen 175, 175' werden hier drei wesentliche Funktionen zugeordnet; nämlich erstens die Stützfunktion, um einen für die Teil-MEA's 160, 160' geeigneten Raum mit definierter Höhe, der die richtige Kompression 20 der Teil-MEA's 160, 160' sicherstellt, zu schaffen; zweitens die Dichtfunktion, die sicherstellt, das die Gasräume jeder Teil-MEA von der nächsten sicher gasdicht getrennt sind, drittens die Isolierfunktion als Potentialtrennung zwischen Teilzellen 173, 173' in der Zellenebene 27, die sicherstellt, das zwischen Teilzellen 173 keine unkontrollierten Leckströme fließen oder zirkulieren. Insofern stellen diese Teil-Stütz- und Dichtelemente 175 auch Potentialtrennungen in der Ebene E0 dar. Mit 19 ist wieder die MEA-Berandung bezeichnet, die hier in die Teil-Stütz- und Dichtelementen 175, 175' bzw. die abgestützte MEA-Struktur in E0 162 integriert ist, weiter erklärt in der später folgenden Figur 21c mit der Variante V1.

Die hier wiedergegebenen Teilstrompfade 169, 169' leiten den Strom 171 in serieller Verschaltung 172 definiert von einer Teilzelle 173 zur nächsten, während die Strompfade 81, 81' den Strom von einer Zelle 2 in der Zellenebene 27 zur nächsten Zelle 2' in der Zellenebene 27' führen. Der Strom wird über den Stromweg 170 durch den Zellenstapel 1 geführt, wobei der Strom mit 171 bezeichnet ist. 10 bezeichnet den Stapelausschnitt und wie schon erwähnt 173 eine der insgesamt hier wiedergegebenen neun Teilzellen 173, 173', 173". Zwischen den einzelnen Teilzellen 173', 173" findet eine Verschaltung durch die Teilstrompfade 169, 169' statt. Strompfade sind geeignete Strom leitende Brücken, also Stromfahnen die in den Zellenstapel 1 integriert werden. In einer Zelle 2 wird nun durch Reihenschaltung 172 einzelner Teilzellen 173, 173' mit deutlich kleinerer Teilreaktionsfläche 174 eine Gesamtspannung pro Zellenebene 27 erzeugt, die etwa dem Mehrfachen der in Figur 14a gezeigten Zelle 2 entspricht. Die Teilzellen 173', 173" sollten möglichst mit geringer Breite ausgeführt werden, damit nämlich viele Teilzellen 173, 173', 173" in der Stapelbreite angeordnet werden können, indem die Reaktionsfläche 17 einer großen Zelle 2 in mehrere schmale Teilreaktionsflächen 174 in der abgestützten MEA-Struktur 162 in der Ebene 0, bzw. in dem nach Fig. 1 definierten Zellsegment 18 in E0, aufgeteilt wird. Dabei sind Teilstrompfade 169 zwischen zwei Teilzellen 173' und 173" vorzugsweise stromleitende Brücken, welche beispielsweise die Ebenen E1 und E2 der Teilzelle 173' mit den Ebenen E1 und E2 der Teilzelle 173" elektrisch verbinden. Vorteilhaft ist weiter, dass bei gleicher Leistung in der Zellenebene 27 ein wesentlich geringerer Gesamtstrom 171 fließt als in einer ungeteilten Zelle mit gleicher Gesamtreaktionsfläche, während sich durch Reihenschaltung bzw. serieller Verschaltung 172 der Teilzellen 173', 173" die Teilspannungen der Teilzellen 173 addieren. Damit werden Spannungsverluste reduziert, die außerhalb des Zellenstapels 1 erforderlichen Leiterquerschnitte für die Stromübertragung und z.B. der Aufwand für Stromwandler. In Figur 15 wird die Orientierung eines Kühl- und Medienmodul 166 mit der Struktur H₂-O₂ für die Teilzellen 173, 173'gezeigt

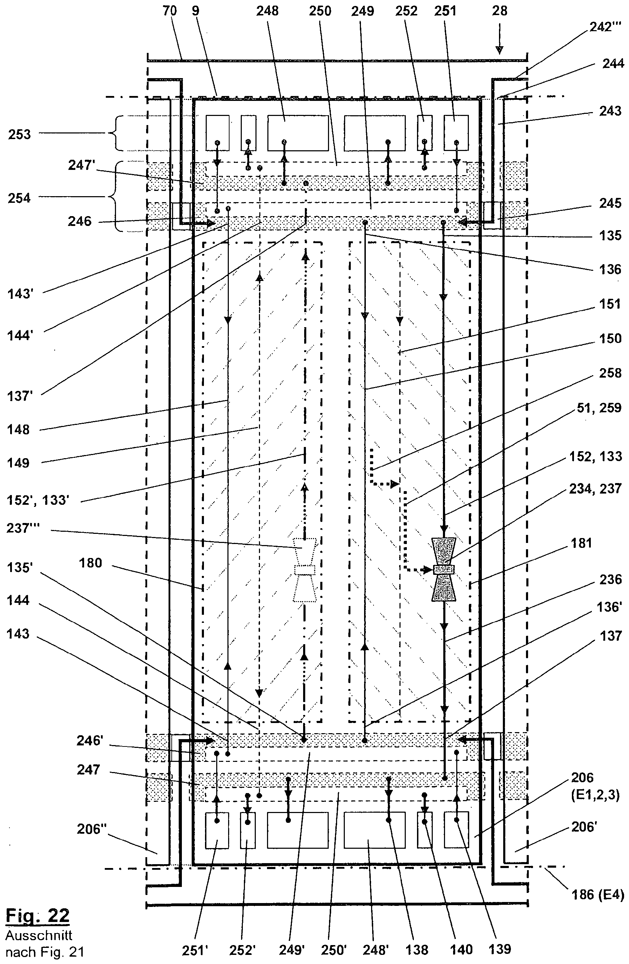

Fig. 15a zeigt im Detail die Teilsegmente 180 für H₂ und 181 für O₂, die zusammen mit einem Teilkühlsegment 182 für KM einen Teil-KMM 167 bilden. Diese Teil-KMM 167, 167' sind alle gleich und rechts und links von jeder Teil-MEA 160 angeordnet. Die hier gezeigte Struktur H₂-O₂ ermöglicht einen einfacheren Aufbau der Strompfade 81 am Stapelrand beim Wechsel des Stroms von einer abgestützten MEA-Struktur 162 in die nächste. Nachteilig ist die Tatsache, das in der Ebene einer Teilzelle 173 die Teilsegmente 180 für H2 und 181 für 02 nicht gleich sind, wodurch die Gasführung in diesen KMM für die Teilzellenstrukturen 163, 166 besondere Vorkehrungen erfordert, wie dies insbesondere in Figur 22 gezeigt wird. Mit Figur 15a werden in Stapelachse 7 gestapelte Teilzellen 173' dargestellt und die jeder Teilzelle zugeordneten Teilsegmente 180 für H₂ und 181 für O₂ die zusammen jeweils einen Teil-KMM 167 bilden, wobei die an eine Teil-MEA 160 rechts und links gefügten Teilsegmente wechselnd H₂ oder O₂ führen.

Mit 170 ist der Stromweg für den Strom 171 durch jede Teilzelle bezeichnet und mit 178 Potentialtrennungen in den Teil-KMM 167, 167'. 171' und 171" geben die Teilspannungen u1 und u2 der Teilzellen 173', 173", die in serieller Verschaltung 172 miteinander verschaltet sind, an. In einem Teil-KMM 167 dieser Ausführung strömen demnach auf der einen Seite H₂ und auf der anderen O₂, mit einer oder zwei Potentialtrennungen 178 zwischen H₂- und O₂-Seite in der Zellenebene 27.

Mit Figur 15b wird gezeigt, dass 161 eine Teilmembran und 176, 177 Teilgasdiffusionslagen für H₂ und O2 der Teil-MEA 160 mit der TeilReaktionsfläche 174 sind, d. h. also für eine der Teilzellen 173, 173', wobei diese alle gleich ausgebildet sind. Die mit 160 bezeichneten Teil-MEA sind in der Ebene E0 angeordnet. Entsprechendes gilt auch für Fig. 16.

Figur 16 zeigt im Schnitt die gleiche Ausbildung wie Figur 15, nur dass im Unterschied dazu hier die KMM 163, 163' mit der Struktur H2-H2 und O2-O2 verbaut werden. Fig. 16a zeigt detailliert die Orientierung des Teil-KMM 164 mit der Struktur H₂-H₂ der Teilsegmente 180, 180' und des Teil-KMM 165 mit der Struktur O₂-O₂ der Teilsegmente 181, 181' gezeigt wird. Mit den Teilsegmenten 180 und181 und dem Teilkühlsegment für KM 182 wird das KMM 163 gebildet Die hier gezeigte Struktur H₂-H₂ und O₂-O₂ führt zu einem aufwändigeren Aufbau der Strompfade 81 am Stapelrand beim Wechsel des Stroms von einer Zellenebene 27 der Zelle 2 in die nächste 27' der Zelle 2'. Allerdings findet hier der Wechsel des Stroms i, mit 171 bezeichnet, von einer Zellenebene 27 zur nächsten nicht mehr innerhalb eines KMM statt, wie dies in Fig. 15 mit dem KMM 166 gezeigt wurde, sondern zwischen zwei KMM 163 und 163', wie mit dem Stromweg 170 gezeigt wird. Mit 173, 173", 173" sind die Teilzellen bezeichnet, in serieller Verschaltung 172, mit 174 eine Teilreaktionsfläche und mit 171' und 171" die Spannungen an einer Teilzelle. Strompfade 169 zwischen zwei Teilzellen 173 sind mit den entsprechenden Strompfaden in Fig. 15 identisch.

Mit Figur 16a werden in Stapelachse 7 gestapelte Teilzellen 173 dargestellt und die jeder Teilzelle zugeordneten Teilsegmente 180 und 180' für H₂ sowie 181 und 181' für O₂, die zusammen mit einem Teilkühlsegment für KM 182 jeweils einen Teil-KMM 164' für H₂ bzw. 165 für O₂ bilden, wobei die an eine Teil-MEA 160 rechts und links gefügten Teilsegmente wechselnd H₂ oder O₂ führen. In einem Teil-KMM 164 dieser Ausführung strömen demnach auf beiden Seiten H₂ und in einem Teil-KMM 165 auf beiden Seiten O₂, mit einer oder zwei Potentialtrennungen 178 zwischen H2-H2-Seite bzw. O₂-O₂-Seite in der Zellenebene 27. An eine Teil-MEA 160 angefügte Teil-KMM 164 und 165 sind also nicht gleich, wie Figur 15 zeigt, sondern untereinander verschieden. Nur die Teilsegmente 180 für H2 und 181 für O2 in einer Teilzelle 173' sind gleich. Vorteilhaft ist die Tatsache, das in der Ebene einer Teilzelle 173 die Gasräume gleich sind, wodurch die Gasführung im Teil-KMM 164', 164" keine besonderen Vorkehrungen erfordert. Mit 171 ist wieder der Stromweg bezeichnet, mit 178 Potentialtrennungen und mit 160 die Teil-MEA einer Teilzelle.

Die Figuren 15 und auch 16 zeigen z. B. drei Teilzellen 173, 173', 173" in einer Ebene 27, die nächsten ggf. in einer anderen angeordnet. Die Figuren 15a und auch 16a zeigen weiter, die in der KMM-Ebene 28 vorgesehene Potentialtrennung 178, die den elektrischen Potentialausgleich zwischen Teilzellen im Teilzellenstapel verhindert, indem z.B. zwischen den Ebenen E2 und E3 eine isolierende Schicht vorgesehen wird oder die Ebenen E3 und E4 aus isolierendem Material gefertigt werden.

Figur 17 gibt den Stapelquerschnitt 8 als eine Ansicht nach Fig. 14b wieder und eine Reaktionsfläche 17, die geteilt ist, hier z. B. in drei Teilreaktionsflächen 174, 174' und 174", wobei die drei dazu gehörigen Teilzellen 173, 173', 173", als Querschnitt 193 gezeigt, in einer Ebene vorhanden sind, in serieller Verschaltung 172. Die Zonen 55, 55', 55" und 55'" für die Längskanäle sind am Stapelrand 9 für Gase H₂ und O₂ und Kühlmedium wiedergegeben, jeweils mit Ein- und Ausströmung. Die Zonen 190, 190', 190" und 190'" für die Längskanäle sind zwischen den Teilzellen angeordnet, für Gase H₂ und O₂ und Kühlmedium wiedergegeben, jeweils mit Ein- und Ausströmung. Die Zonen für die Quer- und Verbindungskanäle, jeweils mit Ein- und Ausströmung, tragen die Bezugszeichen 191, 191' und sind den einzelnen Teilzellen 173 zugeordnet. 174 ist die Reaktionsfläche einer der Teilzellen 173, während 193 den Querschnitt einer Teilzelle bezeichnet. Die Strompfadzonen 80, 80' für Strompfade nach vorherigen Darstellungen liegen am Stapelrand 9 und die integrierten Strompfadzonen 79, 79' für Teilstrompfade im Stapel zwischen den Teilzellen 173, 173'. Möglich ist eine Variante 1 für das Kühl- und Medienmodul mit alternierend angeordneten Gassegmenten H₂ und O₂ oder eine Variante 2 mit nicht alternierend angeordneten Gassegmenten H₂ - H₂ bzw. O₂ - O₂. Die mit den Längskanälen über Verbindungskanäle verbundenen Querkanäle sind in Querkanalzonen 191, 191' angeordnet, wie auch in Figuren 7, 8, 9, 25 und 25a wiedergegeben, zur Ver- und Entsorgung einer Teilzelle 173, sind verhältnismäßig kurz. Aus diesem Grunde wird in den meisten Fällen die einfache An- und Abströmung der Querkanäle genügen. Für jede Teilzelle 173 werden also separate Querkanalzonen 190, 190' mit entsprechenden Querkanälen vorgesehen und am Stapelrand Längskanalzonen 55, 55' und 190, 190' mit Längskanälen. Die in Längskanalzonen 55, 55' und 190, 190' vorgesehenen Längskanäle werden am Stapelende in entsprechenden Kanalsystemen der Endstruktur zusammengefasst.

Figur 17a gibt wie in Figur 17 ebenfalls eine Ansicht nach Fig. 14b wieder und eine Reaktionsfläche 17, die geteilt ist, hier z. B. in drei Teilreaktionsflächen 174, 174' und 174", wobei die drei dazu gehörigen Teilzellen 173, 173', 173" als Querschnitt 193 gezeigt, in einer Ebene vorhanden sind, in serieller Verschaltung 172. Die Zonen 55, 55', 55" und 55'" für die Längskanäle sind nur am Stapelrand 9 wiedergegeben, jeweils mit Ein- und Ausströmung. Mit 197 wird die Zone für die Querkanäle und Verbindungskanäle angedeutet, jeweils für alle Teilzellen 173 sowie für Gase und Kühlmedium, jeweils mit Ein- und Ausströmung. Die in Figur 17a gezeigte Ausführungsform des Stapelquerschnitts 8 weist längere Zonen 197, 197' für Querkanäle auf, dafür keine Zonen 190, 190' für Längskanäle. Mit Figuren 17 und 17a werden die Variationsmöglichkeiten zur Gestaltung des Stapelquerschnitts angedeutet. Dies ist insbesondere möglich durch die in Figuren 7, 8, 9, 10, 11, 25 und 25a gezeigten variablen Gestaltungsmöglichkeiten zur Führung der Gase und des Kühlmediums, indem z.B. Querkanäle zur Ver- und Entsorgung von Mikrokanälen von der Ebene E4 in die Ebene E0 und umgekehrt verlegt werden können, oder Querkanäle von zwei Seiten angeströmt /abgeströmt werden, wie dies für Mikrokanäle jedenfalls zweckmäßig ist, um die Strömungswiderstände in diesen Kanälen zu reduzieren. Wie in Fig. 17 liegen auch hier die integrierten Strompfadzonen 80, 80' am Stapelrand 9 und die integrierten Strompfadzonen 79, 79' für Strompfade im Stapel zwischen den Teilzellen 173, 173'.

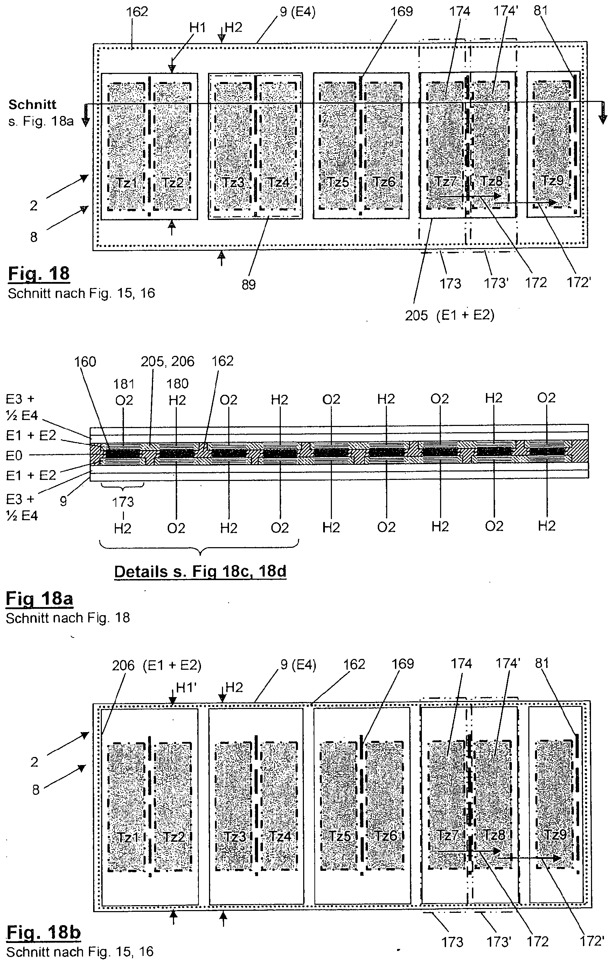

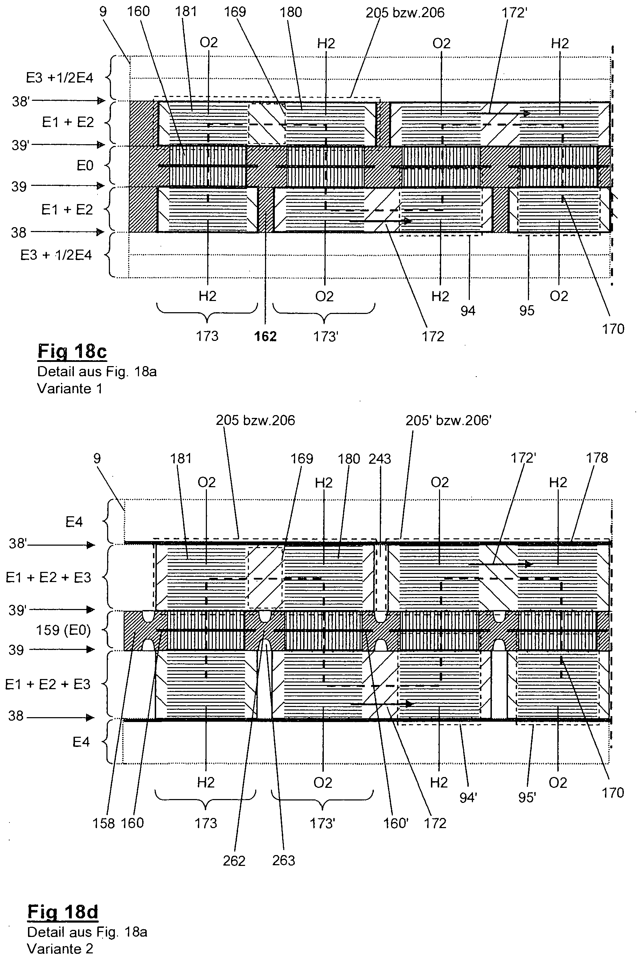

Die Figuren 18, 18b geben den mit 8 bezeichneten Stapelquerschnitt als einen Schnitt nach Figuren 15 und 16 wieder und zeigen einen Zellenstapel 1 mit neun Teilzellen 173, 173' bzw. Tz1-Tz9 in einer Zelle 2 angeordnet. Zu erkennen ist, dass die KMM-Elemente 205, 206 in den Ebenen E1 und E2 als separate Elemente (Baugruppen) auf den Ebenen E3 und ½ E4 liegen, jeweils die Zellen 173, 173' und ihre Reaktionsflächen 174, 174' in einer Baugruppe abdeckend.

In Fig. 18d und z.B. in Fig. 21, sowie folgenden Figuren werden in weiterer Variation der Zuordnung von Ebenen zu Baugruppen KMM-Elemente 206 in den Ebenen E1, E2 und E3 gezeigt, die dann als separate Elemente (Baugruppen) auf der Ebene E4 liegen, jeweils die Zellen 173, 173' und ihre Reaktionsflächen 174, 174' in einer Baugruppe abdeckend.

Der mit 9 bezeichnete Stapelrand wird durch die Ebene E4 gebildet und definiert das Maß H2.

Die hier angedeutete abgestützte MEA-Struktur in E0, mit 162 bezeichnet entspricht in analoger Weise den vorher schon gezeigten Teil-Stütz- und Dichtelementen 175, 175' und ist elektrisch nicht leitend.

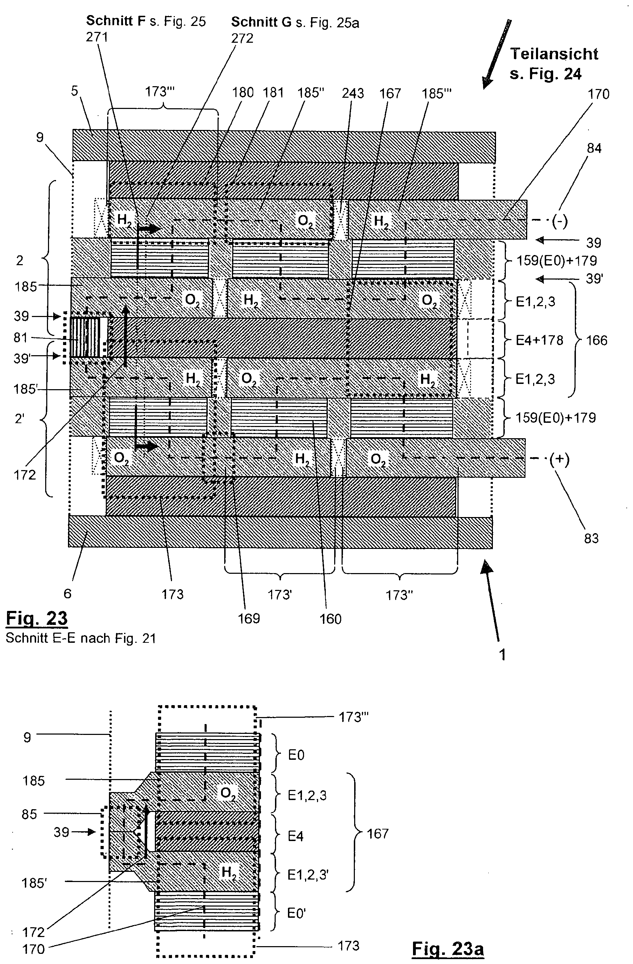

Mit 169 ist der Teilstrompfad zwischen den Teilzellen 173, 173' bezeichnet und mit 81 der Strompfad, der den Strom aus der einzelnen mit Tz9 gekennzeichneten Teil-Zelle einer Seite des KMM bzw. Teil-KMM zur anderen führt, weshalb auch eine ungerade Anzahl Teilzellen, nämlich hier beispielhaft neun, in einer Zelle 2 vorgesehen sind, detaillierter gezeigt in Fig. 23.

Figur 18 zeigt beispielhaft einen Stapelquerschnitt 8 mit je zwei Teilzellen 173, 173', in serieller Verschaltung 172, je einem KMM-Element 205 zugeordnet, dessen Höhe, mit H1 bezeichnet, geringer ist als die Höhe des zugehörigen Stapelquerschnitts 8, mit H2 bezeichnet, was die Gestaltung der Kontaktflächen zwischen Ebenen E0 und Ebenen E1 vereinfacht. Die KMM-Elemente 205 werden beispielhaft durch die Ebenen E1 und E2 gebildet, definieren das Maß H1 und sind auf den Ebenen E3 + 1/2 E4 fixiert.

Figur 18a zeigt den Schnitt nach Figur 18 und beispielhaft die Gestaltung der abgestützten MEA-Struktur 162 und die prinzipielle Lage und Anordnung der KMM Elemente 205 und auch 206 nach Fig. 18 und Fig. 18b, mit je einem H₂- und O₂-Teilsegment 180 und 181 für die Ein- und Ausströmung von Gasen, die in Figur 18c und Fig. 18d detaillierter erklärt sind.

Bei dem Schnitt nach Figur 18 ist die abgestützte MEA-Struktur in E0 162 entsprechend den Stütz- und Dichtelementen 16 der vorherigen Figuren zu erkennen, ferner die KMM-Elemente 205, 206 die auf die Ebenen E3 und E4 (zweimal ½ E4) aufgelegt sind. Dabei ist der Stapelrand mit 9 gekennzeichnet und mit 160 die Teil-MEA einer Teilzelle 173.

Figur 18b zeigt eine Variante des Stapelquerschnitts 8 nach Fig. 18, mit je zwei Teilzellen 173, 173' in serieller Verschaltung 172 und den zugehörigen Teilreaktionsflächen 174, 174', die je einem KMM Element 206 zugeordnet sind, mit der Höhe H1' die etwa der Höhe H2 des Stapelquerschnitts 8 entspricht, was insbesondere im Hinblick auf die Fertigung von Vorteil ist, da je nach Verfahren Justier-, Halte- und Greifelemente einfacher zu realisieren sind oder eingespart werden können. Die KMM-Elemente 206 werden wieder durch die Ebenen E1 und E2 gebildet, definieren das Maß H1 und sind auf den Ebenen E3 + 1/2 E4 fixiert.

Figur 18c und 18d zeigen im Schnitt jeweils ein Detail nach Fig. 18a, die Anordnung der KMM-Elemente 205 bzw. 206 mit je einem H₂-Teilsegment 180 und einem O₂-Teilsegment 181, dazwischen den in 205 bzw. 206 integrierten Strompfad 169 zwischen zwei Teilzellen 173, 173', in serieller Verschaltung 172, die also in Reihe geschaltet sind, weshalb die Teilspannungen 171' (u1) und 171" (u2) nach Fig. 15 und Fig. 16 addiert werden zur Gesamtspannung U, die sich beispielsweise mit zwei in Reihe geschalteten Teilzellen 173 und 173' ergibt. Mit 170 ist jeweils der Stromweg bezeichnet und mit 9 der Stapelrand.

Mit 39, 39' sind die Dicht-. Trenn-, und Kontaktebenen zwischen der Ebene E0 und den KMM-Elementen 205 bzw. 206, die beidseitig von E0 angeordnet sind, angedeutet. Wie vorher schon beschrieben ist die Dichtebene lösbar und gasdicht ausgeführt.

Mit 38, 38' sind die Fügeebenen bezeichnet, zwischen KMM-Elementen 205, 206 und den Ebenen E1, 2 und E3, 1/2E4 bzw. den Ebenen E1, 2,3 und der Ebene E4, deren Fläche etwa der des Stapelquerschnitts 8 entspricht und mit 160 die Teil-MEA der verschiedenen Teil-Zellen 173.

Figur 18c zeigt einen Ausschnitt nach Fig. 18a und im Detail als Variante 1, die beispielhaft aus den Ebenen E1 und E2 aufgebauten KMM-Elemente 205, 206 mit den vorher schon beschriebenen abgestützten MEA-Struktur in E0 162 zwischen zwei Teilzellen 173, 173'. Die Anordnung der Ebenen E0, 1 ,2 ,3 ,4 entspricht beispielhaft der Variante V2 nach Fig. 13, dabei sind mit 94 die H2-Gasräume und mit 95 die O2-Gasräume bezeichnet.

Figur 18d zeigt ebenfalls einen Ausschnitt nach Fig. 18a und im Detail als Variante 2, die aus den Ebenen E1, E2 und E3 aufgebauten KMM-Elemente 205, 206 ohne die in Fig. 18c dargestellte abgestützte MEA-Struktur 162, jedoch mit einem Luftkanal 243 zwischen zwei KMM-Elementen 205 bzw. 205' und 206 bzw. 206', wie dies im Detail z.B. in Fig. 22 weiter beschrieben wird. Die Anordnung der Ebenen E0, 1, 2, 3, 4 entspricht beispielhaft der Variante V6 nach Fig. 13, wobei mit 94' die H2-Gasräume und mit 95' die O2-Gasräume bezeichnet sind, die sich von oben in Fig. 18c genannten Gasräumen 94 und 95 dadurch unterscheiden, dass in den KMM-Elementen 205, 206 in Fig. 18d auch die Ebene E3 integriert ist.

Die mit 160, 160' bezeichneten Teil-MEA können dann in der Ebene E0 als einzelne Baugruppe angeordnet, oder wie in Fig. 18d gezeigt, als mit 159 bezeichnete Teil-MEA-Gruppe verbaut werden, deren Abmessung etwa der des Stapelquerschnitts 8 entspricht, wobei zwischen zwei Teil-MEA 160, 160' die in Fig. 1d schon beschriebenen Teil-Stütz- und Dichtelemente 175, jetzt als Stütz- und Dichtkörper der Teil-MEA-Gruppe mit 158 bezeichnet, in besonders vorteilhafter Weise mit einem Stützsteg 262 und einer Dichtungsrille 263 ausgestattet sind. Während der Stützsteg 262 die Teil-MEA 160, 160' zur Teil-MEA-Gruppe 159 verbindet und auch dadurch die Stapelmontage vereinfacht wird, dient die Dichtungsrille 263 der Volumenverdrängung, die bei der Stapelmontage erforderlich ist, um das Volumen der zu komprimierenden Dichtungen aufzunehmen, die durch den Stütz- und Dichtkörper der Teil-MEA-Gruppe, mit 158 bezeichnet, gebildet werden. Mit 178 sind die Potentialtrennungen bezeichnet, die mit E4 einen Träger für die KMM-Elemente darstellen, wie im Folgenden noch detailliert gezeigt wird.

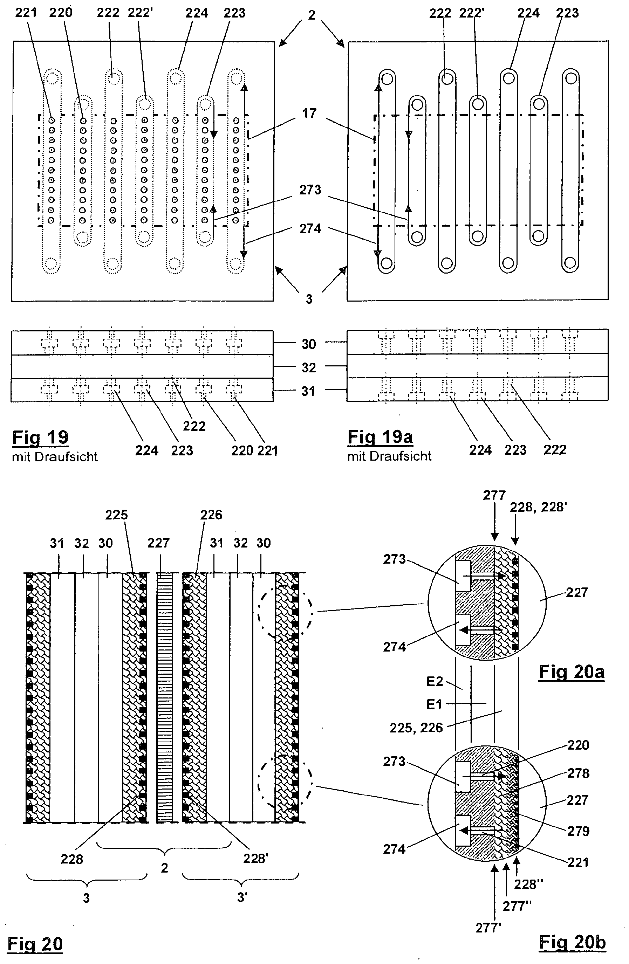

Figur 19 zeigt die Ansicht eines KMM 3 mit der oben ausführlich beschriebenen Struktur mit H₂-Segment 30, O₂-Segment 31 und Kühlsegment 32. Ferner werden Mikrobohrungen 220 und 221 gezeigt und verdeckt nur angedeutet Mikrokanäle 223 und 224 mit Gasdurchlässen 222, 222' für die Einströmung und Ausströmung der Gase. 17 ist die Reaktionsfläche der zugehörigen Zelle 2, die hier nicht gezeichnet wurde. Vorteilhaft ist die gute Verteilung der Prozessgase H₂ und O₂, aufgrund der Mikrobohrungen, sowie die Einströmung 273 in die Mikrokanäle sowie die Ausströmung 274 aus den Mikrokanälen, jeweils beidseitig.

Hingegen zeigt Figur 19a die Ansicht eines KMM 3 mit der oben ausführlich beschriebenen Struktur mit H₂-Segment 30, O₂-Segment 31 und Kühlsegment 32. Mikrobohrungen sind hier nicht vorhanden, die Mikrokanäle 223 und 224 mit Gasdurchlässen 222 sind offen und für die Einströmung und Ausströmung der Gase besonders ausgestaltet. 17 ist die Reaktionsfläche der zugehörigen Zelle 2, die hier nicht gezeichnet wurde. Vorteilhaft ist, dass die oben näher beschriebenen konstruktiven Möglichkeiten des KMM-Konzepts, welches den Aufbau einer Brennstoffzelle ohne Bipolarplatte mit integrierten Strompfaden und geteilten Reaktionsflächen auch auf diese Struktur der offenen Mikrokanäle übertragen werden können, indem je nach Anwendung die Reaktionsfläche 17 ungeteilt eingesetzt wird oder geteilt, wie mit Figuren 15, 16 und 18 angedeutet, wobei die geöffnete Kanalseite auf der entsprechenden GDL aufliegt.

Figur 20 zeigt, zur besseren Verdeutlichung ähnlich einer Explosionszeichnung, zwei Kühl- und Medienmodule (KMM) 3, 3' einer Zelle 2 mit Gas- und Kühlsegmenten 30, 31, 32 und fest integrierten Gasdiffusionslagen 225, 226 die schon Katalysatorpartikel 228, 228' tragen. Vorteilhaft ist insbesondere, dass solche komplexen Komponenten in stabilen Prozessen mit hoher Qualität gefertigt werden können. Bei der Montage wird dann nur noch zwischen zwei KMM 3, 3' die Elektrolytmembran 227 gelegt, möglichst auch mit einem kontinuierlichen Prozess, der z.B. die Membran 227 von der Rolle (Coil) verarbeitet. Eine weitere Ausführungsform (hier nicht gezeichnet) sieht vor, das die Gasdiffusionslagen 225, 226 keine Katalysatorpartikel 228, 228' tragen, die stattdessen auf die Membran 227 aufgetragen wurden und mit ihr fest verbunden sind.

Figur 20a zeigt ein Detail der Figur 20 als Variante 1 mit den Einströmungen und Ausströmungen für Gase, die mit 273 und 274 bezeichnet sind. Zu erkennen ist die poröse und elektrisch sehr gut elektrisch leitende Fügeebene 277 zwischen der Ebene E1 und der GDL 225, 226. Ebenfalls sind die Katalysatorpartikel 228, 228' zu sehen, an der Grenze zur Membran 227. Die Fügeebene 277 kann durch kleben realisiert werden, indem entweder ein poröser gasdurchlässiger und elektrisch sehr gut leitender, hier nicht gezeichneter Kleber in der Fügeebene appliziert wird, oder die GDL durch partielle Klebung oder z.B. Adhäsions- oder Diffusionseffekte oder Anwendung von Techniken, die im Mikrobereich einem Klettverschluss ähneln, mit der Ebene E1 verbunden wird.

Figur 20b zeigt ebenfalls ein Detail der Figur 20 als Variante 2 mit den Einströmungen und Ausströmungen für Gase, die mit 273 und 274 bezeichnet sind. Zu erkennen ist als beispielhafte Anordnung die mit 277' bezeichnete Grenzebene zwischen der Ebene E1 und der mit 278 bezeichneten GDL-Zone A und die mit 277" bezeichnete Grenzebene zwischen der GDL-Zone A (278) und der mit 279 bezeichneten GDL-Zone B. Ebenfalls sind die Katalysatorpartikel 228" zu sehen, an der Grenze zur Membran 227. Die Grenzebenen 277' und 277" sind ebenfalls porös, also sehr gut gasdurchlässig und elektrisch sehr gut leitend.

Für die Ebene E1 ist vorzugsweise aus Aluminium vorgesehen und für die mit 278 bezeichnete GDL-Zone A das mit Duplex 1 benannte Material, vorzugsweise aus einem textilen, geschäumten, kugeligen, körnigen oder faserigen Werkstoff, der aluminiumbasiert sein kann oder aus einem anderen Material, z.B. nanodotiertem Aluminium oder aus hochporöser Kohle, metallischen Schäumen, Nano-Materialen oder anderen, die Aluminiumoberfläche schützenden und elektrisch kontaktierenden und leitenden Stoffen bestehen kann, um die Stromleitung zwischen der Ebene E1 und der GDL zu ermöglichen und die Einwirkung elektrochemischer Effekte beim Betrieb einer Zelle 2 auf die Werkstoffe des KMM 3, 3' auszuschließen.

Erfindungsgemäß wird vorgeschlagen, die Grenzebene 277' als eine Art Duplexmaterial auszugestalten, indem in E1 Aluminium dominiert und übergehend in die GDL-Zone A, das mit Duplex 1 bezeichnete Material. In analoger Weise wird die Grenzebene 277" gestaltet, indem Duplex 1 als Material in der GDL-Zone A dominiert und übergehend in die GDL-Zone B das mit Duplex 2 bezeichnete Material. Während Duplex 1 mit dem tragenden Aluminium der Ebene E1 eine innige Verbindung eingeht, gehen Duplex 1 und Duplex 2 ebenfalls eine innige Verbindung ein, während Duplex 2 an seiner mikroporösen, sehr großen Oberfläche, an der Membranseite mit Katalysatorpartikeln beladen, um im Kontakt mit der Membran 227 eine optimale Reaktionszone bereit zu stellen, wie dies im Detail schon mit Figur 1b beschrieben wurde. Dabei kann Duplex 2 an der Grenze zwischen der GDL-Zone B und der Membran selbst die Eigenschaft von Katalysatoren bzw. Katalysatorpartikeln aufweisen, wobei metallisch-, organisch- oder keramischbasierte dafür Einsatz kommen können.

In Fig. 20b sind in der Ebene E1 die mit 220 und 221 bezeichneten Mikrobohrungen vorgesehen bis zur Grenzfläche 277'. In einer weiteren nicht gezeichneten Variante können diese Mikrobohrungen auch bis zur Grenzebene 227" reichen oder als Sackbohrung in der GDL-Zone A münden. Ferner können die GDL-Zonen A und B (278, 279) auch aus einem der beiden Materialien gefertigt werden, Duplex 1 oder Duplex 2. Die Duplexmaterialien Duplex 1 und Duplex 2 werden auch als Verbundmaterialien bezeichnet, bzw. die Struktur aus E1 und den GDL-Zonen A und B (278, 279).

Figur 21 zeigt als Ansicht B nach Figur 14 den Stapelquerschnitt 8 eines Zellenstapels 1 nach Fig. 15, 16 mit Stapelgehäuse 70 dessen Zellen 2, 2' aus jeweils 9 Teilzellen 173, 173', in serieller Verschaltung 172 bestehen, wie hier beispielhaft dargestellt wird. Gezeigt wird weiter, dass dem Stapelgehäuse 70 ein Verdichter 240 für Luft, ein Wärmetauscher 275 und ein Luftanschluss 241 und ein Abgasanschluss 260 am Stapelgehäuse 70 zugeordnet sind. Mit 9, ist der Stapelrand bezeichnet, etwa deckungsgleich mit der Kontur der ungeteilten Ebene 186 E4 mit den dazugehörigen Potentialtrennungen 178, 178', wie mit Fig. 22 detailliert gezeigt wird. Die Teilzellen 173 und 173' und die dazu gehörigen Teil-Reaktionsflächen 174 und 174' sind den KMM-Elementen 206 und 206' zugeordnet, die als Einzelelemente bestehend aus den Ebenen E1, E2, E3 auf der Ebene E4 186 fixiert sind, jeweils für 2 Teilzellen 173, 173'. Die Lage der KMM-Elemente 206, 206' ist in Fig. 21 prinzipiell dargestellt. Seitlich befindet sich in dieser Struktur stets ein einteiliges KMM-Element 206"', wie dies in Fig. 23 näher erläutert wird.

Mit 90 wird eine elektrische Schnittstelle bezeichnet, die den Anschluss der Brennstoffzelle, bzw. des Elektrolyseurs an die jeweilige Systemumgebung erlaubt und die Anschlüsse der Stromführung von den Stromanschlüssen 83, 84 und die Anschlüsse für die Mess-, Steuer- und Regeltechnik vom Stapel 1 zur Systemumgebung ermöglicht.

Zwischen KMM-Elementen 206, 206', 206", 206'" und an beiden Seiten befindet sich ein Zwischenraum, der als Luftkanal 243 bezeichnet wird. Die Gehäuseluft 242, mittels Luftverdichter 240 angesaugt und auf den erforderlichen Betriebsdruck gebracht, strömt über den Luftanschluss 241 in das Stapelgehäuse 70 und verteilt sich dort. Ein Teil der Gehäuseluft 242 mit 242'" bezeichnet, strömt weiter über die Lufteinströmung 244 in den Luftkanal 243. Aus dem Luftkanal 243 und einem Luftdurchlass 245 strömt die Gehäuseluft 242'" in den Querkanal 246. In folgenden Figuren wird der Strömungsverlauf der Gase H2 und O2 sowie des Kühlmediums KM im Gehäuse 70 in den KMM-Elementen 206, 206', 206" und 206'" detaillierter gezeigt.

In Fig. 21 ist die Ausströmung des Gasgemischs 236 aus Querkanälen 247 in Längskanäle der Längskanalzonen 253, 253' angedeutet. Insbesondere Restluft (02) und Produktwasser strömen als Gasgemisch 236, 236' aus verschiedenen Längskanälen der Längskanalzone 253, 253', werden in der Volumenbündelung 255 zusammengeführt und strömen als gebündeltes Gasgemisch 256 in den Saugbereich 234 der Venturidüse V2 238. Die Gehäuseluft 242', 242" strömt als Treibgas in die Venturidüse 238, 238" vermischt sich mit dem angesaugten gebündelten Gasgemisch 256 und tritt als Abgas 257 am Abgasanschluss aus dem Stapelgehäuse 70.

Fig. 21a zeigt den prinzipiellen Aufbau einer Venturidüse 230, wie sie hier vorgeschlagen wird: Treibgas 231 strömt in die Strahldüse 232 der Venturidüse 230 ein, während der Druck p1 des Treibgases 231 abnimmt und im Saugbereich 234 seinen geringsten Wert p1' annimmt, bei maximaler Strömungsgeschwindigkeit des Treibgases 231. Das Saugmedium 235, mit dem Druck p2, strömt wegen p1' < p2 in den Saugbereich 234 ein und vermischt sich mit der Treibluft 231 zum ausströmenden Gasgemisch 236. Die im Folgenden gezeigten Venturidüsen V1 237, V2 238 und auch V3 265 funktionieren nach diesem Prinzip.

Fig. 21b zeigt prinzipiell den Weg, den die Gehäuseluft 242 vom Verdichter 240 und Wärmetauscher 275 bis zum Abgasanschluss 260 nimmt. Zunächst wird die Gehäuseluft 242 im Stapelgehäuse 70 in Teilströme 242', 242" und 242'" geteilt:
1. Die Gehäuseluft 242', 242" strömt in das Stapelgehäuse 70 und weiter als Treibgas in die Venturidüsen 238, 238',
2. während die Gehäuseluft 242'" in die Querkanäle 246, 246' strömt.

In den Querkanälen 246, 246' wird die Gehäuseluft 242'" weiter verteilt:
1. In den Mikrokanal 150 Einströmung 02 von beiden Seiten.
2. In den Mikrokanal 152 mit Venturidüsen V1 237, 237' als Kühlmedium KM 133 bzw. Treibgas in den Venturidüsen V1 237.

Die Gehäuseluft 242', 242" dient zunächst der Temperierung des Zellenstapels 1 und des Stapelgehäuses 70. Aus dem kalten Stillstand (Umgebungstemperatur bis -35°C) kann der Zellenstapel 1 auf die erforderliche Starttemperatur bzw. Betriebstemperatur gebracht werden, mittels eines entsprechenden Wärmetauschers 275 mit schaltbarer Wärmequelle und/oder schaltbarem Kühlsystem, der vorzugsweise zwischen Luftverdichter 240 und Stapel 1 angeordnet wird. Während des Betriebs des Zellenstapels 1 wird das Stapelgehäuse 70 durch die Gehäuseluft 242', 242" gekühlt, was auch aus Sicherheitsgründen erforderlich ist, wenn die Betriebstemperatur des Stapels 70 100°C überschreitet, insbesondere bei Brennstoffzellen des Typs PAFC (Brennstoffzellen mit Phosphorsäure als Elektrolyt), deren Betriebstemperatur 180°C und mehr erreichen kann.

Die in den Mikrokanal 150 als O₂ eingeströmte Luft tritt in die O₂-GDL 177 ein, um dann weiter als O₂-Ausströmung bzw. Kathodengas 258 in den Mikrokanal 151 Ausströmung O₂ zu strömen. Aus dem Mikrokanal 151 strömt O₂ als weiterführende O₂-Ausströmung 259 in den Saugbereich der Venturidüse V1 237. Bei dieser Anordnung wird aus der O₂-GDL 177 Gas und Produktwasser über den Mikrokanal 151 aktiv in den Mikrokanal 152 gefördert, strömt also nicht mehr passiv, wie dies in der mit Fig. 2 gezeigte prinzipielle Anordnungen vorgesehen sind.

Im Mikrokanal 151 findet ein Druckausgleich statt, wenn im Mikrokanal 152 vorzugsweise mehrere Venturidüsen V1 237, 237' angeordnet werden, die Gas und Produktwasser abschnittsweise aus dem Mikrokanal 151 saugen und damit eine gleichmäßige Förderung bewirken. Treibgas ist hier das Kühlmedium KM 133 im Mikrokanal 152. In der Venturidüse V1 237 wird das Gemisch 236 erzeugt, das durch den Längskanal 248 in der Längskanalzone 253 zur Saugzone der Venturidüse V2 238 strömt, wie in Fig. 22 detaillierter gezeigt wird. Davor werden aus anderen Längskanälen 248' Gemische 236' in einer als Volumenbündelung 255 bezeichneten Zusammenführung für Gasgemische vereinigt. In Fig. 21, 22, 25 und 25a wird der Weg der Gase weiter erklärt.

Fig. 21c zeigt 4 Varianten zur Anordnung von Teilzellen 173, 173' in der Ebene E0 bzw. dem vorher schon gezeigten Zellsegment 18: Die Variante V1 zeigt die vorher schon gezeigte abgestützte MEA-Struktur in E0, mit 162 bezeichnet, mit integrierten Teil-MEA 160 und der ebenso integrierten MEA-Berandung 19, die in analoger Weise für MEA 4 und Teil-MEA 160 zur Anwendung kommt, als eine Baugruppe mit einer Fläche, die etwa dem Stapelquerschnitt entspricht, wie schon in Fig. 21 und vorher angedeutet. Vorteilhaft ist der geringere Montageaufwand aufgrund eines Montageteils.

Die Variante V2 zeigt ähnlich der oben beschriebenen Variante V1 wieder eine abgestützte MEA-Struktur in E0, jetzt mit 156 bezeichnet und mit MEA-Fenster 89 zum einlegen einzelner MEA 4,160 ausgerüstet. Teil-MEA 160 werden bei der Montage des Stapels in diese Fenster eingelegt, wobei die Teil-MEA 160 mit der vorher schon beschriebenen MEA-Berandung 19' als Stütz- und Dichtsystem nach Fig. 1a mit den Dichtungen 24, 25 ausgerüstet sind. Vorteilhaft ist der einfache Austausch von Teil-MEA 160 und später das Recycling der Bauteile der Ebene E0.

Variante V3 zeigt die Teil-MEA-Gruppe 159 (E0) als integriertes Bauteil mit dem Stütz- und Dichtkörper 158 und den Teil-MEA 160, 160' zusammen mit ihren zugehörigen MEA-Berandungen 19 und der in Fig. 18d schon gezeigten Dichtungsrille 263 als eine die Teil-MEA 160 umgebende Kontur.

Die Teil-MEA-Gruppe 159 (E0) ist in MEA-Leisten 157 wiederum integriert bzw. eingefasst, die auch an den Seiten des Stapelquerschnitts in analoger Weise verbaut sein können. Vorteilhaft ist die Vorfertigung und Montage eines den Stapelquerschnitt abdeckenden Bauteils.

Mit V4 zeigt die Teil-MEA-Gruppe 159 (E0) als in ein MEA-Fenster 89' einzulegendes und zu fixierendes Bauteil 159' mit optional zwischen den Einlegeteilen angeordneten Fixierungen 155 für die Teil-MEA-Gruppe 159. Das MEA-Fenster 89' wird durch die in dem jetzt geschlossenen MEA-Rahmen 157' angeordnete Öffnung vorgegeben, der mit den als 157 bezeichneten MEA-Leisten und Leisten an den Stapelseiten gebildet wird. Vorteilhaft ist, dass die Teil-MEA-Gruppe 159 (E0) mit integrierten Teil-MEA 160 als ein Bauteil vorgefertigt, montiert und wieder entnommen werden kann, z.B. für Recyclingzwecke und durch die besondere Gestaltung der Räume zwischen den Teil-MEA 160 eine Dichtrille 263 mit Kompressionsraum realisiert wird, deren Funktion schon in Fig. 18d detailliert beschrieben wurde.

Fig. 22 zeigt einen Ausschnitt aus Fig. 21, mit dem Stapelgehäuse 70 und dem Stapelrand 9 und mit einem KMM-Element 206 zwischen zwei KMM-Elementen 206' und 206" angeordnet, jeweils bestehend aus den Ebenen E1, E2, E3. Die KMM-Elemente 206, 206', 206" sind auf beiden Seiten der Kernfolie der Ebene E4, mit 186 bezeichnet, fixiert. Die Ebene E4 besteht hier vorzugsweise aus einer metallischen Kernfolie 186, die beidseitig mit je einer Potentialtrennung 178', 178" ausgestattet ist, detaillierter gezeigt in Fig. 23. Diese Potentialtrennungen 178, 178' dienen der Potentialtrennung zwischen Teilzellen 173, 173' und gleichzeitig als Kanalabdeckungen zwischen den KMM-Elementen 206, 206', 206" und der Kernfolie 186 der Ebene E4. Die KMM-Elemente 206, 206', 206" bestehen in der KMM-Ebene 28 aus je einem Teilsegment H₂ 180 und einem Teilsegment O₂ 181, während. Vorzugsweise wird jenseits des Teilsegments H₂ 180 ein Teilsegment O₂ 181 angeordnet und jenseits des Teilsegments O₂ 181 ein Teilsegment H₂ 180, jeweils auf der anderen Seite der Ebene E4 wie in Fig. 23 und Fig. 25d gezeigt.

In der mit 253, 253' bezeichneten und in Fig. 21 schon angedeuteten Längskanalzone sind Längskanäle und in der mit 254 bezeichneten Querkanalzone Querkanäle für jedes KMM-Element 206, 206', 206" angeordnet:
1. Längskanäle 248 für die Ausströmung von O₂, also dem Gasgemisch 236, die über Verbindungskanäle 138, 138' mit Querkanälen 247, 247' in der Ebene E4 verbunden sind.
2. Längskanäle 251 für die Einströmung von H₂ mit 42 nach Fig. 2 bezeichnet, die über Verbindungskanäle 139, 139' mit Querkanälen 249, 249' in der Ebene E0 verbunden sind.
3. Längskanäle 252 für die Ausströmung von H₂ mit 45 nach Fig. 2 bezeichnet, die über Verbindungskanäle 140, 140' mit Querkanälen 250, 250' in der Ebene E0 verbunden sind.

Insgesamt vier mal pro KMM-Element 206, nämlich an jeder Seite zwei mal, strömt die Gehäuseluft O₂ 242"' über die Lufteinströmungen 244 in die Luftkanäle 243 und durch Luftdurchlässe 245 in die Querkanäle 246, 246' in der Ebene E4 und wird dort weiter verteilt, wie in Fig. 21b schon prinzipiell angedeutet. Für die Einströmung von Sauerstoff O₂ und Kühlmedium KM sind demnach in der Lösung nach Fig. 21 und Fig. 21b keine Längskanäle erforderlich, wie dies in Figuren 3, 4, 5 und anderen dargestellt wurde und dort erforderlich war.

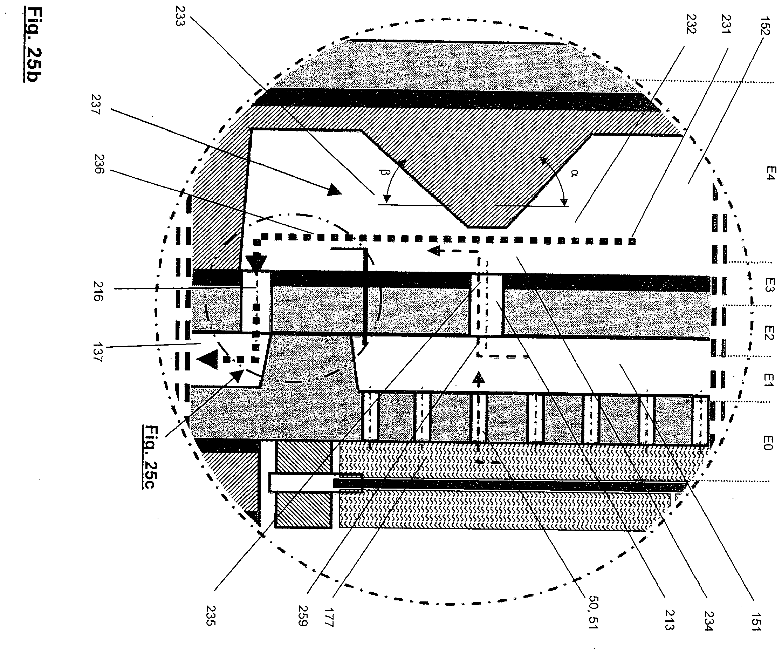

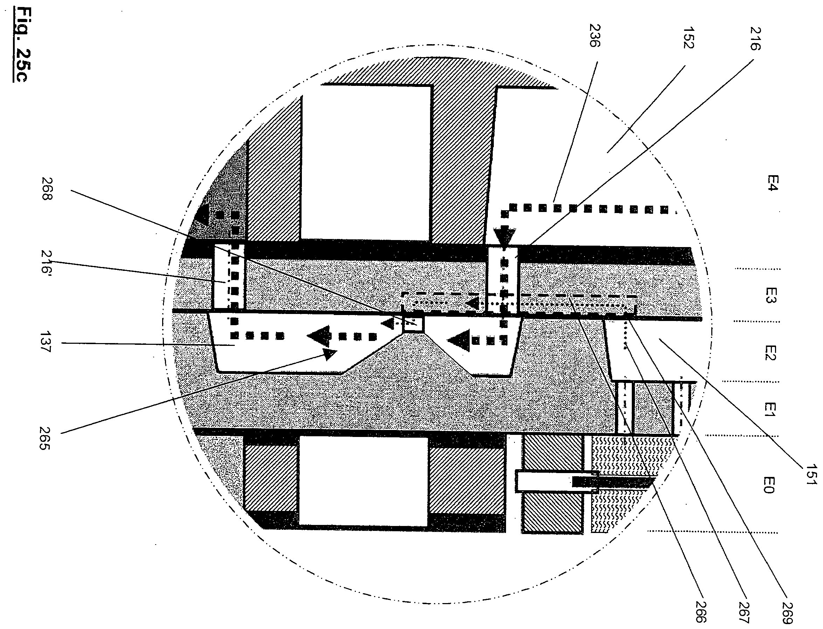

Die Gehäuseluft 242"' wird in den Querkanälen 246, 246' in drei Teilströme, denen verschiedene Funktionen zugeordnet sind, geteilt:
Ein Teil der Gehäuseluft 242"' dient als Kathodengas 258 zur Versorgung der Teil-MEA 160 mit Sauerstoff O₂ 48, ein weiterer Teil als Kühlmedium 133, wie in Figur 25 detailliert gezeigt wird:
1. Im Teilsegment 181 für O₂ strömt die Gehäuseluft 242"' als Kathodengas 258 aus Querkanälen 246, 246' in der Ebene E4 über Verbindungskanäle 136, 136' in die Mikrokanäle 150 in Ebene E2 ein und von dort weiter über Mikrobohrungen 47 in der Ebene E1, nach Fig. 2, in die Teil-O₂-GDL 177, nach Fig. 25. Die Mikrokanäle 150 werden von beiden Seiten angeströmt. Aus der O₂-GDL 177 strömt O₂ 51 (nicht verbrauchte / überstöchimetrische Luft, Restgase wie z.B. Stickstoff und flüssiges und/oder dampfförmiges Produktwasser) als Kathodengas 258 durch Mikrobohrungen 50 in Mikrokanäle 151 aus, nach Fig. 25a. Die Mikrokanäle 151 sind beidseitig geschlossen; das Gas 258 wird über den Luftdurchlass 213, nach Fig. 25, in Ebene E3 als O2-Strömung 259 (Saugmedium 235) zum Saugbereich 234 der Venturidüse V1 237 im Mikrokanal 152 geführt. Dieser Teil der Gehäuseluft 242" aus Querkanälen 246, 246' dient also als 02 der Versorgung der Kathodenseite der Teil-MEA 160 der Teilzellen 173, 173' mit Sauerstoff bzw. O₂ 48.
2. Im O2-Gasegment 181 strömt das Kühlmedium KM 133 aus Querkanälen 246, 246' über Verbindungskanäle 135, 135' in KM-Mikrokanälen 152 über Venturidüsen V1 237, 237' und Verbindungskanäle 137, 137' als Gasgemisch 236 in Querkanäle 247, 247'. Im Saugbereich 234 der Venturidüsen 237 wird aus dem Ausström-Mikrokanal 151 das ausströmende O₂ 48 über den Luftdurchlass 213 in Ebene E3 in den Mikrokanal 152 gesaugt, wie in Fig. 21a beschrieben und dort weiter transportiert. Dabei ist vorzugsweise ein Ausströmkanal 151 für O₂ einem dahinter angeordneten Mikrokanal für KM 152 zugeordnet, wie in Fig. 25a, der Ausströmebene, und in einem Ausschnitt von Fig. 25a, nämlich Fig. 25b detailliert beschrieben wird. Die Anzahl der Venturidüsen 237, 237', 237" im Mikrokanal 152 in der Ebene E4 und zugeordneten Luftdurchlässe 213 in der Ebene E3 ist nicht identisch mit der Anzahl der Mikrobohrungen 50 in der Ebene E1. Anzahl und Anordnung der Venturidüsen 237, 237', 237" bewirken eine weitgehend gleichmäßige Verteilung des Drucks und der Abströmung des Gases O₂ 48 aus dem Mikrokanal 151, wie in Fig. 21a in analoger Weise beschrieben wurde.

In Fig. 22 wird ferner die entgegen gesetzte Strömungsrichtung des Kühlmediums KM 133 und 133' in den Gassegmenten 180 und 181 gezeigt, indem entsprechende Querkanäle 246, 246' und 247, 247' zur Ein- bzw. Ausströmung mit Mikrokanälen 152, 152' verbunden werden. Von Teilzelle 173 zu Teilzelle 173' wechseln vorzugsweise die Strömungsrichtungen des KM in den Mikrokanälen für das KM, damit die Prozesswärme aus dem Zellenstapel 1 möglichst gleichmäßig abgeführt werden kann.

Vorzugsweise werden in der Querkanalzone 254 die Querkanäle 246, 246' und 247, 247' in der Ebene E4 für O₂ und 249, 249' und 250, 250' in der Ebene E0 für H₂ nicht als durchgehende Kanäle ausgeführt, sondern als Kanäle, die jeweils einem KMM-Element 206, 206', 206" zugeordnet werden. Die Verteilung des Gemischs 236 in Querkanälen 247, 247' auf zwei Längskanäle 248 in einer Längskanalzone 253 dient der möglichst gleichmäßigen Abströmung des Gasgemischs 236 aus den Querkanälen 247, 247', wie auch in Fig. 25a dargestellt. Die Anzahl und Ausführung der Venturidüsen V1 237 und die Gestaltung der Mikrokanäle 150, 151, 152 bzw. 152' ist so kombiniert, das sich in einem Mikrokanal 152, 152' von Venturidüse V1 237 zur nächsten die in Fig. 21a prinzipiell dargestellten Druckverhältnisse einstellen, selbstverständlich in jedem Paar, der über die Teilreaktionsflächen 174, 174' der Teilzellen 173, 173' verteilten Mikrokanäle 151,152.

Die Anordnung erlaubt weiter, dass auf der Rückseite der Ebene E4, also hinter dem mit 180 bezeichneten Teilsegment für H2 ein Teilsegment 181' für O₂ angeordnet ist (und umgekehrt), wie in Fig. 23 gezeigt. In Fig. 22 wird optional ein Mikrokanal 152' angedeutet, mit dem Kühlmedium 133', das durch mindestens eine Venturidüse 237"' strömt und dessen Fließrichtung aber um 180° gegenüber dem Kühlmedium 133 im Mikrokanal 152 orientiert ist, was vorteilhaft einen gleichmäßigen Austrag der Prozesswärme aus dem Stapel begünstigt.

Schließlich wird in Fig. 22 gezeigt, dass im Teilsegment 180 für H₂ das H₂ 42 aus Querkanälen 249, 249' in der Ebene E0 und über Verbindungskanäle 143, 143' beidseitig in die Mikrokanäle 148 in der Ebene E2 einströmt und weiter über Mikrobohrungen 41 in der Ebene E1 in die H₂-GDL 11, wie in Fig. 2 gezeigt. Aus der H₂-GDL 11 werden überschüssiges Gas H₂ 45 vermischt mit inerten Gasphasen über Mikrobohrungen 44 in der Ebene E1, wie in Fig. 2 gezeigt und Mikrokanälen 149 in Ebene E2 beidseitig ausgeströmt und weiter in die Verbindungskanäle 144, 144' und in die Querkanäle 250, 250' in der Ebene E0. Sowohl die Querkanäle als auch die Mikrokanäle werden beidseitig angeströmt bzw. abgeströmt, zur Reduzierung der Druckverluste oder Reduzierung der Kanalquerschnitte.

Fig. 23 zeigt als Schnitt E-E nach Fig. 21 einen Zellenstapel 1 mit zwei Zellen 2 und 2' mit jeweils drei Teilzellen 173, 173' und 173" in serieller Verschaltung 172, die integrierten Teilstrompfade 169 von Teilsegment für H₂ 180 zu Teilsegment für O₂ 181 und Strompfade 81 von Zelle 2 zu Zelle 2' in einem KMM 166 mit mehreren Teil-KMM 167 mit einer H₂-O₂-Struktur. Mit 9 ist der Stapelrand bezeichnet, mit 5,6 die den Zellenstapel 1 abschließenden Endplatten, und beispielhaft mit 160 die Teil-MEA der Teilzelle 173', die hier in der Ebene E0 nach Fig. 18d in die Teil-MEA-Gruppe 159 integriert sind, die mit Potentialtrennungen 159 ausgestattet ist.

Der Aufbau des Zellenstapels 1 mit Zellen 2, 2' und Teilzellen 173, 173', 173", 173"' entspricht in analoger Weise dem in Fig. 15 gezeigten Stapelausschnitt. Wesentlich ist dabei, das durch die Wahl einer geraden Anzahl n Zellen (2₁...2ₙ) und einer ungeraden Anzahl m Teilzellen (173₁...173ₘ) in jeder Zelle, die auf jeder Seite einer Ebene E4 als KMM-Elemente angeordneten Ebenen E1, 2, 3, die mit 185, 185' bezeichnet sind, der in einem KMM 166 gegenüberliegenden Teilzellen 173 und 173"' durch den Strompfad 81 direkt verbunden werden können. Der vorher schon gezeigte Luftkanal 243 ist hier beispielhaft zwischen den KMM-Elementen 185" und 185"' angeordnet.

Vorteilhaft ist dabei, dass ein KMM 166 mit allen erforderlichen Strompfaden 81,169 als eine Baugruppe gefertigt werden kann, was bei einer Anordnung, wie in Fig. 16 beispielhaft gezeigt, nicht möglich ist. Mit 170 ist der Strompfad bezeichnet, der den Weg des Stroms durch die Zellen und Teilzellen zeigt. Auf einer Seite des Zellenstapels 1 sind die Pole 83 (+) und 84 (-) angeordnet, welche die Stromableitung aus der Brennstoffzelle ermöglichen.

In den Stapel 1 integriert, aber an der Stapelseite, befindet sich der Strompfad 81, also eine elektrisch sehr gut leitende und mechanisch stabile Struktur, der den Strom gezielt von einer Seite des KMM 3 bzw. von einer Seite eines entsprechenden Teil-KMM 167 zur anderen Seite führt, indem die Teilzellen 173, 173"' der Zellen 2, 2' miteinander kontaktiert werden. Beispielhaft ist in Fig. 23 der Strompfad 81 als Fügeteil ausgeführt, das beidseitig mit den KMM-Elementen 185, 185' verbunden ist, wobei auf den Strom gut leitende innige metallische Dicht-. Trenn-, und Kontaktebenen 39, 39' Wert gelegt wird, welche die gesamte Fläche zwischen den Fügeteilen umfasst, elektrisch sehr gut leitend ist und einen geschweißten, gesinterten, gelöteten, gebondeten oder durch Umformung oder Diffusionseffekte erzeugten Charakter aufweisen kann. Für die Ebene E4 sind ebenfalls Potentialtrennungen vorgesehen, mit 178 bezeichnet.

Ferner werden in Fig. 23 beispielhaft die Dicht-. Trenn-, und Kontaktebenen 39, 39' angedeutet, die eine lösbare aber gasdichte Trennung der Ebene E0 einer Zelle 2 und der jeweils beidseitig angeordneten KMM 3, 3' oder 166, 166' oder 167, 167' darstellen, was sich besonders vorteilhaft auf die nach Ablauf der Gerätelebensdauer zu erwartenden Recyclingprozedur auswirkt

In Fig. 23a wird beispielhaft ein durch Umformung erzeugter Strompfad 85 am Stapelrand 9 als Variante zu Fig. 23 gezeigt, der durch zweckmäßiges Kröpfen der Enden der KMM-Elemente 185 und 185' entsteht, die jeweils aus den Ebenen E1, E2, E3 bestehen, wobei auf eine den Strom gut leitende innige metallische Dicht-. Trenn-, und Kontaktebene 39 Wert gelegt wird, welche die gesamte Fläche zwischen den Fügeteilen umfasst, elektrisch sehr gut leitend ist und einen geschweißten, gesinterten, gelöteten, gebondeten oder durch Umformung oder Diffusionseffekte erzeugten Charakter aufweisen kann. Mit 170 ist der Strompfad bezeichnet, mit 173, 173"', in serieller Verschaltung 172, die verbundenen Teilzellen und mit 167 der Teil-KMM mit H2-O2-Struktur.

Nachfolgend werden in Schnitten die Einströmebene für Gase in Fig. 25 (Schnitt F) und die Ausströmebene für Gase in Fig. 25a (Schnitt G) gezeigt. Durch die Anordnung von Kanälen und Dichtflächen erübrigen sich die vorher erforderlichen Dicht- und Stützstrukturen zwischen Teilzellen 173, 173' wie beispielsweise in Fig. 15 mit 175 bezeichnet und angedeutet.

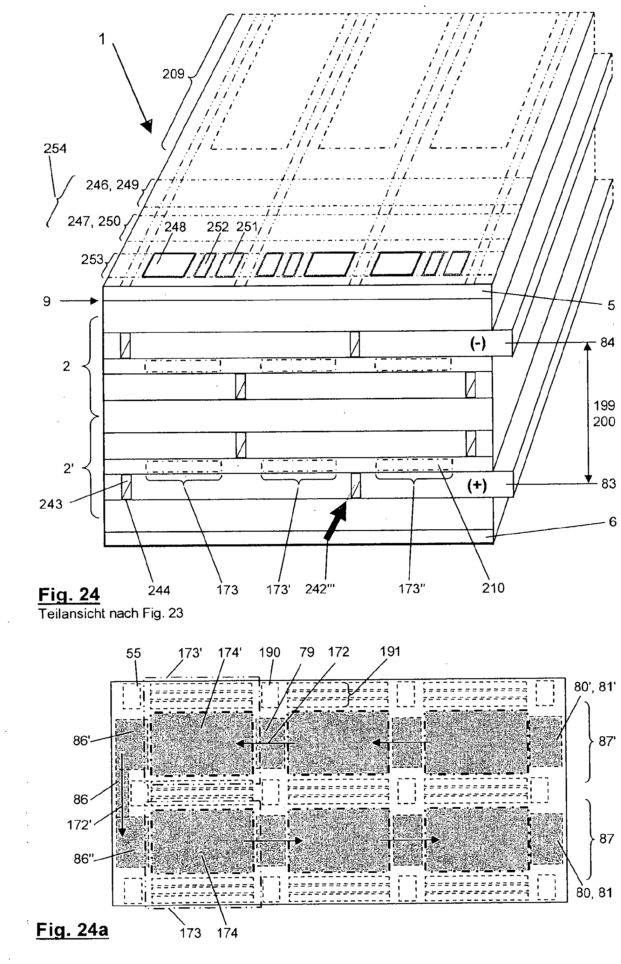

Mit Fig. 24 wird eine Teilansicht von Fig. 23 gezeigt, als dreidimensionaler Teil (Schnittlinie) des Zellenstapels 1 ohne Stapelgehäuse 70. Es ist die Lage 210 der Teilzellen 173, 173' und 173", die Lage der Längskanalzone 253, mit den Längskanälen 248, 251 und 252, sowie die Lage Querkanalzone 254 mit den Querkanälen 246, 249, 247, 250 und die der Teil-MEA-Zone 209 dargestellt. Auf einer Seite des Stapels sind die Pole 83 (+) und 84 (-) zu erkennen und an der Stirnseite die Lufteinströmung 244 für die Gehäuseluft 242"' aus dem hier nicht gezeichneten Stapelgehäuse 70, in den Luftkanal 243. Es findet also keine direkte Einströmung von Luft in die 02- Mikrokanäle vom Stapelrand 9 in die Teilsegmente für O₂ 181 statt, wie dies prinzipiell in Fig. 5 dargestellt ist, sondern indirekt über die dem Luftkanal 243 zugeordneten Querkanäle 246, 246'. Mit 5 und 6 sind die Endplatten des Stapels bezeichnet. Mit 199 ist die resultierende Stapelspannung U[Volt] und mit 200 der resultierende Stapelstrom I[A] bezeichnet.

Nachfolgend wird in Figuren Fig. 25 (Einströmebene), Fig. 25a (Ausströmebene), Fig. 25b (Venturidüse im Mikrokanal), Fig. 25c (Kondensatabsaugung) und Fig. 25d mit Varianten 25d V1 und 25d V2 (prinzipielle Anordnung der Gas- und Kühlkanäle im KMM) auf die Gasführung von H₂, O₂, des Kühlmediums KM und die dafür erforderliche Kanalstruktur weiter eingegangen. Ferner ist prinzipielle Anordnung der verschiedenen Verbindungskanäle zwischen Querkanälen und Längskanälen angedeutet, wie auch schon in Fig. 22 gezeigt.

Mit Fig. 24a wird die Ansicht eines weiter entwickelten Stapels 1 gezeigt, dessen Ursprung die Lösung aus Fig. 17 war, indem jetzt eine Möglichkeit geschaffen wird, die Gesamtreaktionsfläche einer Zelle 2 als Summe vieler Teilreaktionsflächen 174, 174', ... aufzubauen, die den Teilzellen 173, 173' in Zeilen 87, 87', ... zugeordnet sind. Die Bereitstellung großer Reaktionsflächen, mit z.B. 1m², verknüpft mit den Vorteilen klein bauender Teilzellen ist besonders günstig für die Gestaltung stationärer Brennstoffzellen zur Erzeugung von Strom oder Elektrolyseuren zur Erzeugung von H₂ und oder O₂, jeweils mit großen Leistungen. Gezeigt werden Verbindungszonen 86, 86' und 86", als eine Lösung für die Führung des Stroms von einer Zeile 87 zur nächsten Zeile 87' in einer Zelle 2 mit serieller Verschaltung 172, 172' der Teilzellen 173, 173' ... Eine weitere Lösung dafür und für die Führung des Stroms von Zelle 2 zu Zelle 2' besteht darin, in geeigneter Weise die Pole 83, 84 jeder Zeile 87, 87' in geeigneter Weise miteinander zu kombinieren und zu verschalten. Insofern wurde mit Fig. 24 ein Stapel mit einer Zeile gezeigt.

Fig. 25 stellt den in Fig. 23 bezeichneten Schnitt F durch die Einströmebene eines KMM 166 dar. Zu erkennen ist, dass die Mikrokanäle 148 für H2 und 150 für O₂ von beiden Seiten angeströmt werden. Ferner ist die beispielhafte Anordnung der Luftdurchlässe 214, 214' in der Ebene E3 für einströmendes O₂ und der Gasdurchlässe 215, 215' in der Ebene E1 für einströmendes H₂ dargestellt, die zur Verbindung von Mikrokanälen und Querkanälen erforderlich sind. Weiter ist zu erkennen, dass die Querkanäle für H₂ in der Ebene E0 und die Querkanäle für O₂ in der Ebene E4 in getrennten Ebenen geführt werden. Im Vergleich mit den Kanalanordnungen, wie sie beispielhaft in Fig. 12, 17 und 17a gezeigt werden, begünstigt die in Fig. 25 gezeigte Lösung einen geringeren Stapelquerschnitt und verhindert die Gasdiffusion zwischen Querkanälen mit verschiednen Gasen.

Der mit 217', 217" bezeichnete Kanalboden in Mikrokanälen 246, 246', 247, 247' ist eine optionale Struktur und dient der mechanischen Stabilisierung der Ebene E4. Mit 38, 38' sind die Fügeebenen bezeichnet, in der die Folie E3 mit der Folie E1+ E2 flächig verbunden wird, wobei auf einen innigen metallischen Kontakt in dieser Ebene Wert gelegt wird, welche die gesamte Fläche zwischen den Fügeteilen umfasst, elektrisch sehr gut leitend ist und einen geschweißten, gesinterten, gelöteten, gebondeten oder durch Umformung oder Diffusionseffekte erzeugten Charakter aufweisen kann. Insofern stellt diese Lösung eine Variante V7 der in Fig. 13 beschriebenen Variation der Ebenen in einem KMM dar.

Mit 179, 179' sind Potentialtrennungen bezeichnet, die der Ebene E0 zugeordnet sind und je nach Bauart des Zellenstapels 1 fixiert werden, entweder auf beiden Seiten der Kernfolie 187 oder jeweils auf der Ebene E1 des KMM-Segments 166, wobei dann die Kernfolie 187 frei liegt, oder auf einer Seite der Kernfolie 187 und dann auf der entsprechenden Seite der Ebene E1 des KMM-Segments 166, wobei dann eine Seite der Kernfolie 187 freiliegt.

Mit 178, 178' sind Potentialtrennungen bezeichnet, die der Ebene E4 zugeordnet sind und je nach Bauart des Stapels 1 fixiert werden, entweder auf beiden Seiten der Kernfolie 186 oder jeweils auf der Ebene E3 des KMM-Segments 166, wobei dann die Kernfolie 186 frei liegt, oder auf einer Seite der Kernfolie 186 und dann auf der entsprechenden Seite der Ebene E3 des KMM-Segments 166, wobei dann eine Seite der Kernfolie 186 freiliegt.

Mit 89, 89' werden die MEA-Fenster bezeichnet, die in E0, der Zellenebene 27 angeordnet sind und MEA's 4 bzw. Teil-MEA's, 160, 160' aufnehmen, die dort einfach eingelegt werden oder fixiert sind. Mit 201, 201' sind die Stütz- und Dichtelemente der Teil-MEA bezeichnet, die auch die Dichtfunktion der in Fig. 1a bezeichneten ersten und zweiten Dichtungen 24 und 25 übernehmen zur gasdichten Trennung der Gasräume H₂ und O₂ in den Gassegmenten 30, 31 und Teilsegmenten 180, 181 von anderen Teilen des Stapels 1, wie dies vorher schon beschrieben wurde.

Mit 156 wird die abgestützte MEA-Struktur in E0 mit MEA-Fenster 89 in der Ebene E0 der Zellenebene 27 bezeichnet, bestehend aus der Kernfolie 187 und den Potentialtrennungen 179, 179', wobei die Oberflächen der Potentialtrennungen auf der E0-Seite jeweils dichtende Eigenschaften aufweisen. Die hier gezeigte Anordnung sieht, wie vorher schon beschrieben, vor, dass die Teil-MEA 160 bei der Montage in die vorbezeichneten MEA-Fenster eingelegt werden.

Fig. 25a stellt den in Fig. 23 bezeichneten Schnitt G durch die Ausströmebene eines KMM 166 dar. Zu erkennen ist, dass die Mikrokanäle 149 für aus der H2-GDL 176 ausströmendes H₂ an beiden Seiten über weitere Gasdurchlässe 215"' in der Ebene E1 abgeströmt werden, während der Mikrokanal 151 für das aus der O₂-GDL 177 ausströmende O₂ über Luftdurchlässe 213 in Ebene E3 mit dem Saugbereich der Venturidüsen V1 237, 237', 237" vorzugsweise mehrfach verbunden ist. Gezeigt wird weiter, wie Kühlmedium KM 133 über Gasdurchlässe 214", 214"' in der Ebene E3 und die Verbindungskanäle 135 in den Mikrokanal 152 einströmt, als Treibgas 231 die Venturidüse V1 237 durchströmt und dann über die Gasdurchlässe 216, 216' in Ebene E3 und Verbindungskanäle 137 in den Querkanal 247' weitergeleitet wird. 237', 237" stellen Symbole weiterer Venturidüsen 237 dar, der Aufbau der Ebene E0 entspricht im Übrigen dem in Fig. 25 gezeigten Aufbau.

Fig. 25b stellt ein Detail aus Fig. 25a dar, die Ausströmung des Kathodengases 51 durch die Mikrobohrung 50 aus der Teil-O₂-GDL 177 in den Mikrokanal 151 und von dort als Saugmedium 235 in den Saugbereich 234 der Venturidüse 237. Dort mischen sich die Gasströme 231 und 259 zum Gemisch 236. Gezeigt wird weiter, die Ausströmung des Gemischs 236 aus dem Mikrokanal 152 mit Venturidüse 237 über den Luftdurchlass 216 in den Verbindungskanal 137. Die Eigenschaften der Venturidüse 237 wird unter anderem durch das Verhältnis der Strömungsquerschnitts im Mikrokanal 152 zum Strömungsquerschnitt im Saugbereich 234, den mit 232 und 233 bezeichneten Düsenwinkeln α und β sowie dem Querschnitt der Luftdurchlässe 213. Dies gilt in analoger Weise auch für die Venturidüsen V2 238 und V3 239.

In Fig. 25c, einem Ausschnitt von Fig. 25b, wird eine optionale beispielhafte Lösung gezeigt, die der vollständigen aktiven Entleerung der Mikrokanäle 151 dient, auf die Entfernung des Produktwassers als Anteil des Gemischs 236 abzielt und insbesondere dem Produktwasser, Kondensat und der Abluft, mit 267 bezeichnet, aus dem Mikrokanal 151, die sonst auf die Schwerkraft (passive Förderung) ggf. angewiesen sind. Während des Betriebs der Brennstoffzelle, jedoch insbesondere im Abschaltmodus ist eine definierte Abführung von Gasen und Produktwasser bzw. von Kondensaten wichtig für den einwandfreien Betrieb, ebenso im Anfahrmodus, vor dem eigentlichen Start der Brennstoffzelle. Vorgeschlagen wird deshalb eine dritte Venturidüse V3 265, die beispielsweise in jedem Verbindungskanal 137 angeordnet wird. Durch die Kanalöffnung 269 strömt mit 267 bezeichnet Produktwasser, Kondensat und Abluft aus dem Mikrokanal 151 in einen Bypass, der als Verbindungskanal 266 bezeichnet ist, zur Venturidüse V3 265 im Verbindungskanal 137. Der Verbindungskanal 266 mündet mit der Einströmöffnung für das Saugmedium 268 im Saugbereich der Venturidüse V3 265. Analog zu Fig. 21a dient das Gasgemisch 236 aus dem Mikrokanal 152 als Treibgas in der Venturidüse V3 265 und 267 als Saugmedium bezeichnetes Kathodengas, insbesondere Produktwasser, flüssig oder dampfförmig.

Figur 25d1 zeigt den in Fig. 25a bezeichneten Schnitt im Bereich der Venturidüse 237 mit den für die Medienführung erforderlichen Strukturen in einer ersten Variante. Zu sehen sind die Ein- / Ausströmung von 02, mit 22 bezeichnet und von H2 mit 23 bezeichnet, sowie
1. die Mikrokanäle 148 für die H₂-Einströmung in die H₂-GDL 176 mit zugeordneten Mikrobohrungen 41
2. die Mikrokanäle 149 für die H₂-Ausströmung aus der H₂-GDL 176 mit zugeordneten Mikrobohrungen 44
3. die Mikrokanäle 150 für die O₂-Einströmung in die O₂-GDL 177 mit zugeordneten Mikrobohrungen 47
4. die Mikrokanäle151 für die O₂-Ausströmung aus der O₂-GDL 177 mit zugeordneten Mikrobohrungen 50

Im Unterschied zu den in Fig. 1 und Fig.2 gezeigten Lösungen, strömt hier das abströmende Gas aus dem O₂-Mikrokanal 151 für die Ausströmung von O₂ über einen Luftdurchlass 213 in den Mikrokanal 152 für das Kühlmedium 133 im Bereich des Saugbereichs der Venturidüse V1 237. Vorteilhaft ist, dass der einem Mikrokanal 151 für die Ausströmung von O₂ zugeordnete Mikrokanal 152 für das Kühlmedium 133 breiter sein kann als der Mikrokanal 151. Der mit 217 bezeichnete Kanalboden im Mikrokanal 152 ist eine optionale Struktur und dient der mechanischen Stabilisierung der Ebene E4.

Figur 25d2 zeigt eine zweite Variante zu Fig. 25d1 und unterscheidet sich durch die Gestaltung des Mikrokanäle 152 für das Kühlmedium 133 und der Kernfolie 186 der Ebene E4.

Die Mikrokanäle 152 für KM 133 haben hier etwa die Breite der Mikrokanäle 150, 151 für O₂. Ergänzt werden die Mikrokanäle 152 mit Venturidüsen V1 237 durch parallel dazu angeordnete Mikrokanäle 153 für das Kühlmedium, die jedoch keine Venturidüsen aufweisen, so wie hier beispielhaft dargestellt.

Die Ausrichtung der Mikrokanäle 152 und 153 sieht eine wechselnde Anordnung der Kanalböden 217" und 217"' vor und optional im Mikrokanal 153 eine Kanalrippe 154.

Vorteilhaft ist besonders, das zu besseren Auskopplung und Ableitung der Prozesswärme das Kühlmedium, z.B. Luft 66 in den Kanälen 152, 153 im Gegenstrom geführt werden kann.

Optional können auch zwei verschiedene Kühlmedien 66 (KM1) und/oder 66' (KM2) gleichzeitig Verwendung finden können, nämlich Luft als KM1 im Mikrokanal 152 und ein flüssiges Medium als KM2, z.B. Wasser, im Mikrokanal 153.

Die Anordnung der Mikrokanäle 152 und 153 dient auch der mechanischen Stabilisierung der Ebene E4 und außerdem der Vergrößerung der Wärme transportierenden Oberfläche in den Mikrokanälen für das Kühlmedium.

Alle genannten Merkmale, auch die den Zeichnungen allein zu entnehmenden, werden allein und in Kombination als erfindungswesentlich angesehen.

## Patentansprüche

1. Brennstoffzelle bestehend aus einem Zellenstapel (1) mit mehreren Zellen (2, 2') und Endplatten (5, 6) an jedem Stapelende, mit einer Membran-Elektrodeneinheit (4) - auch als MEA bezeichnet - mit Elektrodenanode- und -kathode, Anoden- und Kathodenkatalysatoren (12, 14) und dazwischen angeordneter Elektrolytmembran (15) mit Gasdiffusionslagen (11, 13), einem Kühl- und Medienmodul (3) sowie zugeordneten Medienleitungen für Sauerstoff, Wasserstoff und Kühlmedium, wobei das Kühl- und Medienmodul (3) - auch als KMM bezeichnet - unter Verzicht auf Bipolarplatten nur der Bereitstellung von Kühl- und Gaskanälen und der Stapelbildung dienend ausgeführt ist und wobei die Elektrodenabdeckungen (E1) der Ableitung, nicht aber der Durchleitung des Stroms dienend ausgebildet sind,
**dadurch gekennzeichnet,**
**dass** die Zellen (2) in einer Zellenebene (27) aus zwei oder mehreren Teilzellen (173, 173') bestehen, die jeweils eine Teilelektrodeneinheit bzw. Teil- MEA (160, 160', 160") mit je einer Teilmembran (161) und Teilreaktionsflächen (174) und zugeordneten Teilgasdiffusionslagen (176, 177) und zugeordnetem Teilkühl- und Medienmodul (166; 164, 165) und zugeordnetem Teilgassegment H₂ (180) und Teilgassegment O₂ (181) aufweisen und dass die Zellen (2) und Teilzellen (173, 173') in Reihe geschaltet und als Strompfade (81) bzw. Teilstrompfade (169) ausgebildete Stromleiter ohne Bipolarplatten vorgesehen und in den Zellenstapel (1) integriert sind
und die Teilzellen (173, 173') in einer oder mehreren Stapelzeilen (87, 87') angeordnet sind.

2. Brennstoffzelle nach Anspruch 1,
**dadurch gekennzeichnet,**
**dass** die eine Zelle (2) bildenden Teilzellen (173, 173') untereinander und mit der nächsten Zelle (2') über die im Zellenstapel (1) angeordneten Teilstrompfade (169) und den am Stapelrand (9) verlaufenden Strompfad (81) seriell bzw. in Reihe geschaltet sind, wobei benachbarte Zellen (2, 2') und Teilzellen (173, 173') in der Zellenebene (27) und in der KMM-Ebene (28) durch Potentialtrennungen (178, 178', 179) dort elektrisch getrennt sind, wo kein Strom zwischen Zellen (2, 2') oder Teilzellen (173, 173') fließen soll, wobei die Potentialtrennungen (178, 178', 179) aus dünnen, elektrisch nicht leitenden Kunststofffolien oder aus elektrisch nicht leitenden Oberflächen, mit welchen die gefügten Folien, dort wo kein Strom fließen soll, ausgestattet sind, und wobei die Teilzellen (173, 173') in einer Stapelzeile (87) vorzugsweise in Reihe verschaltet sind und die Stapelzeilen (87, 87') einer Zelle (2) untereinander in Reihe oder auch parallel verschaltet sind.

3. Brennstoffzelle nach einem der vorhergehenden Ansprüche,
**dadurch gekennzeichnet,**
**dass** die als Strompfad (81) und auch die als Teilstrompfade (169) dienenden KMM-Zonen, vorzugsweise integriert in KMM-Elemente (183, 184, 185, 205, 206) und die KMM-Elemente (183, 184, 185, 205, 206) selbst, insbesondere die Elektrodenabdeckungen (E1) und mit Elektrodenabdeckungen (E1) leitend verbundenen Ebenen (E2) und/oder (E3) und Stromanschlüsse (83, 84) am Stapel (1) eine gute Leitfähigkeit aufweisend ausgebildet und dazu vorzugsweise mit einer Nano-Materialbeschichtung oder über Galvanik aufgetragenen, stromleitenden, metallischen und elektrochemisch widerstandsfähigen Oberflächen versehen und von Klebstoff freigehalten sind, oder insgesamt aus einem mit sehr gut leitendem metallischen und elektrochemisch widerstandsfähigen Material oder einem mit Nano-Material dotierten oder vermischten Material bestehen.

4. Brennstoffzelle nach Anspruch 1,
**dadurch gekennzeichnet,**
**dass** die Membranelektrodeneinheit (4) vorzugsweise eine Reaktionsfläche (17) von 400 cm² aufweist und zu einer geraden Anzahl von Zellen (2, 2') zusammengeschaltet ist, während jede Zelle (2) vorzugsweise eine ungerade Anzahl von Teilzellen (173, 173') mit entsprechend gleichgroßen Teilreaktionsflächen (174, 174') aufweisend ausgebildet ist und eine Zelle (2) nicht nur eine, sondern mehrere Stapelzeilen (87, 87') aufweist, mit einer Reaktionsfläche (17) von 1 m² als Summe vieler Teilreaktionsflächen (174, 174'), die entsprechenden Teilzellen (173, 173') zugeordnet sind
und **dass** jede Membranelektrodeneinheit (4, 160) und dabei vor allem die MEA-Berandung (19) und/oder das die Zellen (2, 2', 173, 173') berandende Stütz- und Dichtelement (16, 175) eine definierte Höhe, d. h. eine MEA-Kompression (20) aufweist und mit Dichtungen (24, 25) einmal die MEA (4, 160) an der MEA-Berandung (19) in der Zellenebene (18) und die Zellenebene (18) im Stapel (1) fixierend ausgebildet ist.

5. Brennstoffzelle nach Anspruch 1,
**dadurch gekennzeichnet,**
**dass** die den Strompfad (81, 169) aufweisenden Kühl- und Medienmodule (3, 163, 166), die beidseitig der Membranelektrodeneinheit (4, 160) - auch als Ebene (E0) bezeichnet - mit den leitenden Gassegmenten (30, 31, 180, 181) angeordnet sind ebenso wie die Kühlsegmente (32, 182) aus einzelnen Folien, vorzugsweise aus Aluminium-, Metall- und/oder Kunststofffolien (34, 35, 36, 37) bestehen und gefügt miteinander verbunden, verschweißt oder verklebt sind und denen je nach Aufbau eines Kühl- und Medienmoduls (3, 163, 166) bestimmte funktionale Ebenen (E1, E2, E3, E4) zugeordnet sind, wobei die Ebenen E1 eines H2-Segments (30, 180) und/oder 02-Segments (31,181) auf ihren der Membran (15, 161, 227) zugewandten Seiten vorzugsweise mit integrierten Gasdiffusionslagen in GDL-Zonen (278, 279) ausgestattet sind, die aus mikro- und/oder makroporösem Material bestehen, mit sehr guter elektrischer Leitfähigkeit und elektrochemischer Beständigkeit und Eigenschaften, die den Gastransport in die GDL-Zonen (278, 279) und aus den GDL-Zonen (278, 279) sicherstellen..

6. Brennstoffzelle nach Anspruch 5,
**dadurch gekennzeichnet,**
**dass** ein Kühl- und Medienmodul (3, 163, 166) vorzugsweise aus einer Kernfolie (186) aus Aluminium -vorzugsweise mit je einer Potentialtrennung (178, 178') auf der Vorder- und Rückseite- als durchgehende Tragstruktur ausgebildet in der Ebene E4 vorgesehen ist, welche die Fläche des Stapelquerschnitts (8) aufweist und auf beiden Seiten der Kernfolie (186) mit Potentialtrennungen (178, 178') KMM-Elemente (183, 184, 185, 205, 206) fixiert sind, vorzugsweise durch Kleben, wobei zwischen KMM-Elementen (183, 184, 185, 205, 206) Zwischenräume gelassen sind, die der elektrischen Trennung der KMM-Elemente (183, 184, 185, 205, 206) untereinander dienen und gleichzeitig als Luftkanal (243), zur Einströmung von Gehäuseluft (242"'), die als Kühlmedium KM (66, 133) und/oder als Kathodengas (258) bzw. 02 dient, in den Stapel (1).

7. Brennstoffzelle nach einem der vorhergehenden Ansprüche,
**dadurch gekennzeichnet,**
**dass** die auf einer Seite vom leitenden Gassegment H₂ (30, 180) und auf der anderen Seite vom leitenden Gassegment O₂ (31, 181) begrenzte MEA (4) bzw. die Teil-MEA (160) über nicht leitende Stütz- und Dichtelemente (16, 158, 175) gehalten sind und dass das Kühl- und Medienmodul (3, 163, 166) mit einer als die nicht leitenden Zonen im Kühl- und Medienmodul (3, 163, 166) umgehender Strompfad (81, 169) dienenden und an das Gassegment (30, 31, 180, 181) O₂ bzw. H₂ anschließendem Kühlsegment (32, 182) ausgerüstet ist.

8. Brennstoffzelle nach Anspruch 7,
**dadurch gekennzeichnet,**
**dass** eine abgestützte MEA-Struktur (162) mit integrierten MEA (4, 160) und mit einer abgestützten MEA-Struktur (156), ein MEA-Fenster (89) mit eingelegten MEA (4, 160) aufweist, wobei Teil-MEA-Gruppen (159, 159') mit Stütz- und Dichtkörpern (158, 158') und in die Stütz- und Dichtkörper (158, 158') integrierten MEA (4, 160) ausgerüstet sind, während die Teil-MEA-Gruppe (159) mit Stütz- und Dichtkörper (158) zwischen MEA-Leisten (157) integriert ist und die Teil-MEA-Gruppe (159') mit Stütz- und Dichtkörper (158') in einen MEA-Rahmen (157') mit MEA-Fenster (89') eingelegt ist, wobei die Stütz- und Dichtkörper (158, 158') umlaufende Dichtungsrillen (263) zur Aufnahme des Kompressionsvolumens der MEA-Berandung (19) aufweist, und dass die abgestützten MEA-Strukturen (162, 156) in E0 bzw. MEA-Leisten und MEA-Rahmen (157, 157') für eine oder mehrere Teilzellen (173, 173') in einer Stapelzeile (87) ausgelegt sind, während die abgestützten MEA-Strukturen (162, 156) in E0 bzw. MEA-Leisten und -Rahmen (157, 157') in E0 für viele Teilzellen (173, 173') in einer oder mehreren Stapelzeilen (87, 87') ausgelegt sind.

9. Brennstoffzelle nach Anspruch 5,
**dadurch gekennzeichnet,**
**dass** die Kühl- und Medienmodule (3, 163, 166) mit ihren vorzugsweise Aluminiumfolien (34, 35, 36, 37) mit Mikrobohrungen (41, 44, 47, 50) und Mikrokanälen (40, 43, 46, 49) für H₂ und O₂ für eine getrennte und gleichmäßige Gasführung einströmender Gase in die Gasdiffusionslage (11, 13, 176, 177) und ausströmender Gase aus der Gasdiffusionslage (11, 13, 176, 177) ausgerüstet sind, wobei die Mikrobohrungen (41, 44, 47, 50) und die Mikrokanäle (40, 43, 46, 49) unter gleichmäßiger Gasströmung/-verteilung und der Reduzierung von Druckverlusten getrennt über Querkanäle (102, 112, 123) und Längskanäle (26) mit Verbindungskanälen (136, 137, 138, 139, 140) oder Gasöffnungen (100, 105, 110, 115, 118) oder Mikrokanalverlängerungen (107) am Stapelrand (9) für O₂ verbunden sind, wobei vorzugsweise die Querkanäle für die Einströmung und Ausströmung für H2 (102, 112, 139, 249) und für 02 (117, 246) in verschiedenen Ebenen -E0 oder E4- angeordnet sind.

10. Brennstoffzelle nach Anspruch 5,
**dadurch gekennzeichnet,**
**dass** die Kühl- und Medienmodule (3, 163, 166) mit ihren vorzugsweise Aluminiumfolien (34, 35, 36, 37) für die Kühlmediumführung mit horizontalen und vertikalen Mikrokanälen (65, 69) und Querkanälen (122, 132) in horizontalen oder vertikalen Querkanalzonen (58, 62) versehen und über Verbindungskanäle (125, 135) oder Mediumöffnungen verbunden sind, wobei die Kühlmediumsführung von einer Zelle (2) zur nächsten Zelle (2') im Gegenstrom erfolgt, indem die Strömungsrichtung in den Mikrokanälen (65, 69) um 180°C wechselt, wobei auch parallel zum Mikrokanal (152) mit Venturidüse (V1), vorzugsweise mit Luft als Kühlmedium KM (133), ein zweiter Mikrokanal (153) ohne Venturidüse angeordnet ist, der ein zweites Kühlmedium führt nämlich Luft oder eine Flüssigkeit.

11. Brennstoffzelle nach einem der vorhergehenden Ansprüche,
**dadurch gekennzeichnet,**
**dass** der Zellenstapel (1) mit seinen Endplatten (5, 6) und einem Spannsystem (91) als eine die Zellen (2, 2'), Teilzellen (173, 173'), Kühl- und Medienmodule (3) und Teilkühl- und Medienmodule (166; 164, 165) zusammenfassende kompakte Einheit bildend ausgeführt ist und dass der Zellenstapel (1) von einem vorzugsweise aus dünnem Alu-Blech bestehenden Stapelgehäuse (70) umgeben und vorzugsweise darin elastisch angeordnet bzw. aufgehängt ist und dass in den Endplatten (5, 6) oder separaten Volumenbündelungen (255) die einzelnen Gase (H₂, O₂ und Kühlmedium) sinnvoll zusammengeführt sind und dass am Stapelgehäuse (70) eine elektrische Schnittstelle (91) zur Durchführung des Stapelstroms (200) von den Stromanschlüssen (83, 84) und der Anschlüsse für die Mess-, Steuer- und Regeltechnik angeordnet ist.

12. Brennstoffzelle nach einem der vorhergehenden Ansprüche,
**dadurch gekennzeichnet,**
**dass** eine oder mehrere Venturidüsen (V1) den Mikrokanälen (152), eine oder mehrere Venturidüsen (V2) dem Stapelgehäuse oder auch dessen Umgebung zur aktiven Unterstützung der Ausströmung aus den O₂-Quer- und Längskanälen (247, 248) vorgesehen sind, wobei zur Unterstützung des Ausströmens von Kondensat und O₂ aus den Mikrokanälen (152) zusätzlich Venturidüsen (V3) in den Mikrokanälen (152) angeordnet oder die Mikrokanäle entsprechend geformt sind und die Ausströmung von O₂ aus dem Mikrokanal (151) auch direkt über die O₂-Gasöffnung (113) in den Saugbereich (234) der im Mikrokanal (152) für das Kühlmedium KM (133) angeordneten Venturidüse V1 (237) erfolgt, wobei für die Ausströmung von O₂ keine besonderen Quer- oder Längskanäle erforderlich sind und die Mikrokanäle (152) und/oder die O₂₋Quer- und Längskanäle (247, 248) und/oder die Venturidüsen (237, 238, 265) das Ausströmen des Gases O₂ oder eines Gasgemisches oder des Produktwassers aus den O₂-Gasräumen bzw. den vorgeordneten Mikrokanälen (151) und/oder den O₂-Quer- und Längskanälen (247, 248) aktiv unterstützend ausgebildet sind.

13. Zellenstapel in Form eines Elektrolyseurs zum Erzeugen von Gas wie Wasserstoff und Sauerstoff aus Wasser mit einer Brennstoffzelle, bestehend aus einem Zellenstapel (1) mit mehreren Zellen (2, 2') und Endplatten (5, 6) an jedem Stapelende, mit einer Membran-Elektrodeneinheit (4) - auch als MEA bezeichnet - mit Elektrodenanode- und -kathode, Anoden- und Kathodenkatalysatoren (12, 14) und dazwischen angeordneter Elektrolytmembran (15) mit Gasdiffusionslagen (11, 13), einem Kühl- und Medienmodul (3) sowie zugeordneten Medienleitungen für Sauerstoff, Wasserstoff und Kühlmedium, wobei das Kühl- und Medienmodul (3) - auch als KMM bezeichnet -unter Verzicht auf Bipolarplatten nur der Bereitstellung von Kühl- und Gaskanälen und der Stapelbildung dienend ausgeführt ist und wobei die Elektrodenabdeckung (E1), der Stromleiter zugeordnet sind, der Ableitung, nicht aber der Durchleitung des Stroms dienend ausgebildet ist,
**dadurch gekennzeichnet,**
**dass** die Stromleiter ohne Bipolarplatten als Strompfade (81) oder Teilstrompfade (169) ausgebildet und in den Zellenstapel (1) integriert und einerseits mit einem Stromversorger wie Windkrafträdern und andererseits mit den Stromabnehmern im Zellenstapel (1) verbunden sind, wobei die Medienzu- und -ableitungen einem Kühl- und Medienmodul (3) zugeordnet sind und auf beiden Seiten des Kühl- und Medienmoduls (3) entweder die Wasserstoffelektrode oder die Sauerstoffelektrode der Membranelektrodeneinheit (4) der benachbarten Zelle (2') angeordnet ist und dass die Zellen (2) in einer Zellenebene (27) aus zwei oder mehreren Teilzellen (173, 173') die in einer oder mehreren Stapelzeilen (87, 87') angeordnet sind, bestehen, die jeweils eine Teilelektrodeneinheit/Teil-MEA (160, 160', 160") mit je einer Teilmembran (161) und Teilreaktionsflächen (174) und zugeordneten Teilgasdiffusionslagen (176, 177) und zugeordnetem Teilkühl- und Medienmodul (166; 164, 165) und zugeordnetem Teilgassegment H₂ (180) und Teilgassegment O₂ (181) aufweisen und dass die Zellen (2) und Teilzellen (173, 173') in Reihe geschaltet sind.

## Claims

1. Fuel cell consisting of a cell stack (1) with several cells (2, 2') and end plates (5, 6) at each stack end having a membrane electrode assembly (4) - also referred to as MEA - with electrode anode and cathode, anode and cathode catalysts (12, 14) and between them an electrolyte membrane (15) with gas diffusion layers (11, 13), a cooling and a media module (3) as well as assigned media lines for oxygen, hydrogen and cooling medium, whereby the cooling and media module (3) - also referred to as CMM - does not use bipolar plates and is designed only to provide cooling and gas channels and to form stacks and whereby the electrode covers (E1) are designed to deflect the current but not to transmit the current,
**characterised in that**
the cells (2) in a cell level (27) consist of two or more subcells (173, 173') each having a partial electrode unit or partial MEA (160, 160', 160") each with a partial membrane (161) and partial reaction surfaces (174) and assigned partial gas diffusion layers (176, 177) and an assigned partial cooling medium and media module (166; 164, 165) and assigned partial gas segment H₂ (180) and partial gas segment O₂ (181) and that the cells (2) and subcells (173, 173') are switched in series and conductors without bipolar plates designed as current paths (81) or partial current paths (169) are provided and integrated into the cell stack (1) and the subcells (173, 173') are arranged in one or more stack lines (87, 87').

2. Fuel cell in accordance with claim 1,
**characterised in that**
the subcells (173, 173') forming a cell (2) are connected to each other and with the next cell (2') serially or in series through the partial current paths (169) arranged in the cell stack (1) and the current path (81) running at the edge of the stack (9), whereby adjacent cells (2, 2') and subcells (173, 173') in the cell level (27) and in the CMM level (28) are electrically separated through isolators (178, 178', 179) where current is not intended to flow between cells (2, 2') or subcells (173, 173'), whereby the isolators (178, 178', 179) consisting of thin non-conductive plastic foils or of electrically non-conductive surfaces with which the joined foils are provided where current is not intended to flow, and whereby the subcells (173, 173') in a stack line (87) are connected preferably in series and the stack lines (87, 87') of a cell (2) are connected with each other in series or parallel as well.

3. Fuel cell in accordance with one of the above claims
**characterised in that**
the CMM zones serving as current path (81) and the CMM zones serving as partial current paths (169), preferably integrated in CMM elements (183, 184, 185, 205, 206) and the CMM elements (183, 184, 185, 205, 206) themselves, in particular electrode covers (E1) and levels (E2) and/or (E3) connected conductively with electrode covers (E1) and electrical connections (83, 84) at the stack (1) are designed having good conductivity and for this have preferably a nano-material coating or conductive, metallic and electrochemically resistant surfaces applied by electroplating and kept free of adhesive, or consist in total of a very good conductive metallic and electrochemically resistant material or a material doped or mixed with nano-material.

4. Fuel cell in accordance with claim 1,
**characterised in that**
the membrane electrode assembly (4) has a reaction area (17) of preferably 400 cm² and is interconnected into an even number of cells (2, 2'), while each cell (2) is designed having preferably an uneven number of subcells (173, 173') with appropriately equal sized partial reaction surfaces (174, 174') and a cell (2) having not just one but several stack lines (87, 87'), with a reaction area (17) of 1 m² as the sum of many partial reaction surfaces (174, 174'), which are assigned to corresponding subcells (173, 173')
and that each membrane electrode assembly (4, 160) and here above all the MEA boundary (19) and/or the support and sealing element (16, 175) bounding the cells (2, 2', 173, 173') has a defined height, i.e. an MEA compression (20), and is designed with seals (24, 25) fixing on the one hand the MEA (4, 160) at the MEA boundary (19) in the cell level (18) and the cell level (18) in the stack (1).

5. Fuel cell in accordance with claim 1,
**characterised in that**
the cooling and media modules (3, 163, 166) having the current path (81, 169), which are arranged on both sides of the membrane electrode assembly (4, 160) - also designated level (E0) - with the conductive gas segments (30, 31, 180, 181) consist in the same way as the cooling segments (32, 182) of individual foils, preferably of aluminium, metal and/or plastic foils (34, 35, 36, 37) and are joined, welded or adhered to one another and to which specific functional levels (E1, E2, E3, E4) are assigned depending on the structure of a cooling and media module (3, 163, 166), whereby levels E1 of an H2 segment (30, 180) and/or 02 segment (31,181) are fitted on their sides towards the membrane (15, 161, 227) preferably with integrated gas diffusion layers in GDL zones (278, 279) that consist of micro- and/or macroporous material with very good electrical conductivity and electrochemical resistance and properties that ensure gas transport into the GDL zones (278, 279) and out of GDL zones (278, 279).

6. Fuel cell in accordance with claim 5,
**characterised in that**
a cooling and media module (3, 163, 166) preferably consisting of a core foil (186) made of aluminium - preferably with isolators (178, 178') on both the front and the rear - is provided designed as a continuous support structure in level E4 having the area of the stack cross-section (8) and fixed, preferably through adhesion, on both sides of the core foil (186) with isolators (178, 178') CMM elements (183, 184, 185, 205, 206), whereby spaces are left between CMM elements (183, 184, 185, 205, 206) that serve the electrical separation of the CMM elements (183, 184, 185, 205, 206) among each other and at the same time as an air channel (243) for the inflow into the stack (1) of enclosure air (242"') that serves as cooling medium CM (66, 133) and/or as cathode gas (258) or 02.

7. Fuel cell in accordance with one of the above claims
**characterised in that**
the MEA (4) or the partial MEA (160) bordered on the one side by the conductive gas segment H₂ (30, 180) and on the other side by the conductive gas segment O₂ (31, 181) are held by non-conductive support and sealing elements (16, 158, 175) and that the cooling and media module (3, 163, 166) is fitted with a cooling segment (32, 182) serving as a current path (81, 169) bypassing the non-conductive zones in the cooling and media module (3, 163, 166) and connecting to the gas segment (30, 31, 180, 181) O₂ or the H₂ cooling segment (32, 182).

8. Fuel cell in accordance with claim 7,
**characterised in that**
a supported MEA structure (162) with an integrated MEA (4, 160) and with a supported MEA structure (156), has an MEA window (89) with inserted MEA (4, 160), whereby partial MEA groups (159, 159') are fitted with supporting bodies and grommets (158, 158') and MEA (4, 160) integrated in the supporting bodies and grommets (158, 158'), while the partial MEA group (159) with supporting bodies and grommets (158) is integrated between MEA strips (157) and the partial MEA group (159') with supporting bodies and grommets (158') is inserted in an MEA frame (157') with MEA window (89'), whereby the supporting bodies and grommets (158, 158') have circumferential sealing grooves (263) to absorb the compression volume of the MEA boundary (19), and that the supported MEA structures (162, 156) in E0 or MEA strips and MEA frame (157, 157') are designed for one or more subcells (173, 173') in a single stack line (87), while the supported MEA structures (162, 156) in E0 or MEA strips and frame (157, 157') in E0 are designed for many subcells (173, 173') in one or more stack lines (87, 87').

9. Fuel cell in accordance with claim 5,
**characterised in that**
the cooling and media modules (3, 163, 166) with their preferably aluminium foils (34, 35, 36, 37) have micro holes (41, 44, 47, 50) and microchannels (40, 43, 46, 49) for H₂ and O₂ for separate and even gas conduction of inflowing gases into the gas diffusion layer (11, 13, 176, 177) and discharging gases out of the gas diffusion layer (11, 13, 176, 177), whereby the micro holes (41, 44, 47, 50) and the microchannels (40, 43, 46, 49) under even gas flow/distribution and the reduction of pressure losses are connected separately via cross channels (102, 112, 123) and longitudinal channels (26) with connection channels (136, 137, 138, 139, 140) or gas openings (100, 105, 110, 115, 118) or microchannel extensions (107) at the stack edge (9) for O₂, whereby preferably the cross channels for the inflow and discharge H2 (102, 112, 139, 249) and for 02 (117, 246) are arranged on different levels - E0 or E4.

10. Fuel cell in accordance with claim 5,
**characterised in that**
the cooling and media modules (3, 163, 166) with their preferably aluminium foils (34, 35, 36, 37) for cooling medium conduction have horizontal and vertical microchannels (65, 69) and cross channels (122, 132) in horizontal or vertical cross channel zones (58, 62) and are connected via connection channels (125, 135) or medium openings, whereby cooling medium conduction from one cell (2) to the next cell (2') takes place in the counterflow, **in that** the direction of flow in the microchannels (65, 69) changes by 180°C, whereby a second microchannel (153) without a venturi nozzle that conducts a second cooling medium, namely air or a liquid, is arranged parallel as well to the microchannel (152) with a venturi nozzle (V1), preferably with air as cooling medium CM (133).

11. Fuel cell in accordance with one of the above claims
**characterised in that**
the cell stack (1) with its end plates (5, 6) and a clamping system (91) is designed forming a compact unit comprising the cells (2, 2'), subcells (173, 173'), cooling and media modules (3) and partial cooling and media modules (166; 164, 165) and that the cell stack (1) is surrounded by a stack housing (70) consisting preferably of thin aluminium plate and is arranged or suspended preferably flexibly and that the individual gases (H₂, O₂ and cooling medium) are united expediently in the end plates (5, 6) or separate volume packages (255) and that at the stack housing (70) there is an electrical interface (91) for the provision of the stack current (200) from the electrical connections (83, 84) and the terminals for the measurement and control technology.

12. Fuel cell in accordance with one of the above claims
**characterised in that**
one or more venturi nozzles (V1) are provided for the microchannels (152), one or more venturi nozzles (V2) for the stack housing or its surrounding as well for active support of the discharge from the O₂ cross and longitudinal channels (247, 248), whereby to support the discharge of condensate and O₂ from the microchannels (152) additional venturi nozzles (V3) are arranged in the microchannels (152) or the microchannels are shaped accordingly, and the discharge of O₂ from the microchannel (151) takes place as well directly via the O₂ gas opening (113) into the suction area (234) of the venturi nozzle V1 (237) located in the microchannel (152) for the cooling medium CM (133), whereby special cross or longitudinal channels are not required for the discharge of O₂, and the microchannels (152) and/or the O₂ cross and longitudinal channels (247, 248) and/or the venturi nozzles (237, 238, 265) are designed to actively support the discharge of the gas O₂ or of a gas mixture or of the product water from the O₂ gas compartments or the upstream microchannels (151) and/or the O₂ cross and longitudinal channels (247, 248).

13. Cell stack in the form of an electrolyser for the generation of gas such as nitrogen and oxygen from water with a fuel cell, consisting of a cell stack (1) with several cells (2, 2') and end plates (5, 6) at each stack end, with a membrane electrode assembly (4) - also referred to as MEA - with electrode anode and cathode, anode and cathode catalysts (12, 14) and between them an electrolyte membrane (15) with gas diffusion layers (11, 13), a cooling and a media module (3) as well as assigned media lines for oxygen, hydrogen and cooling medium, whereby the cooling and media module (3) - also referred to as CMM - does not use bipolar plates and is designed only to provide cooling and gas channels and to form stacks and whereby the electrode covers (E1) are designed to deflect the current but not to transmit the current,
**characterised in that**
the conductors without bipolar plates are designed as current paths (81) or partial current paths (169) and integrated in the cell stack (1) and are connected on the one hand with a power supplier such as wind turbines and on the other hand with the current collectors in the cell stack (1), whereby the media delivery and discharge lines are assigned to a cooling and media module (3) and either the nitrogen electrode or the oxygen electrode of the membrane electrode assembly (4) of the adjacent cell (2') is located on both sides of the cooling and media module (3) and that the cells (2) in a cell level (27) consist of two or more subcells (173, 173') that are arranged in one or more stack lines (87, 87'), having in each case a partial electrode unit/partial MEA (160, 160', 160") each with a partial membrane (161) and partial reaction surfaces (174) and associated partial gas diffusion layers (176, 177) and an assigned partial cooling and media module (166; 164, 165) and an assigned partial gas segment H₂ (180) and a partial gas segment O₂ (181) and that the cells (2) and subcells (173, 173') are connected in series.

## Revendications

1. Pile à combustible consistant en une pile de cellules (1) avec plusieurs cellules (2, 2') et plaques finales (5, 6) sur chaque extrémité de pile, avec une unité d'électrode à membrane (4) - également désignée par le terme de MEA - avec anode et cathode d'électrode, catalyseurs d'anode et de cathode (12, 14) et membrane électrolytique (15) avec couches de diffusion gazeuse (11, 13) disposée entre les deux, un module de refroidissement et de fluide (3) ainsi que des conduites de fluide attribuées pour l'oxygène, l'hydrogène et le fluide de refroidissement, sachant que le module de refroidissement et de fluide (3) - également désigné par l'acronyme KMM - sert uniquement à la mise à disposition de canaux de refroidissement et de gaz et à la formation de pile en renonçant aux plaques bipolaires et sachant que les recouvrements des électrodes (E1) sont réalisés pour servir à la dérivation, mais pas à la conduite du courant,
**caractérisée par le fait**
**que** les cellules (2) dans un niveau de cellules (27) consistent en deux ou plusieurs cellules partielles (173, 173') présentant chacune une unité d'électrode partielle ou une MEA partielle (160, 160', 160") ayant chacune une membrane partielle (161), des surfaces de réaction partielle (174) et des couches de diffusion gazeuse partielles attribuées (176, 177), un module de fluide et de refroidissement partiel attribué (166 ; 164, 165), un segment de gaz partiel attribué H₂ (180) et un segment de gaz partiel O₂ (181) et que les cellules (2) et cellules partielles (173, 173') sont commutées en série et sont prévues en tant que conducteurs de courant formés en tant que trajet de courant (81) ou trajet de courant partiel (169) sans plaques bipolaires et sont intégrées dans la pile de cellules (1),
les cellules partielles (173, 173') étant disposées dans une ou plusieurs lignes de piles (87, 87').

2. Pile à combustible selon la revendication 1,
**caractérisée par le fait**
**que** les cellules partielles (173, 173') constituant une cellule (2) entre elles et avec la prochaine cellule (2') sont commutées en série ou en parallèle par l'intermédiaire des trajets de courant partiels (169) disposés dans la pile de cellules (1) et le trajet de courant (81) courant le bord de la pile (9), sachant que les cellules (2, 2') et cellules partielles (173, 173') avoisinantes sont séparées électriquement dans le niveau de cellules (27) et dans le niveau KMM (28) par des séparations de potentiel (178, 178', 179), où aucun courant ne doit couler entre les cellules (2, 2') ou les cellules partielles (173, 173'), sachant que les séparations de potentiel (178, 178', 179) sont équipées de minces films en plastique non conducteurs électriquement ou en surfaces non conductrices électriquement dont sont équipées les films insérés là où aucun courant ne doit passer, et sachant que les cellules partielles (173, 173') sont commutées de préférence en série dans une ligne de pile (87) et où les lignes de piles (87, 87') d'une cellule (2) sont commutées entre elles en série ou également parallèlement.

3. Pile à combustible selon une des revendications précédentes,
**caractérisée par le fait**
**que** les zones KMM servant de trajet de courant (81) et également de trajets de courant partiels (169), sont de préférence intégrées dans des éléments KMM (183, 184, 185, 205, 206), les éléments KMM (183, 184, 185, 205, 206) eux-mêmes, notamment les recouvrements des électrodes (E1), les niveaux (E2) liés de façon conductrice avec des recouvrements des électrodes (E1) et/ou (E3) et les raccordements électriques (83, 84) sur la pile (1) sont formés en présentant une bonne conductivité et sont en outre pourvus de préférence avec un revêtement de nanomatériaux ou de surfaces appliquées par des techniques galvaniques, conductrices de courant, résistantes au plan métallique et électrochimique et sont gardés libres de toute colle, ou consistent dans l'ensemble en matériau très bon conducteur résistant au plan métallique et électrochimique ou dans un matériau doté de nanomatériau ou mélangé.

4. Pile à combustible selon la revendication 1,
**caractérisée par le fait**
**que** l'unité d'électrode à membrane (4) présente de préférence une surface de réaction (17) de 400 cm² et est commutée ensemble en un nombre pair de cellules (2, 2'), tandis que chaque cellule (2) est de préférence formée en présentant un nombre impair de cellules partielles (173, 173') avec des surfaces de réaction partielle (174, 174') de même taille en conséquence, une cellule (2) ne présentant pas seulement une, mais plusieurs lignes de piles (87, 87'), avec une surface de réaction (17) de 1 m² en tant que somme de nombreuses surfaces de réaction partielle (174, 174'), qui sont attribuées à des cellules partielles (173, 173') correspondantes,
chaque unité d'électrode à membrane (4, 160) et à cette occasion surtout la bordure MEA (19) et/ou l'élément d'appui et d'étanchéité (16, 175) entourant les cellules (2, 2', 173, 173') présentant une hauteur définie, c'est-à-dire une compression de la MEA (20) et étant réalisée avec des joints (24, 25) fixant une fois la MEA (4, 160) sur le bord de la MEA (19) dans le niveau de cellules (18) et étant constituée de façon à fixer le niveau de cellules (18) dans la pile (1).

5. Pile à combustible selon la revendication 1,
**caractérisée par le fait**
**que** les modules de refroidissement et de fluide (3, 163, 166) présentant le trajet de courant (81, 169), qui sont disposés des deux côtés de l'unité d'électrode à membrane (4, 160) - également désignée par le terme de plan (E0) - sont disposés avec les segments de gaz conducteurs (30, 31, 180, 181) tout comme les segments de refroidissement (32, 182) consistent en films individuels, de préférence en films en aluminium, métal et/ou plastique (34, 35, 36, 37) et sont liés, soudés ou collés joints les uns aux autres, certains plans fonctionnels (E1, E2, E3, E4) leur étant attribués en fonction de la structure d'un module de refroidissement (3, 163, 166), sachant que les plans E1 d'un segment H2 (30, 180) et/ou d'un segment 02 (31,181) sont équipés de préférence de couches de diffusion gazeuse intégrées dans des zones GDL (278, 279) sur leurs côtés tournés vers la membrane (15, 161, 227), qui consistent en matériau micro- et/ou macroporeux, avec une très bonne conductivité électrique et une très bonne résistance électrochimique et des propriétés qui assurent le transport de gaz dans les zones GDL (278, 279) et hors des zones GDL (278, 279).

6. Pile à combustible selon la revendication 5,
**caractérisée par le fait**
**qu'**un module de refroidissement et de fluide (3, 163, 166) est constitué de préférence d'un film central (186) en aluminium - de préférence à chaque fois avec une séparation de potentiel (178, 178') devant et derrière - constitué sous la forme d'une structure porteuse de part en part est prévu au plan E4, qui présente la surface d'une section de pile (8), des éléments KMM (183, 184, 185, 205, 206) étant fixés des deux côtés du film central (186) avec des séparations de potentiel (178, 178'), de préférence par collage, sachant que des espaces intermédiaires ont été prévus entre les éléments KMM (183, 184, 185, 205, 206), qui servent à la séparation électrique des éléments KMM (183, 184, 185, 205, 206) les uns entre les autres et simultanément en tant que canal d'air (243), pour insuffler dans la pile (1) de l'air du boîtier (242"'), qui sert de fluide de refroidissement KM (66, 133) et/ou en tant que gaz cathodique (258) ou d'O2.

7. Pile à combustible selon une des revendications précédentes,
**caractérisée par le fait**
**que** la MEA (4), limitée d'un côté par le segment de gaz conducteur H₂ (30, 180) et de l'autre côté par le segment de gaz conducteur O₂ (31, 181) et la MEA partielle (160) sont maintenues par des éléments d'appui et d'étanchéité non conducteurs (16, 158, 175), et que le module de refroidissement et de fluide (3, 163, 166) est équipé d'un segment de refroidissement (32, 182) consécutif servant de trajet de courant (81, 169) contournant les zones non conductrices dans le module de refroidissement et de fluide (3, 163, 166) et assurant le raccordement O₂ ou H₂ au segment de gaz (30, 31, 180, 181).

8. Pile à combustible selon la revendication 7,
**caractérisée par le fait**
**qu'**une structure MEA soutenue (162) avec MEA intégrée (4, 160) et avec une structure MEA soutenue (156), présente une fenêtre de MEA (89) avec MEA insérée (4, 160), sachant des groupes de MEA partiels (159, 159') sont équipés de corps de support et d'étanchéité (158, 158') et de MEA (4, 160) intégrées dans les corps de support et d'étanchéité (158, 158'), tandis que le groupe de MEA partiel (159) est intégré avec un corps de support et d'étanchéité (158) entre les barrettes de MEA (157) et que le groupe de MEA partiel (159') est inséré avec le corps de support et d'étanchéité (158') dans un cadre de MEA (157') avec fenêtre de MEA (89'), sachant les corps de support et d'étanchéité (158, 158') présentent des rainures d'étanchéité périphériques (263) destinées à réceptionner le volume de compression de la bordure MEA (19), et que les structures MEA soutenues (162, 156) sont conçues en E0 ou barrettes de MEA et cadre de MEA (157, 157') pour une ou plusieurs cellules partielles (173, 173') dans une ligne de pile (87), tandis que les structures MEA soutenues (162, 156) sont conçues en E0 ou barrettes et cadre de MEA (157, 157') en E0 pour de nombreuses cellules partielles (173, 173') dans une ou plusieurs lignes de piles (87, 87').

9. Pile à combustible selon la revendication 5,
**caractérisée par le fait**
**que** les modules de refroidissement (3, 163, 166) sont équipés de préférence de leurs films en aluminium (34, 35, 36, 37) avec des microperforations (41, 44, 47, 50) et des microcanaux (40, 43, 46, 49) pour H₂ et O₂ pour une conduite de gaz séparée et régulière des gaz pénétrant dans l'installation de diffusion du gaz (11, 13, 176, 177) et des gaz sortant de l'installation de diffusion du gaz (11, 13, 176, 177), sachant que les microperforations (41, 44, 47, 50) et les microcanaux (40, 43, 46, 49) sont, le flux et la répartition du gaz étant réguliers et la réduction de pertes de pression étant séparée par l'intermédiaire de canaux transversaux (102, 112, 123) et de canaux longitudinaux (26) avec des canaux de liaison (136, 137, 138, 139, 140) ou des ouvertures de gaz (100, 105, 110, 115, 118) ou des prolongations de microcanaux (107), reliés au bord de la pile (9) pour O₂, sachant que les canaux transversaux sont de préférence disposés pour la pénétration et l'expulsion pour H2 (102, 112, 139, 249) et pour 02 (117, 246) dans différents plans -E0 ou E4-.

10. Pile à combustible selon la revendication 5,
**caractérisée par le fait**
**que** les modules de refroidissement (3, 163, 166) sont équipés de préférence de leurs films en aluminium (34, 35, 36, 37) pour le guidage du liquide de refroidissement avec des microcanaux horizontaux et verticaux (65, 69) et des canaux transversaux (122, 132) sont pourvus de zones de canaux transversaux horizontaux ou verticaux (58, 62) et sont reliés par l'intermédiaire de canaux de liaison (125, 135) ou d'ouvertures de fluides, sachant que le guidage du liquide de refroidissement se fait d'une cellule (2) à la prochaine cellule (2') à contre-courant en changeant le sens de l'écoulement dans les microcanaux (65, 69) à 180°C, sachant également que, parallèlement au microcanal (152) avec buse Venturi (V1), de préférence avec de l'air en tant que liquide de refroidissement KM (133), est disposé un deuxième microcanal (153) sans buse Venturi, qui conduit un deuxième liquide de refroidissement, à savoir de l'air ou un liquide.

11. Pile à combustible selon une des revendications précédentes,
**caractérisée par le fait**
**que** la pile de cellules (1) avec ses plaques finales (5, 6) et son système de serrage (91) est conçue comme une unité compacte rassemblant d'une part les cellules (2, 2'), les cellules partielles (173, 173'), les modules de refroidissement (3) et les modules de refroidissement partiel et de fluides (166; 164, 165), et que la pile de cellules (1) est entourée de préférence d'un boîtier de pile (70) consistant en mince tôle d'aluminium, dans lequel elle est de préférence disposée ou accrochée de façon élastique, et que les différents gaz (H₂, O₂ et liquide de refroidissement) sont rassemblés de façon judicieuse dans les plaques finales (5, 6) ou des volumes séparés liés (255), une interface électrique (91) destinée à exécuter le courant de la pile (200) des raccordements électriques (83, 84) et des raccordements pour la technique de mesure, de commande et de régulation étant disposée sur le boîtier de la pile (70).

12. Pile à combustible selon une des revendications précédentes,
**caractérisée par le fait**
**qu'**une ou plusieurs buses de Venturi (V1) sont prévues sur les microcanaux (152), une ou plusieurs buses de Venturi (V2) sur le boîtier de la pile ou également son environnement pour le soutien actif de l'écoulement hors des canaux transversaux et longitudinaux d'O₂ (247, 248), sachant que des buses de Venturi (V3) sont en outre disposées dans les microcanaux (152) ou que les microcanaux sont formés en conséquence pour soutenir l'écoulement de condensé et d'O₂ hors des microcanaux (152) et l'écoulement d'O₂ hors du microcanal (151) également directement via l'ouverture de gaz O₂ (113) dans la zone d'aspiration (234) de la buse Venturi V1 (237) disposée dans le microcanal (152) destiné au liquide de refroidissement KM (133), sachant qu'aucuns canaux transversaux ou longitudinaux particuliers ne sont nécessaires pour l'écoulement d'O₂, les microcanaux (152) et/ou les canaux transversaux et longitudinaux d'O₂ (247, 248) et/ou les buses de Venturi (237, 238, 265) étant formés de façon à soutenir activement l'écoulement du gaz O₂ ou d'un mélange de gaz ou de l'eau du produit hors des espaces de gaz O₂ ou des microcanaux disposés en amont (151) et/ou des canaux transversaux et longitudinaux d'O₂ (247, 248).

13. Pile de cellules sous la forme d'un électrolyseur destiné à générer du gaz tel que de l'hydrogène et de l'oxygène à partir d'eau avec une pile à combustible, consistant en une pile de cellules (1) avec plusieurs cellules (2, 2') et plaques finales (5, 6) sur chaque extrémité de pile, avec une unité d'électrode à membrane (4) - également désignée par le terme de MEA - avec anode et cathode d'électrode, catalyseurs d'anode et de cathode (12, 14) et membrane électrolytique (15) disposée entre les deux avec des couches de diffusion gazeuse (11, 13), un module de refroidissement et de fluide (3) ainsi que des conduites de fluide attribuées pour l'oxygène, l'hydrogène et le liquide de refroidissement, sachant que le module de refroidissement et de fluide (3) - également désigné par le terme de KMM - est exécuté en renonçant aux plaques bipolaires seulement pour la mise à disposition de canaux de refroidissement et de gaz et à la formation de pile et sachant que le recouvrement des électrodes (E1) est attribué au conducteur, à la dérivation, mais pas au passage du courant,
**caractérisée par le fait**
**que** les conducteurs sans plaques bipolaires sont réalisés en tant que trajets de courant (81) ou trajets de courant partiels (169) et intégrés dans la pile de cellules (1), et sont reliés d'une part avec un dispositif d'alimentation électrique tel que des éoliennes et d'autre part avec les pantographes dans la pile de cellules (1), sachant que les conduites d'alimentation et d'évacuation de fluides sont attribuées à un module de refroidissement et de fluide (3) et que sur les côtés du module de refroidissement et de fluide (3) est disposé l'électrode d'hydrogène ou l'électrode d'oxygène de l'unité d'électrode à membrane (4) de la cellule voisine (2') et que les cellules (2) dans un niveau de cellules (27) consistent en deux ou plusieurs cellules partielles (173, 173') qui sont disposées dans une ou plusieurs lignes de piles (87, 87'), qui présentent chacune une unité d'électrode/MEA partielle (160, 160', 160") ayant chacune une membrane partielle (161) et des surfaces de réaction partielle (174) et des couches de diffusion gazeuse partielles attribuées (176, 177), un module de refroidissement partiel et de fluide attribué (166; 164, 165), un segment de gaz partiel attribué H₂ (180) et un segment de gaz partiel O₂ (181), les cellules (2) et cellules partielles (173, 173') étant commutées en série.
